(19) Europäisches Patentamt / European Patent Office / Office européen des brevets

(11) **EP 4 510 720 A1**

(12) **EUROPEAN PATENT APPLICATION**
published in accordance with Art. 153(4) EPC

(43) Date of publication:
**19.02.2025 Bulletin 2025/08**

(21) Application number: **23795167.8**

(22) Date of filing: **19.04.2023**

(51) International Patent Classification (IPC):
*H04W 56/00* (2009.01)

(52) Cooperative Patent Classification (CPC):
**H04L 5/00; H04W 52/02; H04W 56/00;**
**H04W 72/0446; H04W 72/0453**

(86) International application number:
**PCT/CN2023/089356**

(87) International publication number:
**WO 2023/207734 (02.11.2023 Gazette 2023/44)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.04.2022 CN 202210475967**
**17.02.2023 CN 202310182663**

(71) Applicant: **Huawei Technologies Co., Ltd.**
**Shenzhen, Guangdong 518129 (CN)**

(72) Inventors:
• **LI, Junyao**
**Shenzhen, Guangdong 518129 (CN)**
• **YANG, Fan**
**Shenzhen, Guangdong 518129 (CN)**
• **HUANG, Haining**
**Shenzhen, Guangdong 518129 (CN)**
• **ZHANG, Tianhong**
**Shenzhen, Guangdong 518129 (CN)**
• **LI, Chao**
**Shenzhen, Guangdong 518129 (CN)**

(74) Representative: **Körber, Martin Hans**
**Mitscherlich PartmbB**
**Patent- und Rechtsanwälte**
**Karlstraße 7**
**80333 München (DE)**

(54) **COMMUNICATION METHOD, APPARATUS AND SYSTEM**

(57) Embodiments of this application provide a communication method, apparatus, and system. In the method, a structure of a time-frequency resource is redesigned, or repeated transmission of a synchronization signal block is supported, or channel access is performed on a plurality of resources, and a transmission manner of the synchronization signal block is provided, so that a channel access success rate is improved, coverage is enhanced, and communication reliability is further improved.

FIG. 9

EP 4 510 720 A1

## Description

This application claims priorities to Chinese Patent Application No. 202210475967.X, filed with the China National Intellectual Property Administration on April 29, 2022 and entitled "COMMUNICATION METHOD, APPARATUS, AND SYSTEM", and to Chinese Patent Application No. 202310182663.9, filed with the China National Intellectual Property Administration on February 17, 2023 and entitled "COMMUNICATION METHOD, APPARATUS, AND SYSTEM", both of which are incorporated herein by reference in their entireties.

## TECHNICAL FIELD

This application relates to the communication field, and in particular, to a communication method, apparatus, and system.

## BACKGROUND

In a wireless communication system, spectrum resources may be classified into a licensed band and an unlicensed band. When using the unlicensed band, a transmitting node needs to use a spectrum resource in a contention manner. Currently, sidelink (sidelink, SL) communication is widely applied in a vehicle-to-everything (Vehicle-To-Everything, V2X for short) communication scenario. Enabling sidelink (sidelink, SL) communication on an unlicensed band is an important evolution direction, and corresponding protocol technologies may be collectively referred to as sidelink unlicensed (sidelink unlicensed, SL-U). Synchronization, as an important step in communication, directly affects communication quality. Currently, a failure risk of SL-U synchronization is relatively high, and consequently communication quality deteriorates.

Therefore, how to improve an SL-U synchronization success rate and improve communication quality is an urgent problem to be resolved.

## SUMMARY

Embodiments of this application provide a communication method, apparatus, and system, to improve an SL-U synchronization success rate and improve communication quality.

The method in embodiments of this application may be performed by a terminal apparatus, or may be performed by a chip or a circuit used in a terminal apparatus. For ease of description, the following uses an example in which the terminal apparatus performs the method for description.

According to a first aspect, a communication method is provided. The communication method may include: A first terminal apparatus determines P resources from N resources included in a first resource window, where the first resource window is one of M resource windows, each of the M resource windows includes N resources, frequency domain resources corresponding to the M resource windows are unlicensed resources, M and N are positive integers, and P is a positive integer less than or equal to N; and the first terminal apparatus sends a synchronization signal block through each of the P resources, where the synchronization signal block is used for sidelink synchronization.

Alternatively, a first terminal apparatus determines a target resource, where the target resource includes N candidate resources, the N candidate resources belong to one of M resource windows, N is a positive integer greater than or equal to 1, M is a positive integer greater than or equal to 1, and frequency domain resources corresponding to the N candidate resources are unlicensed resources; and the first terminal apparatus sends a synchronization signal block SSB through the target resource.

Optionally, the first terminal apparatus may send the SSB to a second terminal apparatus.

In this method, the resource window includes a plurality of resources, and the plurality of resources support repeated sending of the SSB, so that a success rate of sending the SSB is improved. In addition, repeatedly sending the SSB can enhance coverage, and further improve communication reliability.

With reference to the first aspect, in some implementations of the first aspect, the first terminal apparatus listens, through listen before talk LBT, to a channel corresponding to the first resource window, and that a first terminal apparatus determines P resources from N resources included in a first resource window includes: The first terminal apparatus determines the P resources from the N resources based on a listening result, where the listening result includes busy or idle.

In this manner, channel access attempts on a plurality of resources included in the first resource window are supported, so that a channel access success rate can be further improved.

With reference to the first aspect, in some implementations of the first aspect, when the listening result is that the channel is idle, the P resources include a first resource, where the first resource is a resource with an earliest time domain position in the P resources, and the first resource is a 1st resource on which a channel is accessed (listen before talk succeeds) in the N resources.

It should be understood that the time domain position may be a time domain start position, may be a time domain end position, or may be a predetermined time domain position, for example, a middle position of an occupied time domain resource. This is not limited in embodiments of this application.

In this manner, a 1st resource on which channel access succeeds is determined as a 1st resource for sending the SSB, so that the SSB can be sent in a timely manner, thereby reducing a delay in sending the SSB.

With reference to the first aspect, in some implementations of the first aspect, when the listening result is that the channel is busy, the first terminal apparatus determines a second resource window, where a time domain position of the second resource window is after a time domain position of the first resource window, and a resource corresponding to the second resource window is an unlicensed resource; and the first terminal apparatus sends the SSB through a resource in the second resource window. For example, the SSB is sent through each of P resources in the second resource window.

The time domain position of the second resource window is after the time domain position of the first resource window. Specifically, for example, a time domain start position of the second resource window is after a time domain start position of the first resource window, or a time domain start position of the second resource window is after a time domain end position of the first resource window, or a time domain end position of the second resource window is after a time domain start position of the first resource window, or a time domain end position of the second resource window is after a time domain end position of the first resource window. This is not limited in embodiments of this application.

In this manner, when channel access on all resources in the first resource window fails, the first terminal apparatus may send the SSB by using the second resource window without a need to wait for a next periodic resource window. This effectively reduces a delay in sending the SSB by the first terminal apparatus, and improves communication efficiency.

With reference to the first aspect, in some implementations of the first aspect, the first terminal apparatus obtains a first parameter, where the first parameter includes at least one of the following: time domain position information of the first resource window, a value of M, a synchronization period, a time interval between any adjacent resource windows in the M resource windows, an offset of a resource window relative to direct frame number DFN #0, an offset of a resource window relative to system frame number SFN #0, or an offset of a resource window relative to a time domain start position of a synchronization period to which the resource window belongs. That the first terminal apparatus determines a second resource window includes: The first terminal apparatus determines the second resource window based on the time domain information.

In this manner, the first terminal apparatus may determine a position of the second resource window based on the first parameter. The time domain position information may be predefined, may be preconfigured, or may be indicated by a network apparatus. This is not limited in embodiments of this application.

With reference to the first aspect, in some implementations of the first aspect, the first terminal apparatus sends indication information, where the indication information indicates that the second resource window is an additional resource window.

In this manner, the first terminal apparatus indicates, to the second terminal apparatus, that a resource window for sending the SSB currently is an additional resource window, so that an error can be avoided when the second terminal apparatus detects a time-frequency position of the SSB, and it can be avoided that the second terminal apparatus mistakenly considers that the additional window is a periodic window and perform synchronization search at an incorrect position, and consequently a synchronization failure and a waste of power consumption are caused. This reduces power consumption of the second terminal apparatus, improves a parsing success rate of the second terminal apparatus when the SSB is sent in the additional resource window, and improves communication reliability.

With reference to the first aspect, in some implementations of the first aspect, the additional resource window includes at least one resource window, and the second resource window belongs to the at least one resource window.

With reference to the first aspect, in some implementations of the first aspect, the first terminal apparatus obtains a status of the additional resource window, where the status of the additional resource window includes open or closed.

It should be understood that the status of the additional resource window may be indicated by a network apparatus, or may be predefined or preconfigured. That the status of the additional resource window indicates open or closed may also be understood as whether a function of the additional resource window is enabled.

With reference to the first aspect, in some implementations of the first aspect, the P resources are consecutive in time domain.

In this manner, the P resources may be consecutive in time domain. In other words, the first terminal apparatus repeatedly sends the SSB through consecutive resources.

With reference to the first aspect, in some implementations of the first aspect, the P resources further include a second resource and a third resource, a time domain position of the second resource is before a time domain position of the third resource, there is a time interval between a time domain end position of the second resource and a time domain start position of the third resource, and the second resource and the third resource are two resources that are adjacent in time domain in the P resources.

In this manner, there may be an interval between the P resources in time domain. In other words, the first terminal apparatus may repeatedly send the SSB through inconsecutive resources.

With reference to the first aspect, in some implementations of the first aspect, there is a quasi co-location relationship between the P resources.

In this manner, the SSB is repeatedly sent by using resources having a quasi co-location relationship, so that a requirement for repeatedly sending the SSB by using different beams can be satisfied, and communication quality can be improved.

With reference to the first aspect, in some implementations of the first aspect, a quantity of resources that have a quasi co-location relationship and that are included in the first resource window is greater than or equal to P and less than or equal to N.

In other words, a resource used to send the SSB is a part of a plurality of resources that are in the first resource window and that have a quasi co-location relationship.

With reference to the first aspect, in some implementations of the first aspect, a quantity of resources that have a quasi co-location relationship and that are included in the second resource window is greater than or equal to P and less than or equal to N.

In other words, a resource used to send the SSB is a part of a plurality of resources that are in the second resource window and that have a quasi co-location relationship.

With reference to the first aspect, in some implementations of the first aspect, the synchronization signal block is used by the second terminal apparatus to determine timing information and/or synchronization information.

According to a second aspect, a communication method is provided. The method may include: A second terminal apparatus receives a synchronization signal block from a first terminal apparatus through each of P resources.

The P resources are determined from N resources included in a first resource window, the first resource window is one of M resource windows, each of the M resource windows includes N resources, frequency domain resources corresponding to the M resource windows are unlicensed resources, M and N are positive integers, P is a positive integer less than or equal to N, and a listening result for the first resource window is idle.

Alternatively, the P resources are determined from N resources included in a second resource window, a time domain start position of the second resource window is after a time domain end position of the first resource window, a frequency domain resource corresponding to the second resource window is an unlicensed resource, and the second resource window is determined when a listening result for the first resource window is busy. The second terminal apparatus determines timing information and/or synchronization information based on the synchronization signal block.

With reference to the second aspect, in some implementations of the second aspect, the P resources are consecutive in time domain.

With reference to the second aspect, in some implementations of the second aspect, the P resources further include a second resource and a third resource, a time domain position of the second resource is before a time domain position of the third resource, there is a time interval between a time domain end position of the second resource and a time domain start position of the third resource, and the second resource and the third resource are two resources that are adjacent in time domain in the P resources.

With reference to the second aspect, in some implementations of the second aspect, there is a quasi co-location relationship between the P resources.

With reference to the second aspect, in some implementations of the second aspect, a quantity of resources that have a quasi co-location relationship and that are included in the first resource window is greater than or equal to P and less than or equal to N, and/or a quantity of resources that have a quasi co-location relationship and that are included in the second resource window is greater than or equal to P and less than or equal to N.

With reference to the second aspect, in some implementations of the second aspect, the P resources are determined from the N resources included in the second resource window, and the method further includes: The second terminal apparatus receives indication information, where the indication information indicates that the second resource window is an additional resource window.

It should be understood that the second aspect is an implementation on an opposite side (that is, the second terminal apparatus) of the first aspect. Explanations, supplements, and beneficial effects of the first aspect are also applicable to the second aspect. Details are not described herein again.

According to a third aspect, a communication method is provided. The method may include: A first terminal apparatus determines a fourth resource, where the fourth resource is used to send a synchronization signal block, the synchronization signal block includes a physical sidelink broadcast channel PSBCH, a primary synchronization signal PSS, and a secondary synchronization signal SSS, and the fourth resource includes a fifth resource and a sixth resource; the first terminal apparatus sends the PSBCH on a fifth resource, where the fifth resource is discontinuous in frequency domain; and the first terminal apparatus sends the PSS and the SSS on a sixth resource, where the sixth resource is continuous in frequency domain.

In other words, the first terminal apparatus sends the PSBCH on the fifth resource, where the fifth resource includes at least two sub-resources, and there is an interval between the at least two sub-resources in frequency domain; and the terminal apparatus sends the PSS and the SSS on the sixth resource, where the sixth resource is continuous in frequency domain.

In this method, a frequency domain structure for carrying an S-PSS and an S-SSS remains unchanged, so that an existing implementation is reused, for example, a filter or the like does not need to be redesigned, thereby reducing implementation complexity. In addition, keeping the frequency domain structure unchanged helps maintain synchronization precision. In addition, an unlicensed spectrum use regulation requirement is satisfied in an interval manner, so that an information sending success rate can be improved.

With reference to the third aspect, in some implementations of the third aspect, the first terminal apparatus determines the fifth resource and/or the sixth resource based on at least one of a quantity of frequency domain RBs of a channel on which the fourth resource is located, a subcarrier spacing, and a quantity of frequency domain RBs of the synchronization signal block.

With reference to the third aspect, in some implementations of the third aspect, the fourth resource belongs to a fifteenth resource, and the fifteenth resource is determined based on an absolute radio frequency channel number ARFCN, a resource set RB set index, or a channel index.

With reference to the third aspect, in some implementations of the third aspect, the sixth resource is determined based on an ARFCN, and the ARFCN indicates a center frequency of the fourth resource, or the ARFCN indicates a center frequency of the sixth resource.

With reference to the third aspect, in some implementations of the third aspect, the fifth resource is determined based on a start physical resource block PRB and a first granularity; or

the fifth resource is determined based on a central PRB and the first granularity; or
the fifth resource is determined based on a center frequency and the first granularity, and the center frequency is indicated by using an ARFCN; or
the fifth resource is an interlace resource to which a frequency indicated by an ARFCN belongs, where
the first granularity is a spacing between any two adjacent PRBs in frequency domain in the fifth resource.

According to a fourth aspect, a communication method is provided. The method may include: A second terminal apparatus receives a synchronization signal block through a fourth resource, where the synchronization signal block includes a physical sidelink broadcast channel PSBCH, a primary synchronization signal PSS, and a secondary synchronization signal SSS, and the fourth resource includes a fifth resource and a sixth resource; the second terminal apparatus receives the PSBCH on the fifth resource, where the fifth resource is discontinuous in frequency domain; and the second terminal apparatus receives the PSS and the SSS on the sixth resource, and the sixth resource is continuous in frequency domain.

With reference to the fourth aspect, in some implementations of the fourth aspect, the fifth resource and/or the sixth resource are/is determined based on at least one of a quantity of frequency domain RBs of a channel on which the fourth resource is located, a subcarrier spacing, and a quantity of frequency domain RBs of the synchronization signal block.

With reference to the fourth aspect, in some implementations of the fourth aspect, the fourth resource belongs to a fifteenth resource, and the fifteenth resource is determined based on an absolute radio frequency channel number ARFCN, a resource set RB set index, or a channel index.

With reference to the fourth aspect, in some implementations of the fourth aspect, the sixth resource is determined based on an ARFCN, and the ARFCN indicates a center frequency of the fourth resource, or the ARFCN indicates a center frequency of the sixth resource.

With reference to the fourth aspect, in some implementations of the fourth aspect, the fifth resource is determined based on a start physical resource block PRB and a first granularity; or

the fifth resource is determined based on a central PRB and the first granularity; or
the fifth resource is determined based on a center frequency and the first granularity, and the center frequency is indicated by using an ARFCN; or
the fifth resource is an interlace resource to which a frequency indicated by an ARFCN belongs, where
the first granularity is a spacing between any two adjacent PRBs in frequency domain in the fifth resource.

It should be understood that the fourth aspect is an implementation on an opposite side (that is, the second terminal apparatus) of the third aspect. Explanations, supplements, and beneficial effects of the third aspect are also applicable to the fourth aspect. Details are not described herein again.

According to a fifth aspect, a communication method is provided. The method may include: A first terminal apparatus sends a synchronization signal block on a seventh resource, where the synchronization signal block is used for sidelink synchronization; and the first terminal apparatus sends at least one of the following on an eighth resource: a physical sidelink shared channel PSSCH, a physical sidelink control channel PSCCH, or a channel state information reference signal CSI-RS, where time division multiplexing TDM and/or frequency division multiplexing FDM are/is used for the seventh resource and the eighth resource, the seventh resource and the eighth resource are unlicensed resources, and time domain resources of the seventh resource and the eighth resource are within a same channel occupancy time COT range.

In this manner, the SSB and other information are packaged for transmission, so that a quantity of channel access times can be reduced, and an access failure risk can be reduced. In addition, an S-SSB structure does not need to be modified, and complexity of sending the SSB by the first terminal apparatus is reduced.

With reference to the fifth aspect, in some implementations of the fifth aspect, a position of a resource corresponding to the seventh resource in frequency domain is determined based on a raster and/or an offset.

It should be understood that, in this manner, the raster (raster) and/or the offset (offset) may be predefined, or may be preconfigured, or may be indicated by a network apparatus. This is not limited in embodiments of this application.

With reference to the fifth aspect, in some implementations of the fifth aspect, a resource corresponding to the seventh resource in frequency domain is continuous.

In this manner, an S-SSB is repeatedly sent in frequency domain, so that coverage of the S-SSB can be enhanced when an unlicensed spectrum regulation requirement is satisfied, thereby improving communication quality.

According to a sixth aspect, a communication method is provided. The method may include: A second terminal apparatus receives a synchronization signal block on a seventh resource, where the synchronization signal block is used for sidelink synchronization; and the second terminal apparatus receives at least one of the following on an eighth resource: a physical sidelink shared channel PSSCH, a physical sidelink control channel PSCCH, or a channel state information reference signal CSI-RS, where time division multiplexing TDM and/or frequency division multiplexing FDM are/is used for the seventh resource and the eighth resource, the seventh resource and the eighth resource are unlicensed resources, and time domain resources of the seventh resource and the eighth resource are within a same channel occupancy time COT range.

With reference to the sixth aspect, in some implementations of the sixth aspect, a position of a resource corresponding to the seventh resource in frequency domain is determined based on a raster and/or an offset.

With reference to the sixth aspect, in some implementations of the sixth aspect, a resource corresponding to the seventh resource in frequency domain is continuous.

It should be understood that the sixth aspect is an implementation on an opposite side (that is, the second terminal apparatus) of the fifth aspect. Explanations, supplements, and beneficial effects of the fifth aspect are also applicable to the sixth aspect. Details are not described herein again.

According to a seventh aspect, a communication method is provided. The method may include: A first terminal apparatus determines a band, where a bandwidth of the band includes Q channel access bandwidths, the Q channel access bandwidths do not overlap, and Q is a positive integer greater than or equal to 2; the first terminal apparatus performs channel access on S channel access bandwidths in the Q channel access bandwidths, where S is a positive integer less than or equal to Q; and the first terminal apparatus sends a synchronization signal block on a first channel access bandwidth, where the first channel access bandwidth belongs to a channel bandwidth on which access succeeds in the S channel access bandwidths.

In this method, the SSB is sent by using a plurality of channel access bandwidths in an ultra-wideband scenario, so that a success rate of sending the SSB can be improved, and communication performance can be improved.

With reference to the seventh aspect, in some implementations of the seventh aspect, the first terminal apparatus performs channel access on the S channel access bandwidths in the Q channel access bandwidths, and indexes of the S channel access bandwidths are S smallest indexes in the Q channel access bandwidths.

In other words, the first terminal apparatus may attempt to access a channel on a plurality of channel access bandwidths, thereby further improving a channel access success rate.

With reference to the seventh aspect, in some implementations of the seventh aspect, the first channel access bandwidth is an access bandwidth with a smallest index in the channel access bandwidth on which access succeeds.

It may be understood that the first channel access bandwidth may include at least one channel access bandwidth, and the at least one channel access bandwidth is a bandwidth on which channel access succeeds.

According to an eighth aspect, a communication method is provided. The method may include: A second terminal apparatus receives a synchronization signal block on a first channel access bandwidth, where the first channel access bandwidth belongs to a channel bandwidth on which access succeeds in S channel access bandwidths, S is a positive integer less than or equal to Q, Q is a positive integer greater than or equal to 2, Q channel access bandwidths belong to a bandwidth of a band, and the Q channel access bandwidths do not overlap.

With reference to the eighth aspect, in some implementations of the eighth aspect, indexes of the S channel access bandwidths are S smallest indexes in the Q channel access bandwidths.

With reference to the eighth aspect, in some implementations of the eighth aspect, the first channel access bandwidth is an access bandwidth with a smallest index in the channel access bandwidth on which access succeeds.

It should be understood that the eighth aspect is an implementation on an opposite side (that is, the second terminal apparatus) of the seventh aspect. Explanations, supplements, and beneficial effects of the seventh aspect are also applicable to the eighth aspect. Details are not described herein again.

According to a ninth aspect, a communication apparatus is provided. The apparatus includes a processing unit and a transceiver unit. The transceiver unit may be configured to send an SSB. The processing unit is configured to determine P resources from N resources included in a first resource window, where the first resource window is one of M resource windows, each of the M resource windows includes N resources, frequency domain resources corresponding to the M resource windows are unlicensed resources, M and N are positive integers, and P is a positive integer less than or equal to N.

With reference to the ninth aspect, in some possible implementations of the ninth aspect, the transceiver unit is further configured to send the SSB through each of P resources in a second resource window.

With reference to the ninth aspect, in some possible implementations of the ninth aspect, the transceiver unit is further configured to send indication information, where the indication information indicates that the second resource window is an additional resource window.

With reference to the ninth aspect, in some possible implementations of the ninth aspect, the transceiver unit is further configured to obtain a status of the additional resource window, where the status of the additional resource window includes open or closed.

According to a tenth aspect, a communication apparatus is provided. The apparatus includes a processing unit and a transceiver unit. The transceiver unit may be configured to receive a synchronization signal block from a first terminal apparatus through each of P resources, where the P resources are determined from N resources included in a first resource window, the first resource window is one of M resource windows, each of the M resource windows includes N resources, frequency domain resources corresponding to the M resource windows are unlicensed resources, M and N are positive integers, P is a positive integer less than or equal to N, and a listening result for the first resource window is idle.

Alternatively, the P resources are determined from N resources included in a second resource window, a time domain start position of the second resource window is after a time domain end position of the first resource window, and a frequency domain resource corresponding to the second resource window is an unlicensed resource. The processing unit may be configured to determine timing information and/or synchronization information based on the synchronization signal block, where the second resource window is determined when a listening result for the first resource window is busy.

With reference to the tenth aspect, in some possible implementations of the tenth aspect, the transceiver unit is further configured to receive indication information from the first terminal apparatus, where the indication information indicates that the second resource window is an additional resource window.

It should be understood that the ninth aspect and the tenth aspect are implementations on an apparatus side that are corresponding to the first aspect and the second aspect respectively. Related explanations, supplements, possible implementations, and descriptions of beneficial effects of the first aspect and the second aspect are also applicable to the ninth aspect and the tenth aspect respectively. Details are not described herein again.

According to an eleventh aspect, a communication apparatus is provided. The apparatus includes a processing unit and a transceiver unit. The transceiver unit may be configured to: send a PSBCH on a fifth resource, where the fifth resource is discontinuous in frequency domain; and send a PSS and an SSS on a sixth resource, where the sixth resource is continuous in frequency domain.

According to a twelfth aspect, a communication apparatus is provided. The apparatus includes a processing unit and a transceiver unit. The transceiver unit may be configured to: receive a PSBCH on a fifth resource, where the fifth resource is discontinuous in frequency domain; and receive a PSS and an SSS on a sixth resource, where the sixth resource is continuous in frequency domain.

It should be understood that the eleventh aspect and the twelfth aspect are implementations on an apparatus side that are corresponding to the third aspect and the fourth aspect respectively. Related explanations, supplements, possible implementations, and descriptions of beneficial effects of the third aspect and the fourth aspect are also applicable to the eleventh aspect and the twelfth aspect respectively. Details are not described herein again.

According to a thirteenth aspect, a communication apparatus is provided. The apparatus includes a processing unit and a transceiver unit. The transceiver unit may be configured to: send a synchronization signal block on a seventh resource, where the synchronization signal block is used for sidelink synchronization; and send at least one of the following on an eighth resource: a physical sidelink shared channel PSSCH, a physical sidelink control channel PSCCH, or a channel state information reference signal CSI-RS, where time division multiplexing TDM and/or frequency division multiplexing FDM are/is used for the seventh resource and the eighth resource, the seventh resource and the eighth resource are unlicensed spectrum resources, and time domain resources of the seventh resource and the eighth resource are within a same channel occupancy time COT range.

According to a fourteenth aspect, a communication apparatus is provided. The apparatus includes a processing unit and a transceiver unit. The transceiver unit may be configured to: receive a synchronization signal block on a seventh resource, where the synchronization signal block is used for sidelink synchronization; and receive at least one of the following on an eighth resource: a physical sidelink shared channel PSSCH, a physical sidelink control channel PSCCH, or a channel state information reference signal CSI-RS, where time division multiplexing TDM and/or frequency division multiplexing FDM are/is used for the seventh resource and the eighth resource, the seventh resource and the eighth resource are unlicensed spectrum resources, and time domain resources of the seventh resource and the eighth resource are within a same channel occupancy time COT range.

It should be understood that the thirteenth aspect and the fourteenth aspect are implementations on an apparatus side that are corresponding to the fifth aspect and the sixth aspect respectively. Related explanations, supplements, possible implementations, and descriptions of beneficial effects of the fifth aspect and the sixth aspect are also applicable to the thirteenth aspect and the fourteenth aspect respectively. Details are not described herein again.

According to a fifteenth aspect, a communication apparatus is provided. The apparatus includes a processing unit and a transceiver unit. The processing unit may be configured to perform channel access on S channel access bandwidths in Q channel access bandwidths, where S is a positive integer less than or equal to Q. The transceiver unit may be configured to send a synchronization signal block on a first channel access bandwidth, where the first channel access bandwidth belongs to a channel bandwidth on which access succeeds in the S channel access bandwidths.

According to a sixteenth aspect, a communication apparatus is provided. The apparatus includes a processing unit and a transceiver unit. The transceiver unit may be configured to receive a synchronization signal block on a first channel access bandwidth, where the first channel access bandwidth belongs to a channel bandwidth on which access succeeds in the S channel access bandwidths.

It should be understood that the fifteenth aspect and the sixteenth aspect are implementations on an apparatus side that are corresponding to the seventh aspect and the eighth aspect respectively. Related explanations, supplements, possible implementations, and descriptions of beneficial effects of the seventh aspect and the eighth aspect are also applicable to the fifteenth aspect and the sixteenth aspect respectively. Details are not described herein again.

According to a seventeenth aspect, a computer-readable medium is provided. The computer-readable medium stores program code to be executed by a communication apparatus, and the program code includes instructions for performing the method according to the first aspect, the third aspect, the fifth aspect, the seventh aspect, the twenty-sixth aspect, the twenty-eighth aspect, the thirtieth aspect, the thirty-second aspect, or the thirty-fourth aspect; any possible implementation of the first aspect, the third aspect, the fifth aspect, the seventh aspect, the twenty-sixth aspect, the twenty-eighth aspect, the thirtieth aspect, the thirty-second aspect, or the thirty-fourth aspect; or all possible implementations of the first aspect, the third aspect, the fifth aspect, the seventh aspect, the twenty-sixth aspect, the twenty-eighth aspect, the thirtieth aspect, the thirty-second aspect, or the thirty-fourth aspect.

According to an eighteenth aspect, a computer-readable medium is provided. The computer-readable medium stores program code to be executed by a communication apparatus, and the program code includes instructions for performing the method according to the second aspect, the fourth aspect, the sixth aspect, the eighth aspect, the twenty-seventh aspect, the twenty-ninth aspect, the thirty-first aspect, the thirty-third aspect, or the thirty-fifth aspect; any possible implementation of the second aspect, the fourth aspect, the sixth aspect, the eighth aspect, the twenty-seventh aspect, the twenty-ninth aspect, the thirty-first aspect, the thirty-third aspect, or the thirty-fifth aspect; or all possible implementations of the second aspect, the fourth aspect, the sixth aspect, the eighth aspect, the twenty-seventh aspect, the twenty-ninth aspect, the thirty-first aspect, the thirty-third aspect, or the thirty-fifth aspect.

According to a nineteenth aspect, a computer program product including instructions is provided. When the computer program product runs on a computer, the computer is enabled to perform the method according to the first aspect, the third aspect, the fifth aspect, the seventh aspect, the twenty-sixth aspect, the twenty-eighth aspect, the thirtieth aspect, the thirty-second aspect, or the thirty-fourth aspect; any possible implementation of the first aspect, the third aspect, the fifth aspect, the seventh aspect, the twenty-sixth aspect, the twenty-eighth aspect, the thirtieth aspect, the thirty-second aspect, or the thirty-fourth aspect; or all possible implementations of the first aspect, the third aspect, the fifth aspect, the seventh aspect, the twenty-sixth aspect, the twenty-eighth aspect, the thirtieth aspect, the thirty-second aspect, or the thirty-fourth aspect.

According to a twentieth aspect, a computer program product including instructions is provided. When the computer program product runs on a computer, the computer is enabled to perform the method according to the second aspect, the fourth aspect, the sixth aspect, the eighth aspect, the twenty-seventh aspect, the twenty-ninth aspect, the thirty-first aspect, the thirty-third aspect, or the thirty-fifth aspect; any possible implementation of the second aspect, the fourth aspect, the sixth aspect, the eighth aspect, the twenty-seventh aspect, the twenty-ninth aspect, the thirty-first aspect, the thirty-third aspect, or the thirty-fifth aspect; or all possible implementations of the second aspect, the fourth aspect, the sixth aspect, the eighth aspect, the twenty-seventh aspect, the twenty-ninth aspect, the thirty-first aspect, the thirty-third aspect, or the thirty-fifth aspect.

According to a twenty-first aspect, a communication system is provided. The communication system includes an apparatus that has a function of implementing the method and various possible designs of the first aspect to the ninth aspect and the twenty-sixth aspect to the thirty-third aspect, or any possible implementation of the first aspect to the ninth aspect, or all possible implementations of the first aspect to the ninth aspect.

According to a twenty-second aspect, a processor is provided, coupled to a memory, and configured to perform the method according to the first aspect, the third aspect, the fifth aspect, the seventh aspect, the twenty-sixth aspect, the twenty-eighth aspect, the thirtieth aspect, the thirty-second aspect, or the thirty-fourth aspect; any possible implementation of the first aspect, the third aspect, the fifth aspect, the seventh aspect, the twenty-sixth aspect, the twenty-eighth aspect, the thirtieth aspect, the thirty-second aspect, or the thirty-fourth aspect; or all possible implementations of the first aspect, the third aspect, the fifth aspect, the seventh aspect, the twenty-sixth aspect, the twenty-eighth aspect, the thirtieth aspect, the thirty-second aspect, or the thirty-fourth aspect.

According to a twenty-third aspect, a processor is provided, coupled to a memory, and configured to perform the method according to the second aspect, the fourth aspect, the sixth aspect, the eighth aspect, the twenty-seventh aspect, the twenty-ninth aspect, the thirty-first aspect, the thirty-third aspect, or the thirty-fifth aspect; any possible implementation of the second aspect, the fourth aspect, the sixth aspect, the eighth aspect, the twenty-seventh aspect, the twenty-ninth aspect, the thirty-first aspect, the thirty-third aspect, or the thirty-fifth aspect; or all possible implementations of the second aspect, the fourth aspect, the sixth aspect, the eighth aspect, the twenty-seventh aspect, the twenty-ninth aspect, the thirty-first aspect, the thirty-third aspect, or the thirty-fifth aspect.

According to a twenty-fourth aspect, a chip is provided. The chip includes a processor and a communication interface, the communication interface is configured to communicate with an external component or an internal component, and the processor is configured to implement the method according to the first aspect, the third aspect, the fifth aspect, the seventh aspect, the twenty-sixth aspect, the twenty-eighth aspect, the thirtieth aspect, the thirty-second aspect, or the thirty-fourth aspect; any possible implementation of the first aspect, the third aspect, the fifth aspect, the seventh aspect, the twenty-sixth aspect, the twenty-eighth aspect, the thirtieth aspect, the thirty-second aspect, or the thirty-fourth aspect; or all possible implementations of the first aspect, the third aspect, the fifth aspect, the seventh aspect, the twenty-sixth aspect, the twenty-eighth aspect, the thirtieth aspect, the thirty-second aspect, or the thirty-fourth aspect.

Optionally, the chip may further include a memory. The memory stores instructions. The processor is configured to execute the instructions stored in the memory or other instructions. When the instructions are executed, the processor is configured to implement the method according to the first aspect, the third aspect, the fifth aspect, the seventh aspect, the twenty-sixth aspect, the twenty-eighth aspect, the thirtieth aspect, the thirty-second aspect, or the thirty-fourth aspect; any possible implementation of the first aspect, the third aspect, the fifth aspect, the seventh aspect, the twenty-sixth aspect, the twenty-eighth aspect, the thirtieth aspect, the thirty-second aspect, or the thirty-fourth aspect; or all possible implementations of the first aspect, the third aspect, the fifth aspect, the seventh aspect, the twenty-sixth aspect, the twenty-eighth aspect, the thirtieth aspect, the thirty-second aspect, or the thirty-fourth aspect.

Optionally, the chip may be integrated into a terminal apparatus and/or a network apparatus.

According to a twenty-fifth aspect, a chip is provided. The chip includes a processor and a communication interface, the communication interface is configured to communicate with an external component or an internal component, and the processor is configured to implement the method according to the second aspect, the fourth aspect, the sixth aspect, the eighth aspect, the twenty-seventh aspect, the twenty-ninth aspect, the thirty-first aspect, the thirty-third aspect, or the thirty-fifth aspect; any possible implementation of the second aspect, the fourth aspect, the sixth aspect, the eighth aspect, the twenty-seventh aspect, the twenty-ninth aspect, the thirty-first aspect, the thirty-third aspect, or the thirty-fifth aspect; or all possible implementations of the second aspect, the fourth aspect, the sixth aspect, the eighth aspect, the twenty-seventh aspect, the twenty-ninth aspect, the thirty-first aspect, the thirty-third aspect, or the thirty-fifth aspect.

Optionally, the chip may further include a memory. The memory stores instructions. The processor is configured to execute the instructions stored in the memory or other instructions. When the instructions are executed, the processor is configured to implement the method according to the second aspect, the fourth aspect, the sixth aspect, the eighth aspect, the twenty-seventh aspect, the twenty-ninth aspect, the thirty-first aspect, the thirty-third aspect, or the thirty-fifth aspect; any possible implementation of the second aspect, the fourth aspect, the sixth aspect, the eighth aspect, the twenty-seventh aspect, the twenty-ninth aspect, the thirty-first aspect, the thirty-third aspect, or the thirty-fifth aspect; or all possible implementations of the second aspect, the fourth aspect, the sixth aspect, the eighth aspect, the twenty-seventh aspect, the twenty-ninth aspect, the thirty-first aspect, the thirty-third aspect, or the thirty-fifth aspect.

Optionally, the chip may be integrated into a terminal apparatus and/or a network apparatus.

According to a twenty-sixth aspect, a communication method is provided. The method may include: A first terminal apparatus determines a tenth resource, where the tenth resource is used to send a synchronization signal block, the synchronization signal block includes a physical sidelink broadcast channel PSBCH, a primary synchronization signal PSS, and a secondary synchronization signal SSS, and the synchronization signal block is used for sidelink synchronization; and the first terminal apparatus sends the synchronization signal block on the tenth resource, where the tenth resource is discontinuous in frequency domain.

According to a twenty-seventh aspect, a communication method is provided. The method may include: A second terminal apparatus receives a synchronization signal block on a tenth resource, where the synchronization signal block includes a physical sidelink broadcast channel PSBCH, a primary synchronization signal PSS, and a secondary synchronization signal SSS, the synchronization signal block is used for sidelink synchronization, and the tenth resource is discontinuous in frequency domain.

In some implementations, the tenth resource belongs to a ninth resource, and the ninth resource is determined based on an ARFCN, an RB set index, or a channel index.

In some implementations, the tenth resource is determined based on a start physical resource block PRB and a first granularity; or

the tenth resource is determined based on a central PRB and the first granularity; or
the tenth resource is determined based on a center frequency and the first granularity, and the center frequency is indicated by using an ARFCN; or
the tenth resource is an interlace resource to which a frequency indicated by an ARFCN belongs, where
the first granularity is a spacing between any two adjacent PRBs in frequency domain in the tenth resource.

According to a twenty-eighth aspect, a communication method is provided. The method may include: A first terminal apparatus determines an eleventh resource; and the first terminal apparatus sends V synchronization signal blocks on the eleventh resource, where V is an integer greater than or equal to 2, the synchronization signal block includes a physical sidelink broadcast channel PSBCH, a primary synchronization signal PSS, and a secondary synchronization signal SSS, the V synchronization signal blocks are the same, or PSBCHs in the V synchronization signal blocks are the same, and the synchronization signal blocks are used for sidelink synchronization.

According to a twenty-ninth aspect, a communication method is provided. The method may include: A second terminal apparatus receives V synchronization signal blocks on an eleventh resource, where V is an integer greater than or equal to 2, the synchronization signal block includes a physical sidelink broadcast channel PSBCH, a primary synchronization signal PSS, and a secondary synchronization signal SSS, the V synchronization signal blocks are the same, or PSBCHs in the V synchronization signal blocks are the same, and the synchronization signal blocks are used for sidelink synchronization.

In some implementations, the eleventh resource belongs to a twelfth resource, and the twelfth resource is determined based on an ARFCN, an RB set index, or a channel index.

In some implementations, the V synchronization signal blocks include a first synchronization signal block, and that the first terminal apparatus determines an eleventh resource includes:

the first terminal apparatus determines the eleventh resource based on a start PRB or a central PRB of the first synchronization signal block, a value of V, and an interval between two adjacent synchronization signal blocks in frequency domain; or
the first terminal apparatus determines the eleventh resource based on a center frequency of the first synchronization signal block, a value of V, and an interval between two adjacent synchronization signal blocks in frequency domain; or
the first terminal apparatus determines the eleventh resource based on a start PRB or a central PRB of each of the V synchronization signal blocks; or
the first terminal apparatus determines the eleventh resource based on a center frequency of the first synchronization signal block, a value of V, and the twelfth resource.

In some implementations, when the eleventh resource is all or partially located in a guard band, the first terminal apparatus discards some synchronization signal blocks on a resource in the guard band.

According to a thirtieth aspect, a communication method is provided. The method may include: A first terminal apparatus sends a synchronization signal block on a third channel in a first slot, where the synchronization signal block is used for sidelink synchronization, and the third channel is predefined or preconfigured.

Alternatively, the third channel is determined according to a preset rule, and the preset rule includes that the third channel is determined based on an SLSS ID.

In some implementations, the first terminal apparatus sends the synchronization signal block on a fifth channel in the first slot, where the fifth channel is a channel on which initial COT of a second terminal apparatus is located, and the first slot belongs to the initial COT of the second terminal apparatus.

In some implementations, before the first terminal apparatus sends the synchronization signal block on the fifth channel in the first slot, the method further includes: The first terminal apparatus receives second indication information, where the second indication information indicates whether the second terminal apparatus shares the first slot, or the second indication information indicates whether the second terminal apparatus sends a synchronization signal block in the first slot.

In some implementations, that the third channel is determined based on an SLSS ID includes:
the first terminal apparatus determines the third channel according to the following relationship:

index of the third channel = SLSS ID mod total quantity of channels; or

index of the third channel = floor(SLSS ID mod ceil(total quantity of SLSS IDs/total quantity of physical resource sets)).

In some implementations, the first terminal apparatus sends the synchronization signal block on each channel in a resource pool corresponding to the first slot.

In some implementations, the first slot is a slot other than a 1st slot and a last slot in time domain within the COT.

According to a thirty-first aspect, a communication method is provided. The method may include: A second terminal apparatus receives a synchronization signal block on a third channel in a first slot, where the synchronization signal block is used for sidelink synchronization, the third channel is predefined or preconfigured; and the second terminal apparatus receives the synchronization signal block on a fourth channel in the first slot, where the fourth channel is a channel on which initial COT of a first terminal apparatus is located, and the first slot belongs to the initial COT of the first terminal apparatus.

In some implementations, the second terminal apparatus receives the synchronization signal block on a fifth channel in the first slot, where the fifth channel is a channel on which initial COT of the second terminal apparatus is located, and the first slot belongs to the initial COT of the second terminal apparatus.

In some implementations, before the second terminal apparatus receives the synchronization signal block on the fifth channel in the first slot, the method further includes: The second terminal apparatus sends second indication information, where the second indication information indicates whether the second terminal apparatus shares the first slot, or the second indication information indicates whether the second terminal apparatus sends a synchronization signal block in the first slot.

In some implementations, that the third channel is determined based on an SLSS ID includes:

the first terminal apparatus determines the third channel according to the following relationship:

index of the third channel = SLSS ID mod total quantity of channels; or

index of the third channel = floor(SLSS ID mod ceil(total quantity of SLSS IDs/total quantity of physical resource sets)).

In some implementations, the second terminal apparatus receives the synchronization signal block on each channel in a resource pool corresponding to the first slot.

In some implementations, the first slot is a slot other than a 1st slot and a last slot in time domain within the COT.

According to a thirty-second aspect, a communication method is provided. For initial COT of a first terminal apparatus, the COT includes at least one of a first time domain resource, a second time domain resource, and a third time domain resource. The first terminal apparatus sends a synchronization signal block on one or more of the first time domain resource, the second time domain resource, and the third time domain resource based on a synchronization source type.

In some implementations, that the first terminal apparatus sends a synchronization signal block on one or more of the first time domain resource, the second time domain resource, and the third time domain resource based on a synchronization source type includes:

the first terminal apparatus sends the synchronization signal block on a first resource and/or a second resource, where the first terminal apparatus uses a GNSS as a synchronization reference source; and/or

the first terminal apparatus sends the synchronization signal block on a third resource, where the first terminal apparatus uses a gNB or another reference terminal apparatus as a synchronization reference source.

In some implementations, the first time domain resource is sl-SSB-TimeAllocation1, the second time domain resource is sl-SSB-TimeAllocation2, and the third time domain resource is sl-SSB-TimeAllocation3.

According to a thirty-third aspect, a communication method is provided. A second terminal apparatus receives a synchronization signal block on one or more of a first time domain resource, a second time domain resource, and a third time domain resource, where at least one of the first time domain resource, the second time domain resource, and the third time domain resource belongs to COT, and the COT is initial COT of the first terminal apparatus.

In some implementations, the second terminal apparatus receives the synchronization signal block on a first resource and/or a second resource, where the first terminal apparatus uses a GNSS as a synchronization reference source; and/or

the second terminal apparatus receives the synchronization signal block on a third resource, where the first terminal apparatus uses a gNB or another reference terminal apparatus as a synchronization reference source.

In some implementations, the first time domain resource is sl-SSB-TimeAllocation1, the second time domain resource is sl-SSB-TimeAllocation2, and the third time domain resource is sl-SSB-TimeAllocation3.

According to a thirty-fourth aspect, a first terminal apparatus receives first information, where the first information indicates whether the first terminal apparatus sends a synchronization signal block within first COT, or indicates whether the first terminal apparatus sends a synchronization signal block on a first time domain resource and/or a second time domain resource and/or a third time domain resource within first COT, the first COT is initial COT of a second terminal apparatus, and the first COT includes at least one of the first time domain resource, the second time domain resource, and the third time domain resource.

The first terminal apparatus sends the synchronization signal block on one or more of the first time domain resource, the second time domain resource, and the third time domain resource based on the first information.

According to a thirty-fifth aspect, a second terminal apparatus sends first information, where the first information indicates whether a first terminal apparatus sends a synchronization signal block within first COT, or indicates whether a first terminal apparatus sends a synchronization signal block on a first time domain resource and/or a second time domain resource and/or a third time domain resource within first COT, the first COT is initial COT of the second terminal apparatus, and the first COT includes at least one of the first time domain resource, the second time domain resource, and the third time domain resource; and the second terminal apparatus receives the synchronization signal block on one or more of the first time domain resource, the second time domain resource, and the third time domain resource.

In some implementations, the first time domain resource is sl-SSB-TimeAllocation1, the second time domain resource is sl-SSB-TimeAllocation2, and the third time domain resource is sl-SSB-TimeAllocation3.

## BRIEF DESCRIPTION OF DRAWINGS

FIG. 1 shows a system architecture to which an embodiment of this application is applicable;
FIG. 2 shows a slot to which an embodiment of this application is applicable;
FIG. 3 shows a listen before talk process to which an embodiment of this application is applicable;
FIG. 4 shows another listen before talk process to which an embodiment of this application is applicable;
FIG. 5 is a diagram of a transmission resource to which an embodiment of this application is applicable;
FIG. 6 is a diagram of a resource structure to which an embodiment of this application is applicable;
FIG. 7 is a diagram of another resource structure to which an embodiment of this application is applicable;
FIG. 8 is a diagram of another resource structure to which an embodiment of this application is applicable;
FIG. 9 is a diagram of a communication method according to an embodiment of this application;
FIG. 10 is a diagram of a resource structure according to an embodiment of this application;
FIG. 11 is a diagram of a resource structure according to an embodiment of this application;
FIG. 12 is a diagram of a resource structure according to an embodiment of this application;
FIG. 13 is a diagram of a resource structure according to an embodiment of this application;
FIG. 14 is a diagram of a resource structure according to an embodiment of this application;
FIG. 15 is a diagram of a resource structure according to an embodiment of this application;
FIG. 16 is a diagram of a resource structure according to an embodiment of this application;
FIG. 17 is a diagram of a resource structure according to an embodiment of this application;
FIG. 18 is a diagram of a resource structure according to an embodiment of this application;
FIG. 19 is a diagram of a resource structure according to an embodiment of this application;
FIG. 20 is a diagram of a resource structure according to an embodiment of this application;
FIG. 21 is a diagram of a resource structure according to an embodiment of this application;
FIG. 22 is a diagram of a resource structure according to an embodiment of this application;
FIG. 23 is a diagram of another communication method according to an embodiment of this application;
FIG. 24 is a diagram of a resource structure according to an embodiment of this application;
FIG. 25 is a diagram of another communication method according to an embodiment of this application;
FIG. 26 is a diagram of a resource structure according to an embodiment of this application;
FIG. 27 is a diagram of another communication method according to an embodiment of this application;
FIG. 28 is a block diagram of a communication apparatus according to an embodiment of this application;
FIG. 29 is a block diagram of another communication apparatus according to an embodiment of this application;
FIG. 30 is a diagram of another communication method according to an embodiment of this application;
FIG. 31 is a diagram of another communication method according to an embodiment of this application; and
FIG. 32 is a diagram of another communication method according to an embodiment of this application.

## DESCRIPTION OF EMBODIMENTS

The following describes technical solutions of this application with reference to accompanying drawings.

The technical solutions in embodiments of this application may be applied to various communication systems, for example, a 5G 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, or the like. The technical solutions provided in this application may be further applied to a future communication system, for example, a 6th generation mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or other communication systems.

In addition, the technical solutions provided in embodiments of this application may be applied to a link between a network device and a terminal device, or may be applied to a link between devices, for example, a device-to-device (device-to-device, D2D) link. The D2D link may also be referred to as a sidelink, and the sidelink may also be referred to as a side-link, a secondary link, or the like. In embodiments of this application, the D2D link, the side-link, and the secondary link each mean a link established between devices of a same type, and have a same meaning. The link between the devices of the same type may be a link between terminal devices, a link between network devices, a link between relay nodes, or the like. This is not limited in embodiments of this application. For the link between the terminal devices, there is a D2D link defined in release (release, Rel)-12/13 of the 3rd generation partnership project (3rd generation partnership project, 3GPP), and there is also a vehicle-to-everything link defined by the 3GPP for the internet of vehicles. It should be understood that V2X specifically further includes direct communication of vehicle-to-vehicle (vehicle-to-vehicle, V2V), vehicle-to-infrastructure (vehicle-to-infrastructure, V2I), and vehicle-to-pedestrian (vehicle-to-pedestrian, V2P), and a vehicle-to-network (vehicle-to-network, V2N) or vehicle-to-any entity V2X link, including a V2X link in Rel-14/15. V2X further includes an NR system-based V2X link in Rel-16 and later releases that are currently being studied by the 3GPP, and the like. V2V means communication between vehicles. V2P means communication between a vehicle and a person (including a pedestrian, a cyclist, a driver, or a passenger). V2I means communication between a vehicle and an infrastructure, where the infrastructure is, for example, a roadside unit (roadside unit, RSU) or a network device. In addition, V2N may be included in V2I, and V2N means communication between a vehicle and a network device. The RSU includes two types: a terminal-type RSU and a base station-type RSU. Because the terminal-type RSU is deployed on a road side, the terminal-type RSU is in a non-mobile state, and mobility does not need to be considered. The base station-type RSU can provide timing synchronization and resource scheduling for a vehicle that communicates with the base station-type RSU.

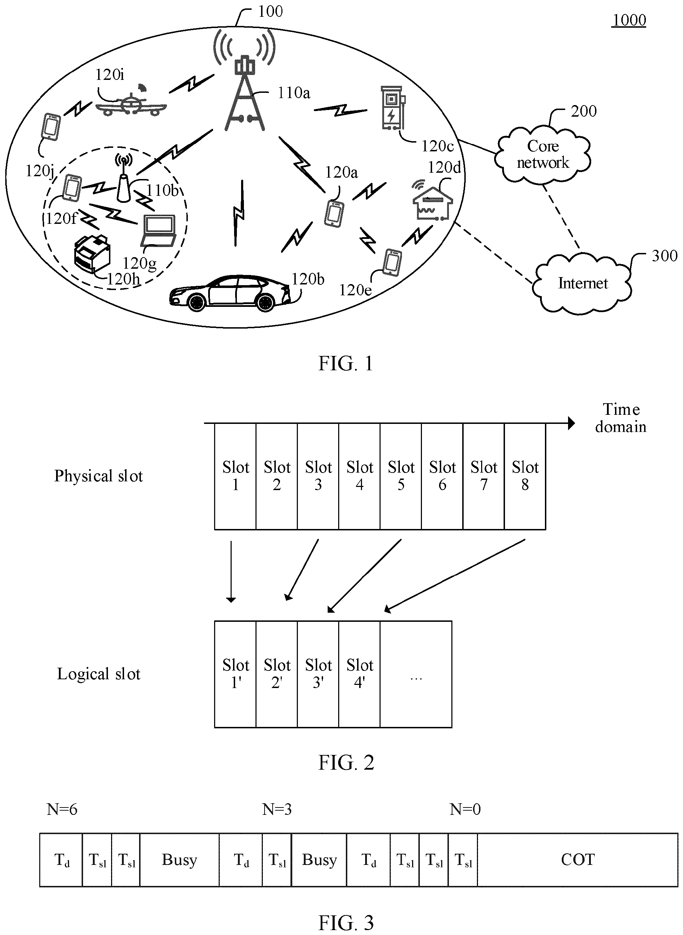

The following provides a diagram of an architecture of a mobile communication system to which embodiments of this application are applied. FIG. 1 is a diagram of an architecture of a communication system 1000 to which an embodiment of this application is applied. As shown in FIG. 1, the communication system includes a radio access network 100. Optionally, the communication system 1000 may further include a core network 200 and an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is only a diagram. The communication system may further include other network devices, for example, may further include a wireless relay device and a wireless backhaul device. This is not shown in FIG. 1.

It should be understood that in the communication system in this application, an information transmitting end may be a network device or a terminal device, and an information receiving end may be a network device or a terminal device. This is not limited in this application.

In embodiments of this application, UE may be referred to as a terminal device, a terminal apparatus, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides a user with voice/data. For example, the terminal device may be a handheld device or a vehicle-mounted device having a wireless connection function. The terminal device may include user equipment, and is sometimes referred to as a terminal, an access station, a UE station, a remote station, a wireless communication device, a user apparatus, or the like. The terminal device is configured to connect a person, an object, a machine, and the like, may be widely used in various scenarios, and includes, for example but not limited to, terminal devices in the following scenarios: cellular communication, D2D, V2X, machine-to-machine/machine-type communication (machine-to-machine/machine-type communications, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, smart wearable, smart transportation, a smart city (smart city), an uncrewed aerial vehicle, and a robot. For example, the terminal device may be a mobile phone (mobile phone), a tablet computer (Pad), a computer with wireless sending and receiving functions, a VR terminal, an AR terminal, a wireless terminal in industrial control, a vehicle, a wireless communication module in a vehicle, a vehicle-mounted T-box (Telematics BOX), a roadside unit RSU, a wireless terminal in self-driving, a smart speaker in an IoT network, a wireless terminal device in telemedicine, a wireless terminal device in a smart grid, a wireless terminal device in transportation safety, a wireless terminal device in a smart city, a wireless terminal device in a smart home, or the like. This is not limited in embodiments of this application.

By way of example and not limitation, the terminal device in embodiments of this application may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for measuring physical signs. In addition, the terminal device in embodiments of this application may alternatively be a terminal device in an IoT system. IoT is an important part of future information technology development. A main technical feature of IoT is connecting things to networks by using communication technologies, to implement an intelligent network for man-machine interconnection and interconnection between things.

If the various terminal devices described above are located on a vehicle (for example, placed inside the vehicle or mounted inside the vehicle), the terminal devices may be considered as vehicle-mounted terminal devices. For example, the vehicle-mounted terminal devices are also referred to as on-board units (on-board unit, OBU). The terminal device in this application may alternatively be a vehicle-mounted module, a vehicle-mounted component, a vehicle-mounted chip, or a vehicle-mounted unit that is built in a vehicle as one or more components or units. The vehicle may implement a method in this application by using the vehicle-mounted module, the vehicle-mounted component, the vehicle-mounted chip, or the vehicle-mounted unit that is built in the vehicle.

It should be understood that a network device in the wireless communication system may be a device that can communicate with a terminal device, and the network device may also be referred to as an access network device or a radio access network device. For example, the network device may be a base station. A network device in embodiments of this application may be a radio access network (radio access network, RAN) node (or device) that connects the terminal device to a wireless network. The base station may cover following various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, an analogue, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks using a same access technology or different access technologies. A specific technology and a specific device form that are used by the network device are not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A terminal function may be performed by a module (for example, a chip or a modem) in the terminal, or may be performed by an apparatus including the terminal function.

For ease of understanding this application, a random access process and related concepts are briefly described.

1. Interface: A communication interface (Uu interface) between a terminal apparatus and a network device may be referred to as a Uu interface, a communication interface (PC5 interface) between terminal apparatuses may be referred to as a PC5 interface, and a transmission link in the PC5 interface is defined as a sidelink (sidelink, SL). The terminal apparatus in this application may be understood as the foregoing terminal device or some modules/chips in the terminal device.

2. Unlicensed band (unlicensed spectrum): may also be referred to as an unlicensed resource, an unlicensed spectrum, a shared band/spectrum, an unlicensed band/spectrum, or the like. In a wireless communication system, different used bands may be classified into a licensed band and an unlicensed band. In the licensed band, a user uses a spectrum resource in a manner such as scheduling of a central node or resource selection. In the unlicensed band, a transmit node needs to use a spectrum resource in a contention manner. Specifically, the transmit node contends for a channel in a listen before talk (listen before talk, LBT) manner. In a 5G NR system, NR protocol technologies in an unlicensed band are collectively referred to as NR-U, and it is expected that corresponding Uu interface communication performance is further improved through NR-U. Enabling SL communication on the unlicensed band in local space is an important evolution direction, and corresponding protocol technologies may be collectively referred to as SL-U. Similar to the Uu interface, UE that works by using SL-U also needs to coexist with a nearby Wi-Fi device based on an LBT mechanism. A reason why the LBT mechanism becomes a mandatory feature of the unlicensed band is that each region in the world has a regulation (regulation) requirement on use of the unlicensed band. UE in various forms that works in different communication protocols can use the unlicensed band only when a regulation is met. In this way, the UE can fairly and efficiently use spectrum resources.

3. Time domain resource: In time domain, an SL resource pool includes one or more time units. The time unit may be one or more symbols, one or more slots (slot), one or more mini-slots (mini-slot), one or more subframes, or one or more frames, or may be a second, a millisecond, a microsecond, or the like. The one or more time units may be consecutive or discrete in terms of time. It should be understood that time domain units in one resource pool are logically consecutive. In embodiments of this application, for understanding of definitions of a symbol, a mini-slot, a slot, a subframe, and a frame, refer to 3GPP TS 38.211.

As shown in FIG. 2, slot 1 to slot 8 are consecutive slots in terms of time, and such slots are referred to as physical slots (physical slot). Physical slots: slot 1, slot 3, slot 5, and slot 8, are configured as slots that belong to one resource pool. Slots included in a resource pool may be inconsecutive in terms of time. Therefore, from a perspective of the resource pool, slot 1, slot 3, slot 5, and slot 8 in the physical slots correspond to slot 1', slot 2', slot 3', and slot 4' in the resource pool. In this case, consecutive slots (namely, slot 1', slot 2', slot 3', and slot 4') included in the resource pool are logically consecutive slots in the resource pool, and the slots that are logically consecutive but not necessarily consecutive in terms of time are referred to as logical slots (logical slot).

Start time unit: is a 1st time unit of a resource in time domain.

End time unit: is a last time unit of a resource in time domain.

In an example in which a slot is a time unit, a resource shown in FIG. 2 includes slot 1 to slot 8 in time domain. In this case, slot 1 is a start time unit of the resource, and slot 8 is an end time unit of the resource.

4. Frequency domain resource: In frequency domain, an SL resource pool includes one or more frequency domain units. The frequency domain unit may be one resource element (resource element, RE) or several REs, one resource block (resource block, RB) or several RBs, one physical resource block (physical resource block, PRB) or several PRBs, one or more channels, one bandwidth part (bandwidth part, BWP) or a plurality of BWPs, one component carrier (component carrier, CC) or a plurality of CCs, one band (band) or a plurality of bands, or one sub-channel (sub-channel) or several sub-channels. A size of one sub-channel indicates a quantity of one or more RBs that are included in one sub-channel and that are consecutive (continuous) or interlaced (interlaced) in frequency domain, and may be an integer like 10, 12, 15, 20, 25, or 50.

5. LBT: LBT (listen before talk, listen before talk) is a channel access rule. Before accessing a channel and starting to send data, UE needs to listen whether the channel is idle (idle). If the channel has been idle for a period of time, the UE may occupy the channel. If the channel is not idle, the UE may occupy the channel only after the channel is restored to idle. LBT may also be referred to as channel access, channel detection, channel listening, channel monitoring, channel sensing (sensing), or the like.

Generally, a channel state may be determined through energy-based detection and signal type-based detection. For example, NR-U uses energy-based detection, and Wi-Fi uses a combination of the two detection methods. A detection threshold (energy detection threshold) needs to be set for energy-based detection. When detected energy exceeds the detection threshold, it is determined that a channel is busy, and access to the channel is not allowed. When detected energy has been lower than the detection threshold for a period of time, access to a channel is allowed. According to a national and regional regulation requirement for using an unlicensed band, using a 5 GHz band as an example, one channel may mean a bandwidth of 20 MHz. When a 20 MHz channel is accessed, the channel can be occupied only when a requirement of at least a minimum occupied channel bandwidth (occupied channel bandwidth, OCB) is met. Generally, the minimum OCB is at least 80% of a normal bandwidth. For example, the normal bandwidth is 20 MHz, that is, the UE needs to occupy at least a bandwidth of 16 MHz to preempt the 20 MHz channel. It should be understood that a bandwidth of a channel may alternatively be another value, and 20 MHz is merely used as an example rather than a limitation.

There are a plurality of types of LBT. The following mainly describes two types of LBT.

First-type LBT: A communication device can access a channel and send data only after performing random backoff (random backoff). For example, a terminal apparatus may listen and detect, for the first time in a period of continuous detection (defer sensing) time (denoted as Td), that a channel is idle, and initiate data transmission after decreasing a counter N to zero in a detection slot period (sensing slot duration). $mp$ consecutive listening slot periods (denoted as $Tsl$) closely follow Td. Specifically, the terminal apparatus may access the channel according to the following steps.

Step 1: Set N=Ninit, where Ninit is a random number evenly distributed between 0 and $CW_p$; and perform step 2, where $CW_p$ may be a contention window for a priority p (contention window for a given priority class).

Step 2: If N>0, a network device or a terminal device chooses to decrease a counter, and set N=N-1.

Step 3: If the channel is idle during a listening slot, proceed to step 4.

If the channel is not idle during a listening slot, proceed to step 5.

Step 4: If N=0, stop.

If N≠0, perform step 2.

Step 5: Listen to the channel, until it is detected that the channel is busy in other Td, or it is detected that the channel is idle in all listening slots in other Td.

Step 6: If it is detected that the channel is idle in all listening slots in other Td, perform step 4.

If it is detected that the channel is not idle in all listening slots in other Td, perform step 5.

$CW_{min,p} \leq CW_p \leq CW_{max,p}$, where $CW_{min,p}$ is a minimum value of the contention window for the priority p, and $CW_{max,p}$ is a maximum value of the contention window for the priority p.

Before step 1, $CW_{min,p}$ and $CW_{max,p}$ are selected, and mp, $CW_{min,p}$, and $CW_{max,p}$ are determined based on a channel access priority class p associated with transmission of the network device or the terminal device, as shown in Table 1.a and Table 1.b.

**Table 1.a: Table of a relationship between a channel access priority and $CW_p$ (downlink)**

| Channel access priority class p | $m_p$ | $CW_{min,p}$ | $CW_{max,p}$ | $T_{m\ cot,p}$ | Allowed $CW_p$ size |
|---|---|---|---|---|---|
| 1 | 1 | 3 | 7 | 2 ms | {3, 7} |
| 2 | 1 | 7 | 15 | 3 ms | {7, 15} |
| 3 | 3 | 15 | 63 | 8 or 10 ms | {15, 31, 63} |
| 4 | 7 | 15 | 1023 | 8 or 10 ms | {15, 31, 63, 127, 255, 511, 1023} |

**Table 1.b: Table of a relationship between a channel access priority and $CW_p$ (uplink)**

| Channel access priority class p | $m_p$ | $CW_{min,p}$ | $CW_{max,p}$ | $T_{m\ cot,p}$ | Allowed $CW_p$ size |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 or 10 ms | {15, 31, 63, 127, 255, 511, 1023} |
| 4 | 7 | 15 | 1023 | 6 or 10 ms | {15, 31, 63, 127, 255, 511, 1023} |

In the foregoing table, $T_{m\ cot,p}$ is maximum channel occupancy time for the priority p (maximum channel occupancy time for a given priority class), and channel occupancy time (channel occupancy time, COT) for transmission performed by the network device or the terminal device on the channel does not exceed $T_{m\ cot,p}$. In other words, COT refers to time in which the communication device is allowed to occupy the channel after the communication device successfully accesses the channel. In other words, the communication device may preempt a right to use the channel within a period of time after completing an LBT process. A channel access process is performed based on the channel access priority class p associated with transmission of the network device or the terminal device. A smaller value of the priority class in Table 1 indicates a higher priority. For example, a priority 1 is a highest priority.

The network device or the terminal device maintains the contention window value $CW_p$, and adjusts the value of $CW_p$ according to the following steps before step 1.

For each priority in the table, $CW_p$ corresponding to the priority is set to $CW_{min,p}$.

In a HARQ-ACK feedback value corresponding to data sent by the network device or the terminal device in a reference subframe k, if a negative acknowledgment (negative acknowledgment, NACK) is fed back for at least 80% of data, a value of $CW_p$ corresponding to each priority is increased to a next higher allowed value, and is used in step 2; or if a negative acknowledgment is not fed back for at least 80% of data, step 1 is performed. The reference subframe k is a start subframe for latest data transmission of the network device or the terminal device on the channel.

An example of the first-type LBT is shown in FIG. 3. For example, N is 6. The terminal apparatus determines, through listening, that the channel is always in an idle state in a duration range of first $T_d$, decreases N from 6 to 5 in a first $T_{sl}$, and decreases N from 5 to 4 in a second $T_{sl}$. Then, the terminal apparatus listens and detects that a channel state is busy, and after the channel state is idle for duration of $T_d$, decreases N to 3 in a third $T_{sl}$. Then, the terminal apparatus listens and detects that the channel is busy, and after the channel state is idle for duration of $T_d$, decreases N to 2 in a fourth $T_{sl}$, decreases N to 1 in a fifth $T_{sl}$, and decreases N to 0 in a sixth $T_{sl}$. Then, the terminal apparatus accesses the channel, and transmits data within the COT.

Second-type LBT is LBT without random backoff, and there are three cases.

Case A: UE performs transmission immediately after sensing that a channel is idle within at least a sensing interval of 25 $\mu$s. Specifically, 25 $\mu$s is formed by one 16-$\mu$s sensing slot and one 9-$\mu$s sensing slot. If the two sensing slots are both idle, the channel is considered to be idle.

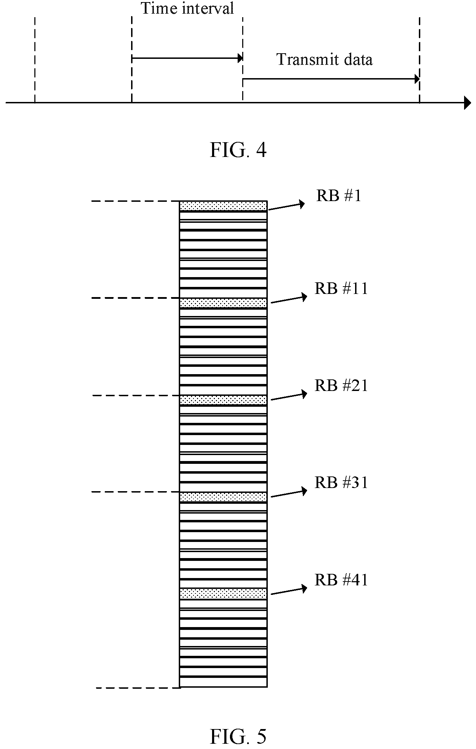

Case B: UE may perform sending immediately after detecting that a channel is idle within duration of 16 $\mu$s. Specifically, channel detection occurs in last 9 $\mu$s. If detection time is not less than 5 $\mu$s, and the channel is idle for at least 4 $\mu$s in the detection slot, it may be considered that the channel is in an idle state within the duration. As shown in FIG. 4, a communication device listens to a channel, and determines that the channel is in an idle state within a time interval (for example, 16 $\mu$s). In this case, the communication device may access the channel at an end moment of the time interval.

Case C: UE can perform transmission without performing channel sensing, and maximum transmission time is 584 $\mu$s.

6. Minimum occupied channel bandwidth (occupied channel bandwidth, OCB): On an unlicensed band, a terminal apparatus usually needs to meet a requirement of at least a minimum occupied channel bandwidth (occupied channel bandwidth, OCB) before occupying a channel. Generally, the minimum OCB is required to be at least 80% of a normal bandwidth. When a channel width is 20 MHz, a bandwidth of at least 16 MHz needs to be occupied to preempt the channel. FIG. 5 is an example that a terminal apparatus meets a requirement of a minimum OCB by using interlaced resource blocks (resource block, RB). In the figure, UE occupies interlaced RB group #1, and interlaced RB group #1 includes RB #1, RB #11, RB #21, RB #31, and RB #41. When the UE sends a signal on RB #1, energy can be detected on other RBs near RB #1 that are not actually occupied, such as RB #2, RB #3, and RB #4. Similarly, it may be considered that a frequency domain part occupied by the UE is not only RB #1, RB #11, RB #21, RB #31, and RB #41. When a quantity of RBs for which energy can be detected accounts for 80% of a quantity of RBs in the bandwidth, it may be considered that the OCB requirement is met.

7. Quasi co-location (quasi co-location, QCL): There may be different beam directions in a frequency range 2 (FR2), and resources/channels/transmissions corresponding to a same beam direction may be considered to be subject to QCL, or have a QCL relationship, that is, some properties of corresponding channels are the same. A specific explanation is as follows: If a property of a channel for transmitting a symbol on one antenna port can be deduced from a channel for transmitting a symbol on another antenna port, the two antenna ports are quasi co-located. Generally, for FR1, all resources/channels/transmissions may be considered to be quasi co-located.

8. Automatic gain control (automatic gain control, AGC): In SL transmission, because there is usually no base station to perform scheduling and coordination, UE at a receiving end cannot learn of information such as transmit power of UE at a transmitting end. Therefore, a receiver cannot adjust a power amplifier to a proper range, and therefore direct reception cannot be performed correctly. In R16 NRV, before each transmission, one symbol is used for AGC. After receiving a first symbol, the receiving end adjusts the power amplifier based on the symbol, to better receive a subsequent transmission. However, more points of AGC indicate a more complex receiver and higher overheads. Therefore, to reduce receiver complexity, transmission in R16 NRV is based on a slot, that is, occupies one complete slot. Using an NRV sidelink synchronization signal and physical broadcast channel (physical broadcast channel, PBCH) block (sidelink synchronization signal and PBCH block, S-SSB) as an example, one slot includes 13 symbols, and the S-SSB and a last symbol are reserved as GAP (Sidelink UE is generally half-duplex UE, and cannot perform sending and receiving at the same time. After sending or receiving, receiving or sending may need to be performed. Time needs to be reserved for conversion between sending and receiving. Therefore, GAP needs to be reserved. Actually, required time for conversion between sending and receiving is less than one symbol).

9. Synchronization: Synchronous communication requires that a transmitting party and a receiving party have synchronization clock signals or timing information with a same frequency and a same phase. In a manner, for example, based on an SSB in NR communication, synchronization is established between the transmitting party and the receiving party, and then sending/receiving is performed under control of a synchronization clock.

Currently, in NR Uu/R16 NRU and R16 NRV, there are different time-frequency structures and time-frequency sending manners for transmission of a synchronization message. For example, the synchronization message may be a synchronization signal and physical broadcast channel (physical broadcast channel, PBCH) block (synchronization signal and PBCH block, SSB), which is briefly referred to as a synchronization signal block below.

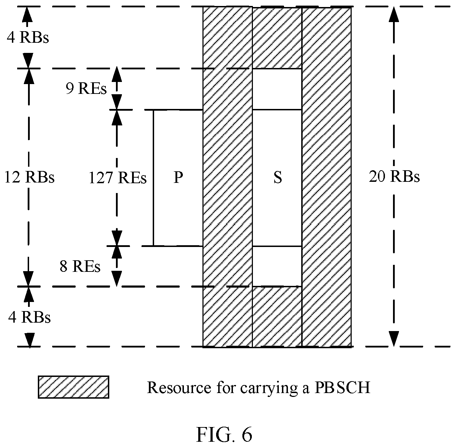

A time-frequency structure for transmitting an SSB in NR Uu/R16 NRU is a four-symbol structure. As shown in FIG. 6, messages carried in the four symbols are sequentially a primary synchronization signal (primary synchronization signal, PSS), a PBCH, a secondary synchronization signal (secondary synchronization signal, SSS), and a PBCH. There are PBCHs of four resource blocks (resource block, RB) at two ends of a symbol in which the SSS is located in frequency domain. Generally, the PBCH occupies 20 RBs, and the PSS/SSS occupies 127 REs. Specifically, resource blocks occupied by the information are shown in Table 2.

**Table 2: Resources used for a PSS, an SSS, a PBCH, and a DMRS in an SS/PBCH resource block**

| Channel/Signal | Quantity of start OFDM symbols relative to the SS/PBCH resource block | Start subcarrier number relative to the SS/PBCH resource block |
|---|---|---|
| PSS | 0 | 56, 57, ..., 182 |
| SSS | 2 | 56, 57, ..., 182 |
| Set to 0 | 0 | 0, 1, ..., 55, 183, 184, ..., 239 |
|  | 2 | 48, 49, ..., 55, 183, 184, ..., 191 |
| PBCH | 1, 3 | 0, 1, ..., 239 |
|  | 2 | 0, 1, ..., 47, 192, 193, ..., 239 |
| DMRS for | 1, 3 | $0 + v, 4 + v, 8 + v, ..., 236 + v$ |
| PBCH | 2 | $0 + v, 4 + v, 8 + v, ..., 44 + v$ $192 + v, 196 + v, ..., 236 + v$ |

In the table, $v = N_{\mathrm{ID}}^{\mathrm{cell}} \mod 4$, where $N_{\mathrm{ID}}^{\mathrm{cell}}$ is a cell ID, which can ensure that DMRSs of different cells are orthogonal.

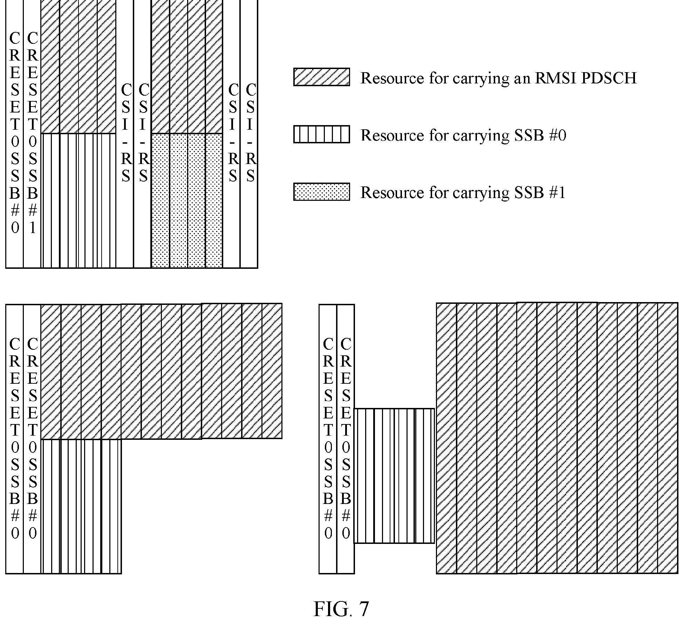

FIG. 7 shows a method for meeting an OCB requirement by an SSB in R16 NRU. A discovery burst (discovery burst) is introduced, where the discovery burst is a DL transmission burst, and includes a group of signals and/or channels that are limited within a window and associated with a duty cycle. The discovery burst may be any one of the following:

transmission initiated by an eNB, including a primary synchronization signal (PSS), a secondary synchronization signal (SSS), and a cell specific reference signal (CRS), and possibly including a non-zero power CSI reference signal (CSI-RS); and

transmission initiated by a gNB, including at least one SS/PBCH block composed of a primary synchronization signal (PSS), a secondary synchronization signal (SSS), a physical broadcast channel (PBCH), and a related demodulation reference signal (DM-RS), and further including a CORESET for a PDCCH to schedule a PDSCH with SIB1, and a PDSCH and/or a non-zero power CSI reference signal (CSI-RS) carrying SIB1.

In other words, in addition to the SSB, control resource set #0 (control resource set, CORESET #0), remaining minimum system information (remaining minimum system information, RMSI), a physical downlink shared channel (physical downlink shared channel, PDSCH), a CSI-RS, and the like may be further included. A structure of the SSB remains unchanged, and channel bandwidth occupation required by the OCB is achieved through time division multiplexing (time division multiplexing, TDM) and/or frequency division multiplexing (frequency division multiplexing, FDM) between the foregoing several information transmissions.

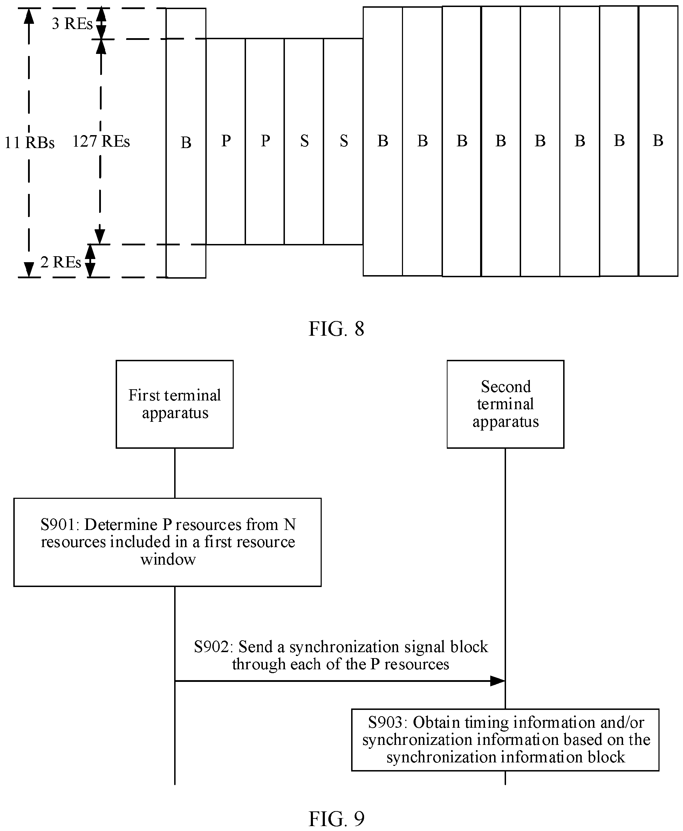

A time-frequency structure for transmitting an S-SSB in R16 NRV is shown in FIG. 8, and includes a structure with 13 symbols (for a normal cyclic prefix (normal cyclic prefix, NCP), there are 14 symbols in total in one slot) or 11 symbols (for an extended cyclic prefix (extended cyclic prefix, ECP), there are 12 symbols in total in one slot). A PSBCH, an S-PSS, an S-PSS, an S-SSS, and an S-SSS exist in sequence, and the rest are PSBCHs. Generally, the PSBCH occupies 11 RBs, and the PSS/SSS occupies 127 REs. Specifically, resource blocks occupied by the information are shown in Table 3.

Table 3: Resources used for a PSS, an SSS, a PBCH, and a DMRS in an SS/PBCH resource block

| Channel/Signal | Quantity of start OFDM symbols relative to the SS/PBCH resource block | Start subcarrier number relative to the SS/PBCH resource block |
|---|---|---|
| S-PSS | 1, 2 | 2, 3, ..., 127, 128 |
| S-SSS | 3, 4 | 2, 3, ..., 127, 128 |
| Set to zero | 1,2,3,4 | 0, 1, 129, 130, 131 |

(continued)

| Channel/Signal | Quantity of start OFDM symbols relative to the SS/PBCH resource block | Start subcarrier number relative to the SS/PBCH resource block |
|---|---|---|
| PSBCH | $0, 5, 6, \ldots, N_{\text{symb}}^{\text{S-SSB}} - 1$ | 0, 1, ..., 131 |
| DM-RS for PSBCH | $0, 5, 6, \ldots, N_{\text{symb}}^{\text{S-SSB}} - 1$ | 0, 4, 8, ..., 128 |

In the table, $N_{\text{symb}}^{\text{S-SSB}}$ represents a quantity of OFDM symbols included in one S-SSB.

A method for sending an S-SSB in time domain in R16 NRV is as follows: A synchronization period is fixed to 160 ms, and two or three sets of synchronization resources may be (pre)configured in each cycle. A quantity of S-SSBs included in each set of synchronization resources in each synchronization period may be (pre)configured (different subcarrier spacings correspond to different candidate values). A method for (pre)configuring a specific position of each resource is as follows: An offset (offset) of a first S-SSB resource in a cycle relative to a start position of the cycle may be (pre)configured, and an interval between a position of a subsequent S-SSB resource and the first S-SSB resource may be (pre)configured. Each S-SSB resource can send only one S-SSB. A PSBCH includes 56 bits: a 32-bit sidelink master information block (master information block, MIB-SL) and a 24-bit cyclic redundancy check (cyclic redundancy check, CRC), and then is mapped to a physical resource through coding, rate matching, and the like. The MIB-SL includes 12 bits of SL-TDD-Config, 1 bit indicating whether UE is in coverage, 10 bits of a direct frame number (direct frame number, DFN), 7 bits of a slot index (10 to 80 slots), and 2 reserved bits.

However, in sidelink transmission, currently, there is no requirement for transmitting the SSB, CORESET #0, and the RMSI together. In the foregoing NRU transmission manner, an LBT failure scenario is considered, and an S-SSB resource (pre)configuration manner in an NRU synchronization period is not fully applicable to SL-U.

It should be understood that, in this application, (pre)configuration is equivalent to preconfiguration, and may mean one or more of predefinition, RRC configuration, SCI indication, MAC CE indication, and DCI indication. The SCI is a first-level SCI and/or a second-level SCI.

It should be understood that in this application, A/B may be understood as A and/or B.

It should be understood that, in this application, embodiments may be independently implemented or may be implemented in combination based on some internal relationships. In each embodiment, different implementations may be implemented in combination or independently. For example, a manner of determining an S-SSB time domain resource and a manner of determining an S-SSB frequency domain resource and/or an OCB method may be implemented independently or in combination.

For ease of understanding, it is noted in advance that an S-SSB in sidelink transmission or sidelink synchronization may also be referred to as an SSB for short. Unless otherwise specified in this application, the SSB and the S-SSB may be interchangeable. Similarly, for sidelink synchronization, an S-PSS may also be referred to as a PSS for short, and an S-SSS may also be referred to as an SSS for short. In other words, for sidelink synchronization, the SSB, the PSS, and the SSS correspond to the S-SSB, the S-PSS, and the S-SSS respectively.

For the foregoing problem, an embodiment of this application provides a method, to reduce an SL-U synchronization failure rate and improve communication quality. As shown in FIG. 9, the method may include the following steps.

S901: A first terminal apparatus determines P resources from N resources included in a first resource window.

The first resource window is one of M resource windows, each of the M resource windows includes N resources, frequency domain resources corresponding to the M resource windows are unlicensed resources, M and N are positive integers, and P is a positive integer less than or equal to N.

Optionally, before determining the P resources, the first terminal apparatus may further determine the first resource window.

A resource window is also referred to as a DRS, a DRS window, a DRS burst, a discovery burst, or the like. The N resources may be time-frequency resources, time domain resources, or frequency domain resources. The N resources may correspond to one or more symbols, one or more slots, or one or more transmission occasions in time domain. Optionally, the N resources may alternatively be consecutive resources in time domain. It should be understood that, as an optional resource example, the resource window may exist or may not exist. In other words, the N resources may not be represented in a form of a resource window. This is not limited in this embodiment of this application.

M may be predefined or (pre)configured. For example, a value of M may be fixed to 1. Alternatively, a value of M may be related to an SCS. For example, M corresponding to 15 kHz is 1. M corresponding to 30 kHz is 2. M corresponding to 60 kHz is 4. M corresponding to 120 kHz is 8. Alternatively, a value of M may be a value (pre)configured from a candidate set. For example, the candidate set is {1, 2, 4, 8}. Optionally, a value included in the set may be related to an SCS. For example, a set corresponding to 15 kHz is {1}. A set corresponding to 30 kHz is {1, 2}. A set corresponding to 60 kHz is {1, 2, 4}. Alternatively, there may be the following relationships:

FR1, SCS = 15 kHz: 1.

FR1, SCS = 30 kHz:1, 2.

FR1, SCS = 60 kHz: 1, 2, 4.

FR2, SCS = 60 kHz: 1, 2, 4, 8, 16, 32.

FR2, SCS = 120 kHz:1, 2, 4, 8, 16, 32, 64.

A value of N is predefined or (pre)configured. Optionally, a configured value is used when configuration is performed, or a predefined value or a default value is used when configuration is not performed. For example, the value of N may be fixed to 1, 2, 4, 8, 10, or 20. Alternatively, the value of N may be related to an SCS. For example, N corresponding to 15 kHz is 1 or 10. N corresponding to 30 kHz is 2 or 20. N corresponding to 60 kHz is 4 or 40. N corresponding to 120 kHz is 8 or 80. Alternatively, the value of N may be a value (pre)configured from a candidate set. For example, the candidate set is {1, 2, 4, 8} or {10, 20, 40, 80}. Optionally, a value included in the set may be related to an SCS. For example, a set corresponding to 15 kHz is {1} or {10}. A set corresponding to 30 kHz is {1, 2} or {10, 20}. A set corresponding to 60 kHz is {1, 2, 4} or {10, 20, 40, 80}.

The M resource windows may have a same length in time domain. For example, when M is 3, lengths of resource window #1, resource window #2, and resource window #3 in time domain are all two slots. Quantities of resources included in all resource windows may be the same. For example, when N is 4, resource window #1, resource window #2, and resource window #3 each include four resources. A length and a quantity of resource windows may be predefined, preconfigured, or configured. For example, a predefined or (pre)configured candidate value of the length of the resource window may be at least one of {0.5 ms, 1 ms, 2 ms, 3 ms, 4 ms, 5 ms}. In another example, the length may be related to a subcarrier spacing (subcarrier spacing, SCS). For example, a larger SCS indicates a shorter length of the resource window.

A window length (the length of the resource window) may be predefined or (pre)configured. Optionally, the value of N is determined based on the length of the window. Optionally, a configured value is used when configuration is performed, or a predefined value or a default value is used when configuration is not performed. For example, the window length is a fixed value, for example, 1 ms or 5 ms. Alternatively, a value of the window length may be related to an SCS. Alternatively, the window length is (pre)configured from a candidate set (a unit may be a slot, a mini-slot, ms, or another time unit). For example, the set is {0.5 ms, 1 ms, 2 ms, 3 ms, 4 ms, 5 ms}. Optionally, a value included in the set may be related to an SCS. When the quantity N of resources is determined based on the window length, the quantity N further needs to be determined based on a time domain structure and a frequency domain structure of an S-SSB, and whether and how to perform TDM and/or FDM with another transmission. For example, for a half-slot S-SSB, a window length is one slot. However, because TDM needs to be performed with another transmission, the window may include only one S-SSB resource.

A value of P is predefined or (pre)configured. For example, the value of P may be fixed to 1. Alternatively, the value of P may be related to an SCS. For example, P corresponding to 15 kHz is 1. P corresponding to 30 kHz is 2. P corresponding to 60 kHz is 4. P corresponding to 120 kHz is 8. Alternatively, the value of P may be a value (pre)configured from a candidate set. For example, the candidate set is {1, 2, 4, 8}. Optionally, a value included in the set may be related to an SCS. For example, a set corresponding to 15 kHz is {1}. A set corresponding to 30 kHz is {1, 2}. A set corresponding to 60 kHz is {1, 2, 4}. Alternatively, there may be the following relationships:

FR1, SCS = 15 kHz: 1.

FR1, SCS = 30 kHz:1, 2.

FR1, SCS = 60 kHz: 1, 2, 4.

FR2, SCS = 60 kHz:1, 2, 4, 8, 16, 32.

FR2, SCS = 120 kHz:1, 2, 4, 8, 16, 32, 64.

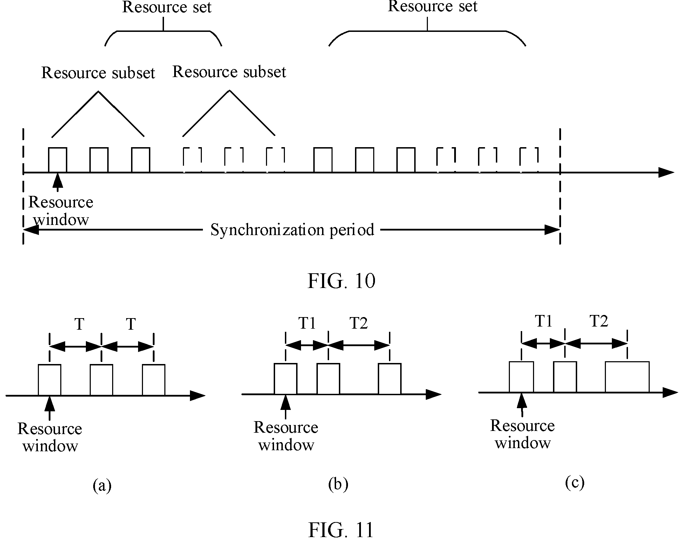

The M resource windows may be resource windows in a same resource subset. The resource subset may be one of one or more resource subsets. A quantity of resource subsets may be predefined, or may be preconfigured or configured. A quantity of resource windows included in the resource subset may be predefined, or may be preconfigured or configured. This is not limited in this embodiment of this application. The plurality of resource subsets may be resource subsets in a same resource set, or may be resource subsets in a plurality of resource sets. Different resource sets are respectively used for information receiving and sending of half-duplex UE, and different resource subsets may correspond to different UEs, to reduce congestion and interference that may be caused when a plurality of UEs send messages on a same part of resources. For example, when timing of different UEs is not aligned, or information carried in S-SSBs of different UEs is different or partially different, sending the S-SSBs on a same resource causes interference. A relationship between a resource set, a resource subset, and a resource window may be shown in FIG. 10. There may be at least one resource set in one synchronization period. The synchronization period may be a synchronization period of an S-SSB in SL-U, and the synchronization period may be predefined, preconfigured, or configured. For example, a candidate value of duration of the synchronization period may be at least one of the following: {20 ms, 40 ms, 50 ms, 60 ms, 80 ms, 100 ms, 160 ms}. Alternatively, duration of the synchronization period may be a fixed value, for example, 20 ms, 40 ms, 50 ms, 60 ms, 80 ms, 100 ms, or 160 ms. Alternatively, duration of the synchronization period may be determined based on a subcarrier spacing. It may be understood that the duration of the synchronization period may alternatively be determined based on another factor, for example, determined based on a discontinuous reception (discontinuous reception, DRX) cycle. For example, a resource window is configured at a start time period of each DRX active time (active time) or a time period before the start time period. This is not limited in embodiments of this application.

It should be understood that there may be a plurality of synchronization periods in a synchronization process in time domain, and duration of the plurality of synchronization periods may be the same. For example, lengths of synchronization period #1, synchronization period #2, and synchronization period #3 in time domain are all 40 ms. Duration of the plurality of synchronization periods may alternatively be different. For example, a length of synchronization period #1 in time domain is 40 ms, a length of synchronization period #2 in time domain is 40 ms, and a length of synchronization period #3 in time domain is 20 ms. Optionally, synchronization periods are consecutive in time domain and do not overlap. A start position of a first synchronization period may be DFN #0 or SFN #0. It should be understood that the foregoing value is merely used as an example rather than a limitation. It should be further understood that the foregoing value or set is merely used as an example rather than a limitation. For example, one or more values in the set may be selected, or all values in the set may be selected. This is not limited in this embodiment of this application.

The M resource windows may be periodic. For example, as shown in (a) in FIG. 11, a value of M is 3, the three resource windows are periodic in time domain, lengths of the resource windows are the same, and time intervals T between adjacent resource windows are also the same. In a resource subset, a start position of a 1st resource window is determined based on an offset (offset). For example, the start position of the 1st resource window may be a moment 2 ms after a time domain start position of a synchronization period to which the resource window belongs, or a moment after several slots/subframes. When the resource subset includes a plurality of resource windows, an interval (interval) between the resource windows may be predefined, or may be preconfigured, or may be configured, for example, may be an interval between start positions of adjacent resource windows. In a possible manner, different cycles may be (pre)configured for different application scenarios and UEs that have different synchronization maintenance capabilities. For example, the UE may report a capability for duration of maintaining synchronization by the UE. For example, the capability may be classified into two levels: strong and weak. Alternatively, the UE may report, from a plurality of candidate values of synchronization duration, a capability for duration of maintaining synchronization.

The M resource windows may be aperiodic. For example, as shown in (b) in FIG. 11, a value of M is 3, the three resource windows are not periodic in time domain, lengths of the resource windows are the same, and time intervals T1 and T2 between adjacent resource windows are different. Alternatively, as shown in (c) in FIG. 11, a value of M is 3, the three resource windows are not periodic in time domain, lengths of the resource windows are different, and time intervals T1 and T2 between adjacent resource windows are different. A time interval between adjacent resource windows may be a time interval between start positions of the adjacent resource windows, or may be a time interval between end positions of the adjacent resource windows, or may be an interval between a start position of a resource window and an end position of a previous resource window, or may be a time interval between predefined positions of the adjacent resource windows, for example, middle positions of the resource windows.

One resource window may include N resources. A value of N may be predefined, or may be preconfigured, or may be configured, or may be determined based on a subcarrier spacing. In other words, a quantity of resources in one resource window may be predefined, or may be preconfigured, or may be configured, or may be determined based on a subcarrier spacing.

That the first terminal apparatus determines the P resources from the N resources included in the first resource window may be: The first terminal apparatus listens, through listen before talk LBT, to a channel corresponding to the first resource window, and determines the P resources based on a listening result. In a possible manner, LBT is performed before each resource in the window. For example, LBT is sequentially performed for each resource in the window in a time domain sequence. Specifically, the first terminal apparatus may perform a channel access attempt (that is, perform LBT) before each resource. If access fails on a resource, channel access may be attempted before a subsequent resource. It should be understood that LBT may alternatively be performed before an entire window. There are two types of LBT results: A channel is busy and a channel is idle.

When a listening result for a first resource is that the channel is busy, the first terminal apparatus may perform LBT for a next resource in the first resource window, for example, a resource adjacent to the first resource. When a listening result for the resource is that the channel is idle, the resource may be selected. In other words, in the P resources determined by the first terminal apparatus, a resource whose start position is the earliest (the headmost) may be a resource on which LBT succeeds earliest (a 1st resource on which a channel is accessed) in the N resources.

The first terminal apparatus may also determine a second resource window, and send an SSB by using the second resource window.

A time domain start position of the second resource window is after a time domain end position of the first resource window. The second resource window has the following two cases:

Case 1: The second resource window is a periodic resource window or an aperiodic resource window. For example, the second resource window is a next resource window adjacent to the first resource window.

Case 2: The second resource window is an additional resource window (which may also be referred to as an extra, temporary, aperiodic, or one-shot resource window).

It should be understood that there may be one or more additional resource windows. For example, each periodic resource window (or periodic resource) may correspond to a plurality of additional resource windows (or additional resources). A length of the additional resource window may be predefined, may be preconfigured, or may be configured. A position of the additional resource window may also be predefined, preconfigured, or configured. For a resource design in the additional resource window, refer to the design in the M resource windows. Details are not described again.

The position of the additional resource window may alternatively be determined in any one of the following manners.

Manner A: The position of the additional resource window is determined based on parameter #A. Parameter #A may include at least one of the following:

position information of the periodic resource window, for example, one or more of time domain position information of the first resource window, a value of M, a synchronization period, a time interval between any adjacent resource windows in the M resource windows, an offset of a resource window relative to DFN #0, an offset of a resource window relative to a frame whose system frame number (system frame number, SFN) is #0, or an offset (offset) of a resource window relative to a time domain start position of a synchronization period to which the resource window belongs;
an offset between the additional resource window and the periodic resource window;
an interval between a plurality of additional resource windows; and
a quantity of additional resource windows, which may be, for example, a quantity of additional resource windows in each synchronization period, a quantity of additional resource windows between any adjacent periodic resource windows, or a quantity of additional resource windows corresponding to each first resource window.

Optionally, the offset between the additional resource window and the periodic resource window may be an offset between a 1st additional resource window and a corresponding periodic resource window, or an offset between each additional resource window and a corresponding periodic resource window.

Optionally, the interval between the plurality of additional resource windows may be an interval between adjacent additional resource windows in the plurality of additional resource windows, and the plurality of additional resource windows are additional resource windows corresponding to a same periodic resource window.

Parameter #A may be predefined, preconfigured, or configured, for example, indicated by a network apparatus by using RRC or PC5 RRC, or indicated in a PSBCH (for example, in a MIB-SL), or indicated in a PSCCH/PSSCH.

Manner B: The position of the additional resource window is determined based on parameter #B. Parameter #B may include at least one of the following:

a synchronization period;
an offset (offset) of the additional resource window relative to DFN #0, SFN #0, or a time domain start position of a synchronization period to which the additional resource window belongs;
an interval between a plurality of additional resource windows; and
a quantity of additional resource windows, which may be, for example, a quantity of additional resource windows in each synchronization period, or a quantity of additional resource windows between any adjacent periodic resource windows.

Optionally, the offset of the additional resource window relative to DFN #0, SFN #0, or the time domain start position of the synchronization period to which the additional resource window belongs may be an offset of a 1st additional resource window relative to DFN #0, SFN #0, or a time domain start position of a synchronization period to which the 1st additional resource window belongs, or an offset of each additional resource window relative to DFN #0, SFN #0, or a time domain start position of a synchronization period to which each additional resource window belongs.

Optionally, the interval between the plurality of additional resource windows may be an interval between adjacent additional resource windows in the plurality of additional resource windows, and the plurality of additional resource windows are additional resource windows corresponding to a same periodic resource window.

Parameter #B may be predefined, preconfigured, or configured, for example, indicated by a network apparatus by using RRC or PC5 RRC, or indicated in a PSBCH (for example, in a MIB-SL), or indicated in a PSCCH/PSSCH.

Manner C: The position of the additional resource window is determined based on parameter #C, and parameter #C may be a pattern (pattern) of the additional resource window. As shown in FIG. 11, the pattern may be a pattern in each synchronization period, or a pattern of an additional resource window between any adjacent periodic resource windows. The first terminal apparatus may determine an additional resource window in a current synchronization period based on the pattern. The pattern may be predefined or (pre)configured, for example, indicated by the network apparatus by using RRC or PC5 RRC, or indicated in a PSBCH (for example, in a MIB-SL), or indicated in a PSCCH/PSSCH.

Optionally, the additional resource window may have a plurality of patterns, and the first terminal apparatus may determine one of the plurality of patterns. For example, the plurality of patterns may be predefined or (pre)configured, for example, indicated by the network apparatus by using RRC or PC5 RRC, or indicated in a PSBCH (for example, in a MIB-SL), or indicated in a PSCCH/PSSCH. A manner of determining the pattern may be predefined or (pre)configured, for example, indicated by the network apparatus by using RRC or PC5 RRC, or indicated in a PSBCH (for example, in a MIB-SL), or indicated in a PSCCH/PSSCH.

Manner D: The position of the additional resource window is determined based on parameter #D, and parameter #D may be that an offset of the additional resource window relative to the periodic resource window is 0. In other words, a start position of the additional resource window overlaps an end position of a periodic resource window in which LBT fails. The offset 0 may be predefined or (pre)configured, for example, indicated by the network apparatus by using RRC or PC5 RRC, or indicated in a PSBCH (for example, in a MIB-SL), or indicated in a PSCCH/PSSCH.

It should be understood that parameter #A, parameter #B, parameter #C, and parameter #D are several examples of a first parameter.

It should be understood that the resource window is defined for ease of description. A concept of the resource window is not mandatory in this application, and the resource window may be directly described as a plurality of resources. Particularly, when there is one S-SSB occasion resource in each window, a concept of the window does not need to be defined. In this case, "resource window" can be replaced with "resource". For example, the periodic resource window may be referred to as a periodic resource, and the additional resource window may be referred to as an additional resource.

Optionally, that an LBT listening result is busy may be that the listening result for the first resource window is busy, or may be that listening results for the N resources in the first resource window are all busy, that is, LBT fails on all the resources in the first resource window. In this case, the first terminal apparatus may determine the second resource window in any one of the foregoing manners, and send the SSB in the second resource window. In other words, when the listening result for the first resource window is busy, or the listening results for the N resources in the first resource window are all busy, the UE may not send the S-SSB in the first resource window.

Optionally, whether the first terminal apparatus sends the SSB in the first resource window or the second resource window may be predefined or (pre)configured. This is not limited in embodiments of this application. The second resource window may also be predefined or (pre)configured.

Optionally, before determining the P resources, the first terminal apparatus may further receive indication information, where the indication information indicates whether the additional resource window is opened. For example, the network apparatus may explicitly or implicitly indicate a switch of the additional resource window to the first terminal apparatus. The implicit indication may be derivation or association based on another parameter. Alternatively, the network apparatus indicates, to the first terminal apparatus, a condition for opening or closing the additional resource window, and the first terminal apparatus determines, based on whether current communication meets the condition, whether the additional resource window is opened. Alternatively, an opened/closed state of the additional resource window may be predefined. It may be understood that, when a function of the additional resource window is enabled, the first terminal apparatus may select the additional resource window as the second resource window; or when a function of the additional resource window is disabled, the additional resource window cannot be used as a candidate of the second resource window. In other words, when the function is enabled, the SSB can be sent in the additional window only if LBT fails. When the function is disabled, the SSB is not sent in the additional window regardless of whether LBT succeeds or fails.

It may be understood that, after determining the second resource window in the foregoing case 1 or case 2, the first terminal apparatus further needs to perform LBT on a resource included in the second resource window, to determine P resources. For a procedure and a manner of determining a resource used to send the SSB in the second resource window, refer to the procedure and the manner of determining the resource in the first resource window. Details are not described again. Optionally, when one periodic window corresponds to a plurality of additional resource windows, LBT may be sequentially attempted in the additional resource windows. When LBT succeeds in an additional resource window, LBT and sending are not attempted in remaining additional windows.

In a possible implementation, regardless of whether LBT succeeds in the periodic resource window or whether sending succeeds, LBT is attempted in the additional resource window corresponding to the periodic resource window, and sending may be performed if LBT succeeds.

It should be understood that a quantity of resources included in the periodic resource window and a quantity of resources included in the corresponding additional resource window (the second resource window) are not necessarily consistent, and may be predefined or preconfigured together, or predefined or preconfigured separately.

Regardless of whether the P resources are in the first resource window or the second resource window, the P resources may be P consecutive resources in time domain. For example, P is 3, and resource #1, resource #2, and resource #3 are consecutive in time domain. Alternatively, the P resources may be P inconsecutive resources in time domain. For example, P is 3, and resource #1, resource #2, and resource #3 are inconsecutive in time domain. Specifically, there is a time interval between resource #1 and resource #2, or there is a time interval between resource #2 and resource #3. Herein, that there is a time interval between different resources may be that there is a time interval between an end position of one resource and a start position of another resource. For example, there is a time interval between an end position of resource #2 and a start position of resource #3.

The P resources may further have a quasi co-location relationship. The first terminal apparatus may determine, based on a QCL relationship ($N_{QCL}^{SSB}$) between a resource index (candidate SSB index) and an SSB, which may be a difference between candidate resource indexes having a QCL relationship, specific resources having a QCL relationship.

In a possible manner, there is a QCL relationship between resources having a same result of SSB index mod $N_{QCL}^{SSB}$, where mod is an REM operation. The SSB index may be indicated by the network apparatus in a MIB/PSBCH. Alternatively, the SSB index may be calculated by using a slot index (slot index) and a half slot indicator (half slot indicator (0, 1)) in a MIB, for example, SSB index = 2 * slot index + half slot indicator. The foregoing SSB index may be replaced with an index ($N_{DMRS}^{PSBCH}$) of a DMRS sequence transmitted in a PSBCH of a corresponding S-SSB. A value of $N_{QCL}^{SSB}$ may be predefined or (pre)configured, and the value may be one of {1, 2, 4, 8}. Optionally, the value of $N_{QCL}^{SSB}$ may alternatively be determined based on an SCS.

In another possible manner, there is a QCL relationship between resources having a same result of SSB index mod $N_{QCL}^{SSB}$. Resources having a same result of floor(SSB index mod $N_{QCL}^{SSB}$)/$N_{repetition}$ may be used to repeatedly transmit the SSB. The SSB index may be indicated by the network apparatus in a MIB/PSBCH. Alternatively, the SSB index may be calculated by using a slot index (slot index) and a half slot indicator (half slot indicator (0, 1)) in a MIB, for example, SSB index = 2 * slot index + half slot indicator. The SSB index may be replaced with $N_{DMRS}^{PSBCH}$.

In another possible manner, there is a QCL relationship between resources having a same result of floor(SSB index/$N_{repetition}$) mod ($N_{QCL}^{SSB}$/$N_{repetition}$), and resources having a same result of floor(SSB index/$N_{repetition}$) may be used to repeatedly transmit the SSB.

In the foregoing several manners, when there is no beam, $N_{QCL}^{SSB}=1$, and the formula is correspondingly degraded to excluding the parameter. When repetition is not supported, $N_{repetition}=1$, and the formula is correspondingly degraded to excluding the parameter.

The half slot indicator may be sent by the first terminal apparatus when a quantity of symbols for sending the SSB is less than or equal to 7. For example, the half slot indicator may be 1 bit, indicating a start position of the symbol for sending the SSB, for example, indicating a first half slot or a second half slot. It may be understood that a position of the S-SSB in each slot may be predefined and/or (pre)configured. For example, a start symbol of the position of the SSB in the slot is predefined and/or (pre)configured. In this way, when the S-SSB does not occupy an entire slot or a half slot (for example, four symbols), sending UE and receiving UE may determine a specific position of the SSB.

Optionally, in one resource window, a quantity of resources having a QCL relationship may be greater than P. In other words, some of resources having a QCL relationship in one resource window are used to send the SSB.

Optionally, only an example in which LBT fails on all resources included in the additional resource window in the first resource window is used for description above. The additional resource window may also be applicable to another scenario. For example, after the first terminal apparatus completes initial synchronization, when the first terminal apparatus has a communication requirement, synchronization may be triggered in advance, and a message is transmitted by using a resource in the additional resource window.

It should be understood that the resource configuration in the foregoing manner may be predefined or (pre) configured for each resource set, or may be predefined or (pre)configured at a system level, for example, predefined or (pre)configured for each carrier aggregation, or predefined or (pre)configured for each band (band), or predefined or (pre) configured for each bandwidth part (bandwidth part, BWP), or predefined or (pre)configured for each resource pool. Alternatively, the resource configuration may be a group configuration for the terminal apparatus. The group may be a communication group, for example, unicast and multicast, or the group may be a synchronization group. This is not limited in embodiments of this application.

S902: The first terminal apparatus sends a synchronization signal block to a second terminal apparatus through each of the P resources, and correspondingly, the second terminal apparatus receives the synchronization signal block.

In other words, the first terminal apparatus sends the SSB P times through the P resources. A value of P, that is, a quantity of times of sending the SSB, may be predefined, or may be preconfigured, or may be configured, or may be determined based on a subcarrier spacing. For example, an SSB repetition may be sent. Because repeated SSBs are located on different resources, the SSBs may include different timing information.

It should be understood that before sending the SSB, the first terminal apparatus further needs to determine a position of the SSB in each slot. For example, a start symbol on which the first terminal apparatus sends the SSB may be a start symbol in each slot.

Optionally, when the second resource window in S901 is an additional resource window, the first terminal apparatus further sends indication information to the second terminal apparatus, where the indication information indicates that a resource window for sending the SSB is the additional resource window, or the indication information indicates that the SSB is aperiodic (temporary). For example, 1 bit may be used for indication, and the indication information may be carried in a PSBCH, a PSSCH/PSCCH, a sidelink synchronization signal identifier (sidelink synchronization signal, SLSS ID), a sidelink synchronization sequence identifier (sidelink synchronization sequence, SLSS ID), or the like. Correspondingly, the second terminal apparatus receives the indication information.

S903: The second terminal apparatus obtains timing information and/or synchronization information based on the synchronization signal block.

In the method, the resource window includes a plurality of candidate resources to cope with a possibility of an LBT failure, and a plurality of times of SSB sending are supported, so that coverage can be enhanced. For example, the SSB is repeatedly sent. In addition, a possible multibeam direction scenario is considered, and the SSB is sent in a same beam direction through resources having a quasi co-location relationship. According to the method, a success rate of sending the SSB is improved, a success rate of synchronization is improved, and communication quality is improved.

According to the foregoing design of the SSB sending manner in time domain, a success rate of sending the SSB can be improved. An embodiment of this application provides another communication method. Communication quality can also be improved by using a design of a time-frequency structure. Details are described below.

The foregoing has described a time-frequency structure of an R16 NRV S-SSB (FIG. 8). If an S-SSB needs to be repeatedly transmitted in NRV, or S-SSBs in a plurality of different beam directions need to be continuously transmitted in FR2, duration of a gap symbol (GAP) exceeds 25 μs required by a regulation, and first-type LBT needs to be performed again in each transmission. This greatly reduces an access success rate and reduces message sending reliability. For this problem, in embodiments of this application, the following several S-SSB time-frequency structure design manners for SL-U may be proposed based on the R16 NRV S-SSB time-frequency structure or an R16 NRU SSB time-frequency structure.

Based on the R16 NRV S-SSB time-frequency structure, there are the following manners.

Manner 1: The R16 NRV S-SSB time-frequency structure is reused. Communication reliability can be improved while a time-frequency structure change is reduced as much as possible. Optionally, as shown in FIG. 11, a PSBCH occupies 12 RBs. Compared with that in the R16 NRV S-SSB time-frequency structure, the PSBCH occupies one more RB.

A last symbol reserved as GAP in a slot may exceed 16 μs or 25 μs required for channel access. Optionally, before a next S-SSB is transmitted, a part of a last symbol in a slot for sending a current S-SSB, that is, a symbol occupied by GAP, is additionally occupied to send information. The information may be a redundant bit, a padding bit, or a part of bit information of a next S-SSB.

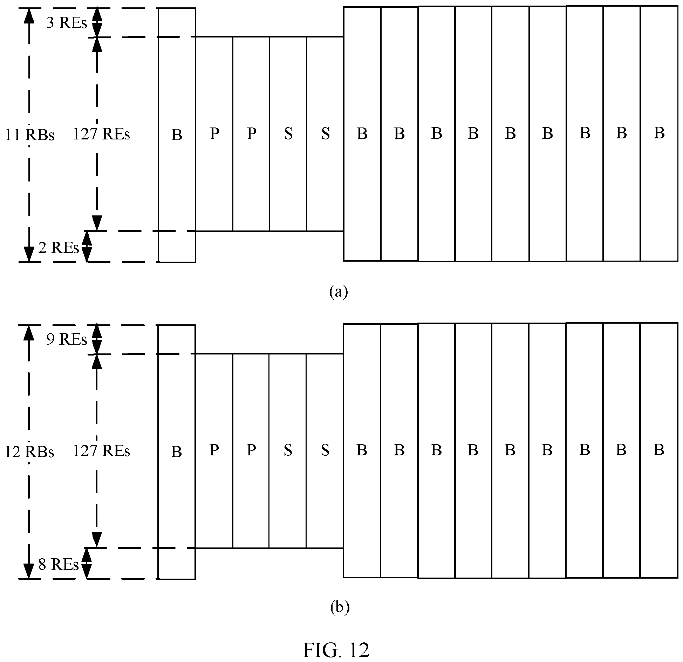

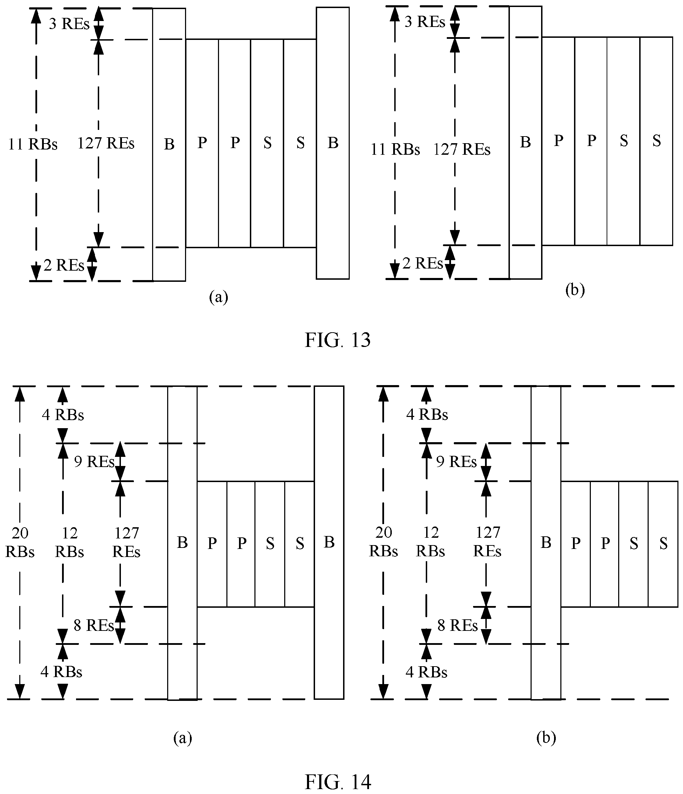

Manner 2: A PSBCH of one symbol is added in time domain. During NCP, as shown in (a) in FIG. 12, 14 symbols are occupied in time domain. During ECP, as shown in (b) in FIG. 12, 12 symbols are occupied. Optionally, as shown in (b) in FIG. 12, the PSBCH may occupy 12 RBs in frequency domain. In this manner, transmission of an SSB occupies one complete slot. If time for conversion between sending and receiving is required, transmission of a part of a last symbol of a current S-SSB or transmission of a part of a first symbol of a next S-SSB may be discarded to reserve the time for conversion between sending and receiving (GAP).

Optionally, in the foregoing manner, a first symbol (namely, symbol 0) of a slot may be used as a start symbol for the S-SSB in time domain.

In slot-based transmission, there is still room for improvement in a delay. Further, in embodiments of this application, a structure in which each S-SSB occupies a half slot (half-slot) is proposed as follows:

Manner 3: One symbol is reserved as a gap symbol (GAP). A time-frequency structure for NCP is shown in (a) in FIG. 13, and an SSB occupies six symbols. A time-frequency structure for ECP is shown in (b) in FIG. 13, and an SSB occupies five symbols, and occupies 11 RBs in frequency domain. Considering that resources of a PSBCH are insufficient after a quantity of time domain symbols is reduced, a quantity of RBs of the PSBCH may be extended in frequency domain. A time-frequency structure for NCP is shown in (a) in FIG. 14, and a PSBCH occupies 20 RBs in frequency domain. A time-frequency structure for ECP is shown in (b) in FIG. 14, and a PSBCH occupies 20 RBs in frequency domain. Optionally, the PSBCH may alternatively occupy 12 RBs in frequency domain. For example, in frequency domain, distances from an S-PSS and an S-SSS to an upper boundary and a lower boundary of the PSBCH are respectively nine REs and eight REs. For details, refer to positions of an S-PSS and an S-SSS in another 12-RB structure.

Considering that there are few high-speed scenarios in SL-U, time domain resources of the S-PSS and the S-SSS may be further reduced.

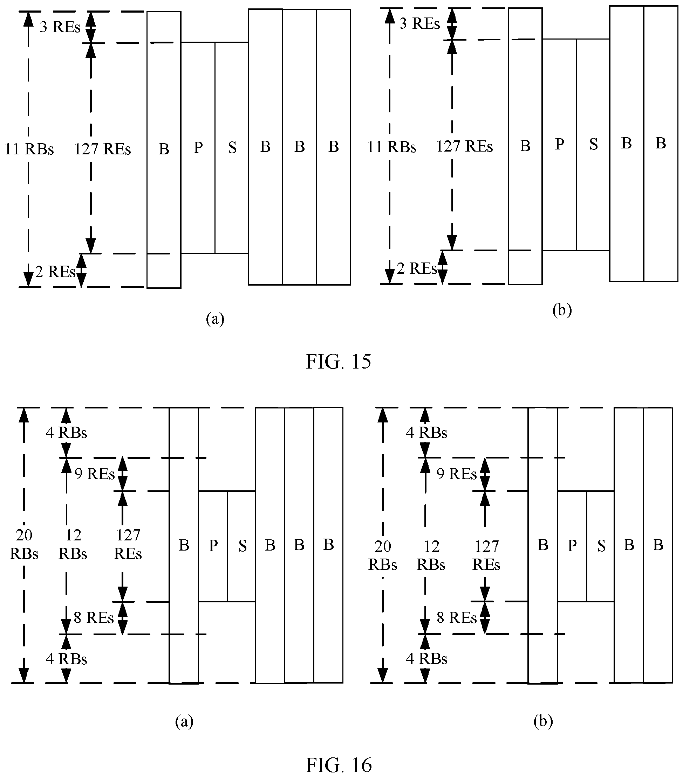

Manner 4: A time-frequency structure for NCP is shown in (a) in FIG. 15, an SSB occupies six symbols, and each of an S-PSS and an S-SSS occupies one symbol. A time-frequency structure for ECP is shown in (b) in FIG. 15, an SSB occupies five symbols, and each of an S-PSS and an S-SSS occupies one symbol, and occupies 11 RBs in frequency domain. Considering that resources of a PSBCH are insufficient after a quantity of time domain symbols is reduced, a quantity of RBs of the PSBCH may be extended in frequency domain. A time-frequency structure for NCP is shown in (a) in FIG. 16, and a PSBCH occupies 20 RBs in frequency domain. A time-frequency structure for ECP is shown in (b) in FIG. 16, and a PSBCH occupies 20 RBs in frequency domain. Optionally, the PSBCH may alternatively occupy 12 RBs in frequency domain. For example, in frequency domain, distances from an S-PSS and an S-SSS to an upper boundary and a lower boundary of the PSBCH are respectively nine REs and eight REs. For details, refer to positions of an S-PSS and an S-SSS in another 12-RB structure.

Time domain resources of the S-PSS and the S-SSS are further reduced, and resources for transmitting the PSBCH are increased, so that a PSBCH bit rate can be reduced, a transmission coverage distance can be longer, and a threshold at a demodulation end is lower, thereby reducing communication power consumption.

In manner 3 and manner 4, symbol 0 or symbol 7 may be used as a start symbol for the S-SSB in time domain.

The time-frequency structures in the foregoing manners are half-slot structures. The following provides a 4-symbol structure, and no gap symbol needs to be reserved.

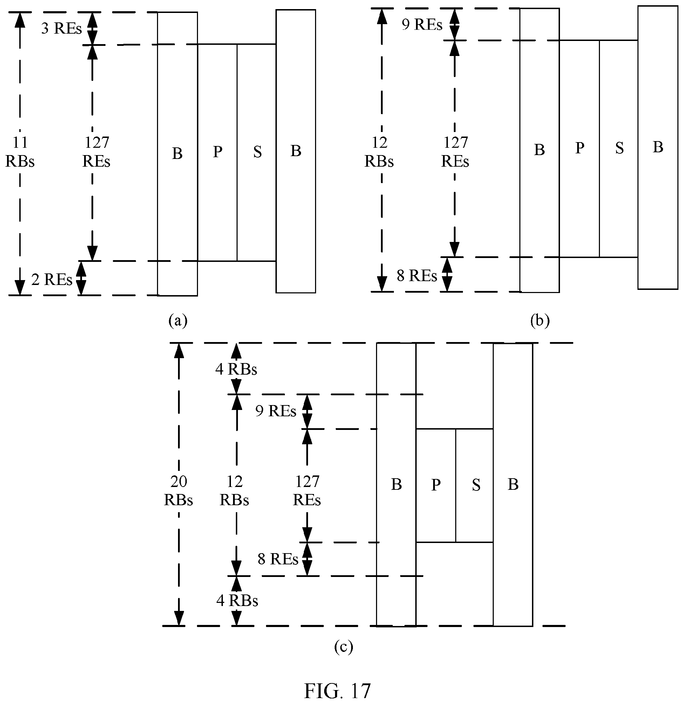

Manner 5: As shown in (a) in FIG. 17, an SSB occupies four symbols, where each of an S-PSS and an S-SSS occupies one symbol, and occupies 11 RBs in frequency domain. Considering that resources of a PSBCH are insufficient after a quantity of time domain symbols is reduced, frequency domain resources of the PSBCH may be extended. As shown in (b) in FIG. 17, an SSB occupies four symbols, where each of an S-PSS and an S-SSS occupies one symbol, and occupies 12 RBs in frequency domain. Further, as shown in (c) in FIG. 17, the PSBCH may alternatively occupy 20 RBs in frequency domain. Optionally, in this manner, symbol 0 or symbol 7 may be used as a start symbol for the S-SSB in time domain, or the start symbol may be predefined or (pre)configured.

The following describes in detail time-frequency structure design manners proposed based on the R16 NRU SSB time-frequency structure.

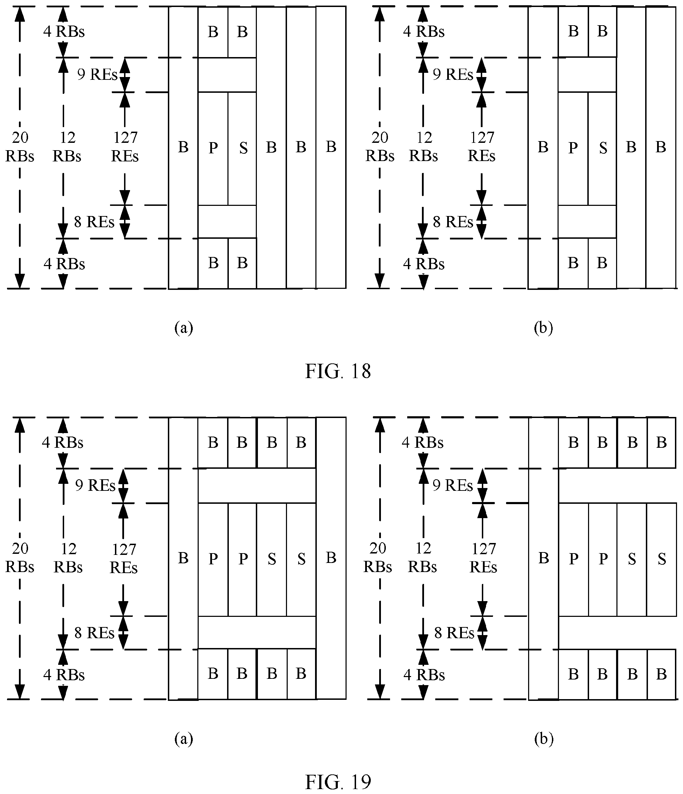

Manner 6: Because a primary synchronization signal of R16 NRU is carried in a first symbol, and the first symbol needs to be used for AGC, a position of the primary synchronization signal is moved backward. A time-frequency structure for NCP is shown in (a) in FIG. 18, an SSB occupies six symbols, and an S-PSS occupies a second symbol. A time-frequency structure for ECP is shown in (b) in FIG. 18, an SSB occupies five symbols, and an S-PSS occupies a second symbol, and occupies 20 RBs in frequency domain.

In this manner, the position of the primary synchronization signal is moved backward, to avoid that a receiving end cannot parse the primary synchronization signal or can parse only a part of the primary synchronization signal, thereby improving a transmission success rate of the primary synchronization signal, and further improving communication reliability.

Further, an S-PSS and an S-SSS may be repeatedly sent on the basis of moving the position of the primary synchronization signal backward.

Manner 7: A time-frequency structure for NCP is shown in (a) in FIG. 19, and an SSB occupies six symbols, where an S-PSS occupies a second symbol and a third symbol, and an S-SSS occupies a fourth symbol and a fifth symbol. A time-frequency structure for ECP is shown in (b) in FIG. 19, and an SSB occupies five symbols, where an S-PSS occupies a second symbol and a third symbol, an S-SSS occupies a fourth symbol and a fifth symbol, and both occupy 20 RBs in frequency domain.

To avoid a synchronization failure caused because the S-PSS is used for AGC when the S-PSS occupies a first symbol, the S-PSS may be repeatedly sent without moving the S-PSS backward. Optionally, the S-SSS may also be repeatedly sent. The following uses an example in which both the S-PSS and the S-SSS are repeatedly sent for description.

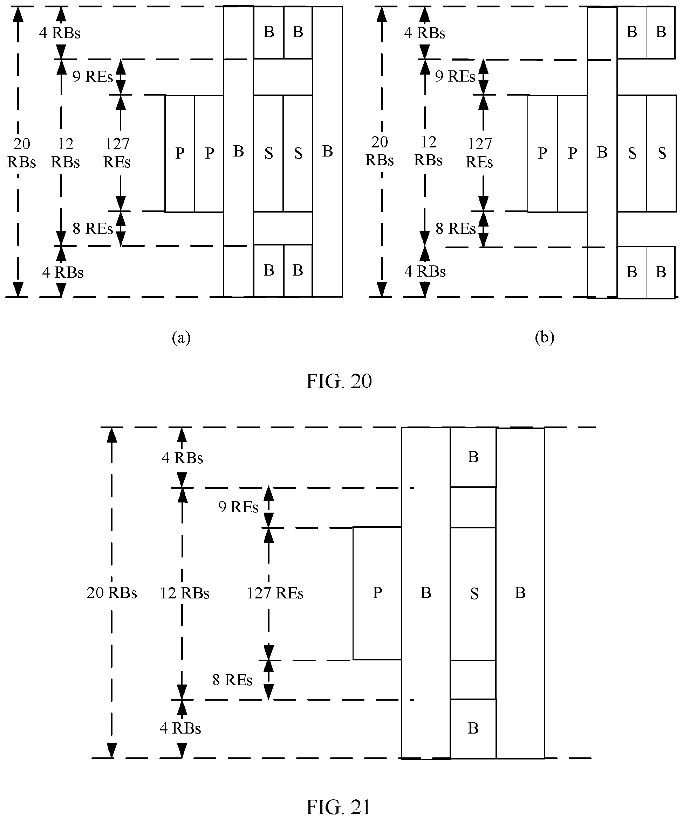

Manner 8: A time-frequency structure for NCP is shown in (a) in FIG. 20, and an SSB occupies six symbols, where an S-PSS occupies a first symbol and a second symbol, and an S-SSS occupies a fourth symbol and a fifth symbol. A time-frequency structure for ECP is shown in (b) in FIG. 20, and an SSB occupies five symbols, where an S-PSS occupies a first symbol and a second symbol, an S-SSS occupies a fourth symbol and a fifth symbol, and both occupy 20 RBs in frequency domain.

Optionally, when GAP is not reserved, one symbol at the end in time domain may be used to carry a PSBCH.

In the foregoing manner, symbol 0 or symbol 7 may be used as a start symbol for the S-SSB in time domain.

Similar to that in manner 5, the following provides a 4-symbol time-frequency structure.

Manner 9: As shown in FIG. 21, an SSB occupies four symbols, where an S-PSS occupies a first symbol, an S-SSS occupies a third symbol, and both occupy 20 RBs in frequency domain.

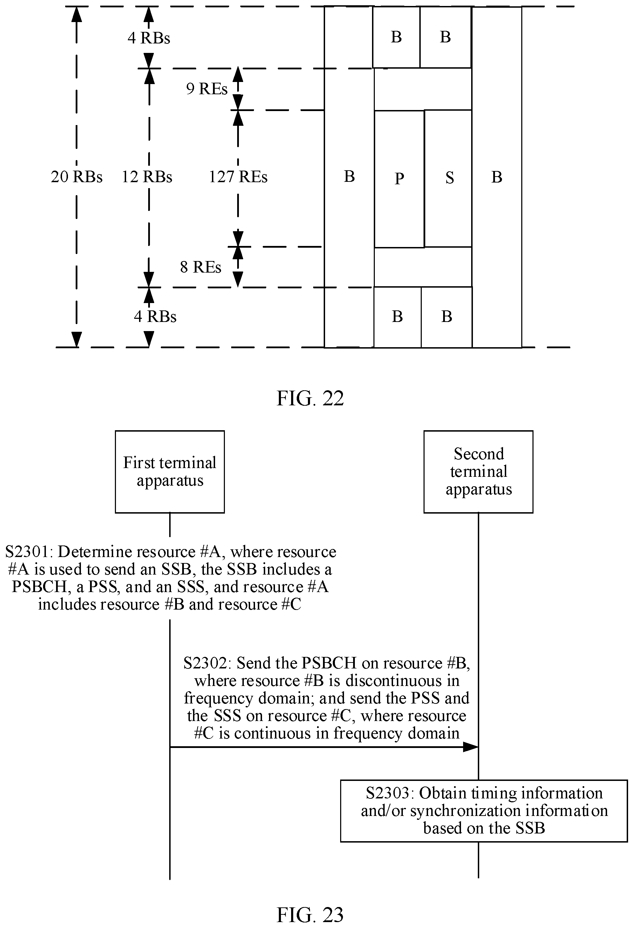

Manner 10: Considering that a primary synchronization signal of R16 NRU is carried in a first symbol, because the first symbol needs to be used for AGC, a position of the primary synchronization signal is moved backward. As shown in FIG. 22, an SSB occupies four symbols, where an S-PSS occupies a second symbol, an S-SSS occupies a third symbol, and both occupy 20 RBs in frequency domain. This can avoid a failure of parsing the primary synchronization signal by a receiving end, thereby improving communication reliability.

Optionally, in this manner, symbol 0 or symbol 7 may be used as a start symbol for the S-SSB in time domain, or the start symbol may be predefined or (pre)configured.

It should be understood that the values in the foregoing method are merely used as an example rather than a limitation. For example, when a quantity of resources is extended in frequency domain, 11 RBs may be extended to 13 RBs, 18 RBs, 20 RBs, or the like.

In the foregoing time-frequency structure, for a position of a DMRS of the PSBCH, refer to a position rule of a DMRS in Table 2 or Table 3. For example, in manner 1 to manner 10, one DMRS is carried at a position of every four REs (that is, a spacing between DMRS REs adjacent in frequency domain is three REs). For details, refer to a DMRS distribution rule in Table 3. Alternatively, in manner 1 to manner 10, one DMRS is carried at a position of every four REs (that is, a spacing between DMRS REs adjacent in frequency domain is three REs). Optionally, an offset (v) further needs to be considered. For details, refer to a DMRS distribution rule in Table 2.

It should be further understood that the foregoing manners are merely used as an example rather than a limitation. Another similar time-frequency structure design manner, for example, an increase or a decrease in a quantity of time domain resources, or another change in a position at which information such as an S-PSS is carried, should also fall within the protection scope of this application. It should be further understood that a design of the time-frequency structure in the foregoing manners may alternatively be presented in another form, for example, a pattern, a table, or a rule. This is not limited in embodiments of this application. For example, position distribution of resources in the time domain structures in FIG. 12 to FIG. 22 may alternatively be presented in a table manner. Similarly, an SSB structure of NRUu/NRU is presented in a form of Table 2, and an S-SSB structure of NRV is presented in a form of Table 3.

The foregoing describes a design of a time-frequency structure and a sending manner in time domain. The following describes in detail a sending manner in frequency domain. As shown in FIG. 23, the method may include the following steps.

S2301: A first terminal apparatus determines resource #A, where resource #A is used to send an SSB, the SSB includes a PSBCH, a PSS, and an SSS, and resource #A includes resource #B and resource #C.

Resource #A may be an unlicensed resource. The SSB may indicate synchronization information or timing information. Resource #A is an example of a fourth resource, resource #B is an example of a fifth resource, and resource #C is an example of a sixth resource.

S2302: The first terminal apparatus sends the PSBCH on resource #B, where resource #B is discontinuous in frequency domain; and the first terminal apparatus sends the PSS and the SSS on resource #C, where resource #C is continuous in frequency domain.

Resource #B is discontinuous in frequency domain, and may occupy inconsecutive RBs or REs.

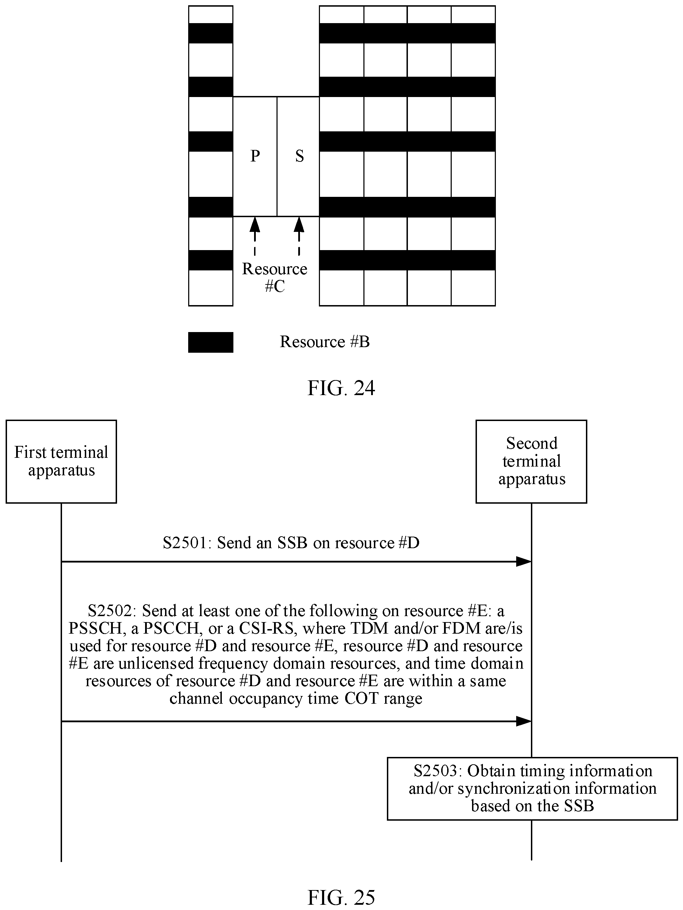

As shown in FIG. 24, resource #B is distributed in an interlaced (interlace) manner in frequency domain, and resource #C is not interlaced in frequency domain. After frequency-domain interlaced distribution is performed, a span of resource #B in frequency domain is greater than or equal to 80% of a channel bandwidth to which resource #B belongs.

In a possible manner, the first terminal apparatus may determine resource #B and/or resource #C based on at least one of a quantity of frequency domain RBs of a channel on which resource #A is located, a subcarrier spacing, or a quantity of frequency domain RBs occupied by the SSB.

For example, the quantity of frequency domain RBs of the channel on which resource #A is located is 11 PRBs, and an interlace size is Ni (that is, one PRB is actually occupied in every Ni PRBs, that is, there is an equal spacing Ni-1 between two adjacent occupied PRBs, that is, there is an equal index difference Ni between two adjacent occupied PRBs).

For SCS = 15 kHz, Ni = 10. In this case, OCB = (10 * 10 + 1) * 12 * 15 kHz = 18.18 MHz. Alternatively, Ni = 9 or 11 also meets an OCB requirement.

For SCS = 30 kHz, Ni = 5, and OCB = (5 * 10 + 1) * 12 * 30 kHz = 18.36 MHz.

For SCS = 60 kHz, there are the following several interlaced distribution manners for resources.

Ni = 2 or 3. Indexes of actually occupied PRBs are as follows:
Three PRBs correspond to Ni = 3, and eight PRBs correspond to Ni = 2, or PRB indexes are 0, 3, 6, 9, 11, 13, 15, 17, 19, 21, 23.

Eight PRBs correspond to Ni = 2, and three PRBs correspond to Ni = 3, or PRB indexes are 0, 2, 4, 6, 8, 10, 12, 14, 16, 19, 22.

Seven PRBs correspond to Ni = 2, and four PRBs correspond to Ni = 3, or PRB indexes are 0, 2, 4, 6, 8, 10, 12, 14, 17, 20, 23.

For example, the quantity of frequency domain RBs of the channel on which resource #A is located is 12 PRBs, and an interlace size is Ni.

For SCS = 15 kHz, Ni = 8. In this case, OCB = (8 * 11 + 1) * 12 * 15 kHz = 16.02 MHz meets 80% of an OCB requirement. Alternatively, Ni = 9.

For SCS = 30 kHz, Ni = 4. In this case, OCB = (4 * 11 + 1) * 12 * 30 kHz = 16.2 MHz.

For SCS = 60 kHz, Ni = 2. In this case, OCB = (2 * 11 + 1) * 12 * 60 kHz = 16.56 MHz.

For example, the quantity of frequency domain RBs of the channel on which resource #A is located is 20 PRBs, and an interlace size is Ni.

For SCS = 15 kHz, Ni = 5. In this case, OCB = (5 * 19 + 1) * 12 * 15 kHz = 17.28 MHz.

For SCS = 30 kHz, Ni = 2 or 3.

For SCS = 60 kHz, Ni = 1 or 2.

Optionally, PRBs occupied by the PSBCH in an interlaced manner in frequency domain start from a first PRB (that is, PRB #0) of the channel, and the PRBs are occupied based on the interlace size Ni. Using Ni = 5 as an example, indexes of the occupied PRBs are 0, 5, 10, 15, 20....

Optionally, based on the at least one of the quantity of frequency domain RBs of the channel on which resource #A is located, the subcarrier spacing, and the quantity of frequency domain RBs of the synchronization signal block, resource #B and/or resource #C are/is further determined based on a raster of a synchronization signal, a predefined or (pre) configured center frequency of the synchronization signal block, and a predefined or (pre)configured frequency domain position (for example, an offset relative to a highest/lowest frequency of a BWP, a resource pool, or a channel).

Optionally, for a time-frequency structure in which there is no PSBCH on a symbol of an S-PSS or an S-SSS, when SCS = 15 kHz, a quantity 127 of REs does not meet a requirement of temporarily occupying at least 2 MHz. Therefore, X REs may be reserved from the 127 REs of the S-PSS and/or the S-SSS. The X REs are distributed consecutively or at intervals. A value of X and/or positions of the X REs may be predefined or (pre)configured. Optionally, the reserved RE may be filled with redundant information or filled with 0.

Alternatively, a quantity of REs occupied by the S-PSS and/or the S-SSS may be increased, for example, extended to 134 (meeting 2 MHz). It should be understood that 134 is merely used as an example rather than a limitation.

In this manner, a frequency domain structure of the S-PSS and/or the S-SSS remains unchanged, and a filter and the like do not need to be redesigned. In addition, an increase in a frequency domain span of a synchronization reference signal may cause a decrease in frequency domain synchronization precision, and maintaining a structure helps maintain synchronization precision.

Optionally, resource #C may alternatively be discontinuous in frequency domain. In a possible manner, in frequency domain, PRB-level interlace is performed on the PSBCH of the S-SSB, and PRB-level or RE-level interlace is performed on the S-PSS/S-SSS. The PRB level is used as an example. When the S-PSS or the S-SSS is 127 REs, the S-PSS or the S-SSS occupies 12 PRBs in frequency domain, and nine REs and eight REs are respectively reserved in an upper part and a lower part. For an interlace size Mi, refer to the interlace size of the PSBCH with 12 PRBs. When the S-PSS/S-SSS is 127 REs, the S-PSS/S-SSS occupies 11 PRBs in frequency domain, and three REs and two REs are respectively reserved in an upper part and a lower part. For details, refer to the interlace size of the PSBCH with 11 PRBs. It should be understood that the interlace size is also referred to as an interlace granularity or an interlace value.

It may be understood that the interlace size Ni of the PSBCH in this manner is the same as that described above, and details are not described again.

S2303: A second terminal apparatus determines synchronization information and/or timing information based on the SSB.

In this method, the PSBCH, the S-PSS, or the S-SSS occupies frequency domain resources in an interlaced manner, so that an OCB requirement of an unlicensed resource can be met. In this way, the synchronization information is successfully transmitted, and communication reliability is improved.

To meet an OCB requirement, an embodiment of this application provides another communication manner in which an SSB and another message may be packaged for transmission. Detailed descriptions are provided below.

As shown in FIG. 25, the method may include the following steps.

S2501: A first terminal apparatus sends an SSB on resource #D, where the SSB is used for sidelink synchronization.

For example, the SSB may indicate synchronization information and/or timing information.

S2502: The first terminal apparatus sends at least one of the following on resource #E: a PSSCH, a PSCCH, or a CSI-RS, where TDM and/or FDM are/is used for resource #D and resource #E, resource #D and resource #E are unlicensed resources, and time domain resources of resource #D and resource #E are within a same channel occupancy time COT range.

Optionally, the time domain resources of resource #D and resource #E may alternatively be within a same DRS (discovery reference signal), a same DRS window, a same discovery burst, or the like. This is not limited in this embodiment of this application. Resource #D is an example of a seventh resource, and resource #E is an example of an eighth resource.

For example, TDM is used for resource #D and resource #E.

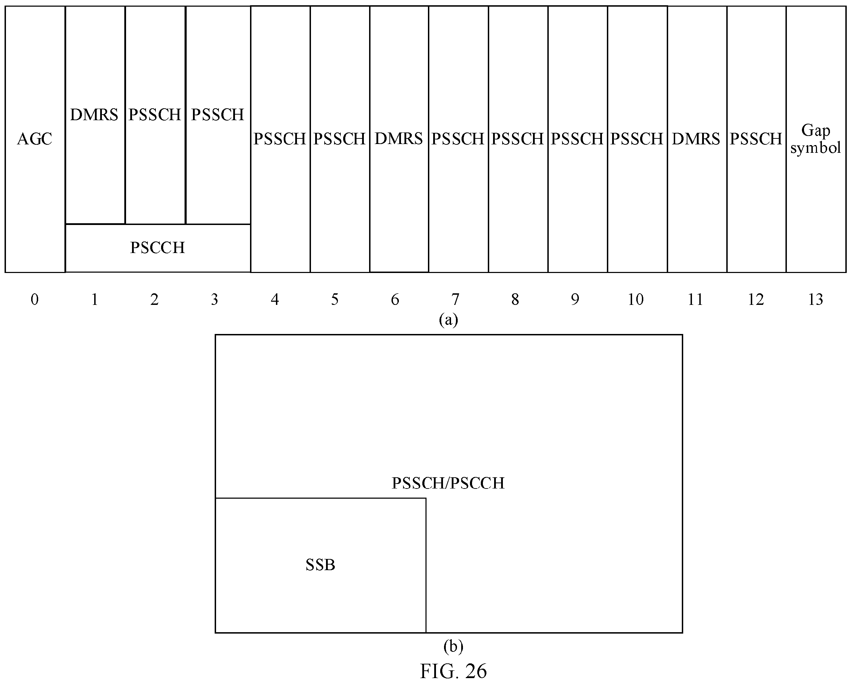

Optionally, resource #D and resource #E fully occupy one or more slots in time domain exactly. Optionally, "fully occupy" includes occupying a symbol used for AGC and/or GAP. In a possible manner, for a 7-symbol time-frequency structure or a 4-symbol time-frequency structure, for example, the half-slot (7-symbol) time-frequency structure or the 4-symbol structure in manner 1 to manner 10, a position of the S-SSB in a slot should avoid first three symbols (one symbol is used for AGC and two symbols are used for a PSCCH) or first four symbols (one symbol is used for AGC and three symbols are used for a PSCCH) of the slot. Optionally, a last symbol (GAP) may be further avoided. As shown in (a) in FIG. 26, for example, a 4-symbol S-SSB is located on symbol 7 to symbol 10, and avoids symbol 0 used for AGC, symbols 1 to 3 used to carry a PSCCH, and symbol 13 used as GAP. In this figure, the S-SSB, a DMRS, a PSSCH, the PSCCH, and the like fully occupy one slot in a TDM manner.

For example, FDM is used for resource #D and resource #E.

For example, FDM may be performed on the S-SSB and the PSSCH and/or the PSCCH. A frequency domain position of the S-SSB may be predefined or (pre)configured. For example, the S-SSB may be placed at a center frequency of a channel, or the S-SSB is placed at one end of a channel, to ensure that transmission of the PSSCH and/or the PSCCH occupies consecutive frequency domain resources. Alternatively, a frequency domain position of the S-SSB may be determined based on a frequency domain raster (raster) and/or an offset. The offset may be predefined or (pre)configured, for example, an offset relative to a highest/lowest frequency of a BWP, a resource pool, or a channel. The frequency domain raster may also be predefined or (pre)configured. For example, the frequency domain raster may be located at an edge or a center frequency of a channel (for example, 20 MHz).

Optionally, the raster may be a synchronization raster. Optionally, the offset may be an offset relative to a highest/lowest frequency of a BWP, a resource pool, or a channel.

It should be understood that, before resource #D is determined, optionally, when rate matching and/or resource mapping are/is performed for the PSCCH and/or the PSSCH, a time-frequency resource on which the S-SSB is located may be avoided. For example, rate matching and/or mapping are/is performed on only a resource that is not occupied by the S-SSB, that is, resource #E and resource #D do not overlap. In an existing mechanism, when a resource in a resource pool (resource pool) is determined, a slot in which an S-SSB is located is excluded. In this case, a PSCCH and/or a PSSCH cannot be transmitted in the slot in which the S-SSB is located, and therefore, FDM cannot be implemented. Therefore, optionally, when a resource in a resource pool (resource pool) is determined, a slot in which an S-SSB is located is not excluded. Alternatively, when rate matching and/or resource mapping are/is performed for the PSCCH and/or the PSSCH, the resource on which the S-SSB is located is not avoided, that is, resource #E and resource #D may overlap. In this case, when a resource conflict occurs between the S-SSB and the PSCCH/PSSCH, processing may be performed according to a preset conflict processing rule. The conflict processing rule is: A priority of the S-SSB is higher than that of the PSCCH and the PSSCH, and some information of the PSCCH or the PSSCH is discarded. In other words, when the resource conflict occurs between the S-SSB and the PSCCH/PSSCH, it is ensured that the S-SSB occupies a corresponding resource, and PSCCH or PSSCH information that needs to be mapped to the resource is discarded. The conflict processing rule may alternatively be: choosing to discard the S-SSB, the PSCCH, and/or the PSSCH according to a priority or a specific rule. In other words, when a resource conflict occurs between the S-SSB and the PSCCH/PSSCH, information with a higher priority occupies a corresponding resource, and other information with a lower priority on the resource is discarded. A priority of each piece of information may be predefined or (pre)configured. That is, in the foregoing several manners, a resource actually occupied by other information, for example, the PSSCH and/or the PSCCH, does not overlap a resource actually occupied by the S-SSB.

S2503: A second terminal apparatus receives the SSB, and determines synchronization information and/or timing information based on the SSB.

In this method, the S-SSB and other information, such as the PSSCH and/or the PSCCH, are packaged for transmission, so that a quantity of channel access times can be reduced, a risk of an access failure can be further avoided, and a structure of the S-SSB does not need to be modified.

It should be understood that the foregoing TDM and FDM manners may alternatively be combined with each other, that is, both TDM and FDM are used for resources occupied by the S-SSB and other information, for example, the PSSCH and/or the PSCCH. As shown in (b) in FIG. 26, both TDM and FDM are used for resources of the SSB and the PSSCH/PSCCH. Optionally, the S-SSB and the PSSCH and/or the PSCCH may be located in a same slot, or may occupy a plurality of slots. This is not limited in embodiments of this application.

An embodiment of this application provides another communication method, so that an S-SSB may be repeatedly sent in frequency domain. For example, each S-SSB is repeatedly sent in frequency domain and occupies consecutive resources, or resources occupied by different S-SSBs in frequency domain are consecutive or inconsecutive. Consecutive means that all S-SSBs that are repeated in frequency domain are consecutive in frequency domain. Inconsecutive means that it is considered to be inconsecutive as long as any two S-SSBs in all S-SSBs that are repeated in frequency domain are inconsecutive in frequency domain. It may be understood that the S-PSS and the S-SSS occupy fewer frequency domain resources than the PSBCH, and consecutive or inconsecutive herein is mainly for the PSBCH. In other words, when the PSBCH is continuous in frequency domain, it is considered to be continuous in frequency domain.

To meet an OCB requirement,

for SCS = 15 kHz, a minimum frequency domain span is 89 PRBs, and a maximum frequency domain span is 106 PRBs;
for SCS = 30 kHz, a minimum frequency domain span is 45 PRBs, and a maximum frequency domain span is 51 PRBs; and
for SCS = 60 kHz, a minimum frequency domain span is 23 PRBs, and a maximum frequency domain span is 24 PRBs.

There may be the following several cases in which the S-SSB is repeatedly sent in frequency domain.

Case 1: A quantity of frequency domain RBs is 11 PRBs.

For SCS = 15 kHz, sending is repeated nine times. Optionally, a frequency domain resource used to repeatedly send the S-SSB is continuous or discontinuous. Alternatively, sending is repeated two, three, four, five, six, seven, or eight times. Optionally, a frequency domain resource used to repeatedly send the S-SSB is discontinuous.

For SCS = 30 kHz, sending is repeated two, three, or four times. Optionally, a frequency domain resource used to repeatedly send the S-SSB is discontinuous.

For SCS = 60 kHz, sending is repeated two times. Optionally, a frequency domain resource used to repeatedly send the S-SSB is discontinuous.

Case 2: A quantity of frequency domain RBs is 12 PRBs.

For SCS = 15 kHz, sending is repeated eight times. Optionally, a frequency domain resource used to repeatedly send the S-SSB is continuous or discontinuous. Alternatively, sending is repeated two, three, four, five, six, seven, or eight times. Optionally, a frequency domain resource used to repeatedly send the S-SSB is discontinuous.

For SCS = 30 kHz, sending is repeated four times. Optionally, a frequency domain resource used to repeatedly send the S-SSB is continuous or discontinuous. Alternatively, sending is repeated two or three times. Optionally, a frequency domain resource used to repeatedly send the S-SSB is discontinuous.

For SCS = 60 kHz, sending is repeated two times. Optionally, a frequency domain resource used to repeatedly send the S-SSB is continuous.

Case 3: A quantity of frequency domain RBs is 20 PRBs.

For SCS = 15 kHz, sending is repeated five times. Optionally, a frequency domain resource used to repeatedly send the S-SSB is continuous or discontinuous. Alternatively, sending is repeated two, three, or four times. Optionally, a frequency domain resource used to repeatedly send the S-SSB is discontinuous.

For SCS = 30 kHz, sending is repeated two times. Optionally, a frequency domain resource used to repeatedly send the S-SSB is discontinuous.

In this manner, the S-SSB is repeatedly sent in frequency domain, so that coverage of the S-SSB can be enhanced while the OCB requirement is met.

Optionally, in embodiments of this application, the SSB may be sent in at least two of the following manners: frequency domain interlace, TDM/FDM, and frequency domain repeated SSB sending. Optionally, a specific sending manner may be predefined or (pre)configured, or implemented based on scheduling or based on UE. This is not limited in embodiments of this application.

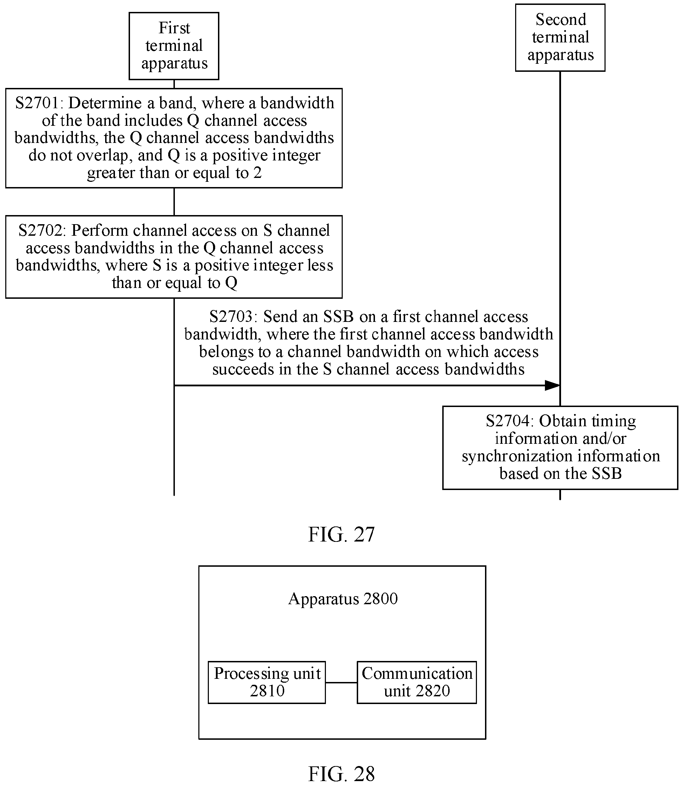

Channel access and transmission on an unlicensed spectrum are usually based on one channel. A bandwidth of one channel is usually 20 MHz. The channel may alternatively support another bandwidth, for example, one or more of 5 MHz or 10 MHz that is smaller, or a bandwidth like 40 MHz, 60 MHz, 80 MHz, or 100 MHz that is an integer multiple of 20 MHz. The following description uses an example in which a bandwidth of one channel is 20 MHz. 20 MHz is a channel access bandwidth, that is, LBT can be performed on a bandwidth of 20 MHz at most. When UE requires a high rate or a large throughput, the bandwidth of 20 MHz may be insufficient. In this case, the UE needs to support a larger bandwidth. Specifically, there may be two resource occupation manners: a large bandwidth (which may also be referred to as a large carrier or wideband) and carrier aggregation (carrier aggregation, CA). In these cases, an embodiment of this application provides another communication method, to support sending of an S-SSB on a large bandwidth, so that a synchronization requirement can be met, and an OCB requirement of a regulation can also be met. As shown in FIG. 27, the method may include the following steps.

Optionally, S2701: A first terminal apparatus determines a band, where a bandwidth of the band includes Q channel access bandwidths, the Q channel access bandwidths do not overlap, and Q is a positive integer greater than or equal to 2.

It should be understood that the band may be predefined, or may be (pre)configured. This is not limited in this embodiment of this application.

It should be further understood that the bandwidth of the band includes the Q channel access bandwidths, and the bandwidth of the band may be an integer multiple of the channel access bandwidth. For example, the channel access bandwidth is 20 MHz, and the bandwidth of the band is 40 MHz, 60 MHz, 100 MHz, or the like. Alternatively, the bandwidth of the band is not an integer multiple of the channel access bandwidth. For example, the channel access bandwidth is 20 MHz, the bandwidth of the band is 30 MHz, 50 MHz, 90 MHz, or the like, and the bandwidth of the band includes one, two, or four channel access bandwidths. This is not limited in embodiments of this application. The band may be a bandwidth of a BWP, a component carrier (component carrier, CC), or a resource pool, or may be predefined, or may be configured by a network apparatus for the first terminal apparatus.

The channel access bandwidth, the RB set, and the channel in this application may be replaced with each other. For example, a typical bandwidth is 20 MHz.

The following plurality of channel access bandwidths may also refer to a plurality of channels. The channel access bandwidth, for example, 20 MHz, may be another bandwidth. The channel access bandwidth may also be referred to as a reference bandwidth, a baseline bandwidth, or the like.

S2702: The first terminal apparatus performs channel access on S channel access bandwidths in the Q channel access bandwidths, where S is a positive integer less than or equal to Q. Optionally, a value of S is predefined or (pre) configured.

That is, the first terminal apparatus may attempt channel access (LBT) on a plurality of channel access bandwidths. For example, if the bandwidth of the band is 100 MHz, and the channel access bandwidth is 20 MHz, Q=5. If S=5, the first terminal apparatus may attempt channel access on five channel bandwidths. It should be understood that the foregoing numbers are merely used as an example rather than a limitation. Optionally, positions of the S channel access bandwidths are predefined or (pre)configured or determined according to a rule, for example, S channel access bandwidths with smallest indexes in the Q channel access bandwidths.

S2703: The first terminal apparatus sends an SSB on a first channel access bandwidth, where the first channel access bandwidth belongs to a channel bandwidth on which access succeeds in the S channel access bandwidths.

The first channel bandwidth may include at least one channel access bandwidth. For example, if the bandwidth of the band is 100 MHz, and the channel access bandwidth is 20 MHz, the first terminal apparatus may attempt channel access on five channel bandwidths. If access succeeds on three of the channel access bandwidths, the first channel bandwidth may be one, two, or all of the three channel bandwidths. This is not limited in this embodiment of this application. In other words, the first terminal apparatus may send the SSB on the channel access bandwidth on which access succeeds.

Specifically, there are the following several cases.

Case A: For a segment of continuous frequency resource, a bandwidth 100 MHz of the band is used as an example, and a channel access bandwidth of 20 MHz is used as an example. The band is divided into a plurality of channel access bandwidths.

Optionally, the channel access bandwidth used to send the SSB is selected, in the following manner, from channel access bandwidths on which access succeeds.

The channel access bandwidth is determined according to a rule or predefined or (pre)configured. For example, a channel with a smallest index in channels on which LBT succeeds is selected. Correspondingly, the first terminal apparatus sends the SSB on one channel access bandwidth. Alternatively, several, for example, three, channels with smallest indexes in channels on which LBT succeeds are selected, which may be a channel with a smallest index, a channel with a second smallest index, and a channel with a third smallest index. Correspondingly, the first terminal apparatus sends the SSB on three channel access bandwidths.

When there are a plurality of channel access bandwidths used to send the SSB, a frequency domain position may be predefined or (pre)configured by using signaling. For example, a network apparatus may indicate, by using signaling, an index of a frequency domain resource or a position of a channel access bandwidth (a channel bandwidth index, or an offset relative to a highest/lowest frequency of a band, or a position pattern (pattern)).

In a possible manner, if an S-SSB is sent on a plurality of channel access bandwidths, the S-SSB may be located at different time domain positions on the plurality of channel access bandwidths. In other words, the S-SSB is sent on a plurality of pieces of 20 MHz in a time division manner, so that a high peak-to-average ratio can be avoided.

Optionally, the band is considered as a channel. Specifically, frequency domain interlace may be performed on the S-SSB in an entire bandwidth, or TDM or FDM may be performed on the S-SSB and another transmission. For example, an occupied bandwidth after interlace exceeds 80 MHz, that is, 80% of an OCB requirement of 100 MHz is met. After channel access succeeds, the first terminal apparatus sends the S-SSB. For a specific interlace manner, a TDM manner, or an FDM manner, refer to the foregoing description. Details are not described again.

Case B: For a discontinuous frequency domain resource located in a same band (band), but each segment of continuous resource includes one or more channel access bandwidths of 20 MHz, the first terminal apparatus may perform occupation in an intra-band CA manner, that is, each segment of continuous resource is one CC. For example, on each CC, a resource used to send the S-SSB is determined according to the method described in case A, and the S-SSB is sent. For a specific method for selecting the channel access bandwidth used to send the SSB, refer to manner A and manner B in S2703. Details are not described again.

Case C: For frequency domain resources located in different bands, in each band, the SSB may be sent by using the scenarios and methods described in the foregoing two cases. Details are not described again.

S2704: A second terminal apparatus receives the SSB, and obtains timing information and/or synchronization information based on the SSB.

In this method, an OCB requirement is met in a large bandwidth, or a large bandwidth is divided into a plurality of channel access bandwidths, thereby increasing an access success rate and ensuring synchronization reliability.

The following describes in detail a manner of determining a frequency resource used for S-SSB transmission in the foregoing several manners.

For an OCB manner in which interlace is performed for a PSBCH/an S-PSS/an S-SSS, there are the following manners.

Manner ①: An RB set (that is, a ninth resource or a fifteenth resource) in which the S-SSB is located is determined based on an ARFCN, or an RB set is determined by using indication information. The indication information may include an RB set index, or the indication information indicates a channel index, and the channel is the RB set in which the S-SSB is located.

After the RB set is determined, further, in the RB set, a frequency domain resource (that is, a tenth resource or a fifth resource) used to send the S-SSB may be determined in at least one of the following manners.

The frequency domain resource used to send the S-SSB is determined based on a (pre)configured or predefined interlace index. Specifically, a PRB resource included in an interlace (namely, an interlace resource) corresponding to the interlace index is the frequency domain resource used to send the S-SSB.

Alternatively, the frequency domain resource used to send the S-SSB is determined based on a (pre)configured or predefined start RB index. It should be understood that the start RB may be understood as a first RB of the frequency domain resource for sending the S-SSB, and is an RB with a lowest frequency domain position or a smallest index in the frequency domain resource for sending the S-SSB. For example, after the start RB is determined based on the start RB index, extension to a higher frequency is performed by using a (pre)configured or predefined granularity (RB spacing, that is, a first granularity). The granularity (RB spacing) may be a spacing between start positions of two RBs, a spacing between an end position and a start position, a spacing between end positions, a spacing between predefined positions, or a spacing between center frequencies.

For example, if the start RB is RB #1 and the granularity is 2, RBs such as RB #1, RB #3, RB #5, and RB #7 may be used as frequency domain resources for transmitting the S-SSB.

Alternatively, the frequency domain resource used to send the S-SSB is determined based on a (pre)configured or predefined central RB index. For example, after a central RB is determined based on the central RB index, extension to a higher frequency and a lower frequency is performed by using a (pre)configured or predefined granularity (RB spacing). It should be understood that the central RB is an RB corresponding to a central position of the frequency domain resource used to send the S-SSB. For example, for an S-SSB with 11 PRBs, a central RB is an RB corresponding to a frequency position with an index 5, that is, a frequency position in which a sixth RB is located, in the S-SSB. For example, if the central RB is RB #5 and the granularity is 2, RBs such as RB #5, RB #3, RB #1, RB #7, and RB #9 may be used as frequency domain resources for transmitting the S-SSB.

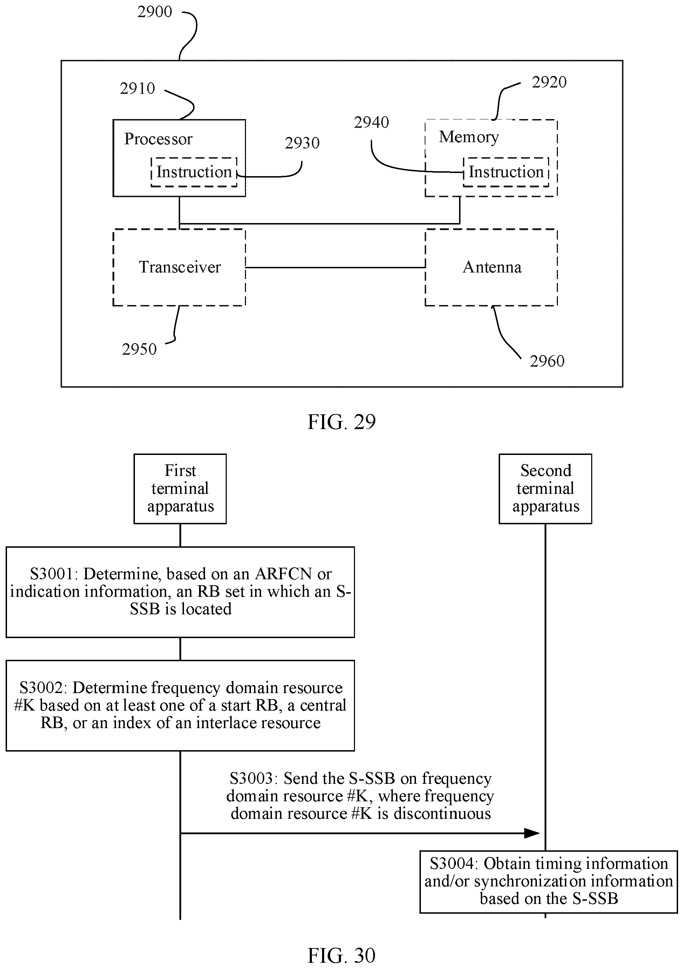

For clearer understanding of this manner, refer to FIG. 30. The first terminal apparatus determines, in the foregoing manner, the frequency domain resource for sending the S-SSB. For example, the first terminal apparatus determines, based on the ARFCN or the indication information, the RB set in which the S-SSB is located, determines the frequency domain resource based on at least one of the start RB, the central RB, and the index of the interlace resource, and sends the S-SSB on the frequency domain resource in an uplink manner. The second terminal apparatus receives the S-SSB, and obtains the timing information and/or the synchronization information based on the S-SSB.

Manner ②: The frequency domain resource (that is, a tenth resource or a fifth resource) used to send the S-SSB is determined based on an ARFCN.

For example, the ARFCN indicates a center frequency of the S-SSB. For example, for a subcarrier position, the center frequency of the S-SSB is a position of subcarrier index 66.

Optionally, an RB to which the frequency indicated by the ARFCN belongs is used as a central RB, and then extension to a higher frequency and a lower frequency is performed by using a (preconfigured) or predefined granularity (that is, a first granularity, which is configurable), to determine the frequency domain resource used to send the S-SSB. For example, the ARFCN indicates frequency A, an RB to which frequency A belongs is RB #7, and the granularity is assumed to be 3. In this case, RBs such as RB #1, RB #4, and RB #10 may be used to send the S-SSB. It should be understood that these frequency domain resources may be determined based on a frequency domain range of the RB set or a frequency domain position of a guard band, that is, these frequency domain resources do not exceed the frequency domain range of the RB set, or boundaries of these frequency domain resources do not exceed the frequency domain position of the guard band.

Optionally, a PRB included in an interlace to which the frequency indicated by the ARFCN belongs is determined as the frequency domain resource for sending the S-SSB. For example, the ARFCN indicates frequency A, an interlace to which frequency A belongs is interlace #A, and interlace #A includes PRB #1, PRB #7, PRB #13, PRB #19, and the like. In this case, PRB #1, PRB #7, PRB #13, PRB #19, and the like may be used as frequency domain resources for sending the S-SSB.

For an OCB manner in which a PSBCH interlace or an S-PSS/S-SSS is continuous in frequency domain, refer to the following.

A resource of the S-PSS/S-SSS is determined based on an ARFCN. For example, the ARFCN indicates a center frequency. For a subcarrier position, the center frequency corresponds to subcarrier index 66 of the S-SSB, or subcarrier index 64 of the S-PSS/S-SSS.

For a transmission resource of the PSBCH, refer to the descriptions of the foregoing manner ① and manner ②. Details are not described again.

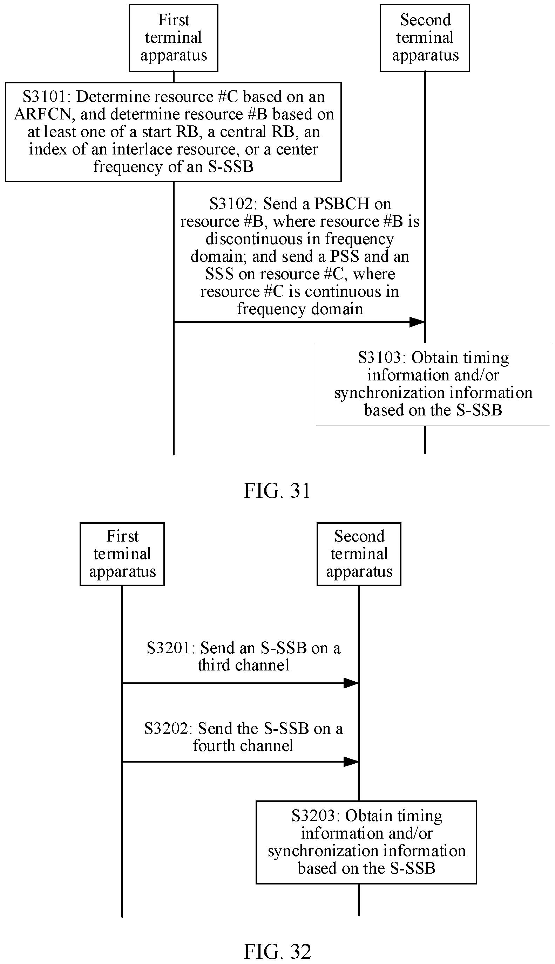

For clearer understanding of this manner, refer to FIG. 31. The first terminal apparatus determines, in the foregoing manner, the frequency domain resource for sending the S-SSB. For example, the first terminal apparatus determines the resource (for example, resource #C described above) of the S-PSS/S-SSS based on the ARFCN, determines the resource (for example, resource #B described above) of the PSBCH based on at least one of the start RB, the central RB, the index of the interlace resource, or the center frequency of the S-SSB, and sends the S-SSB on the frequency domain resource in an uplink manner. The second terminal apparatus receives the S-SSB, and obtains the timing information and/or the synchronization information based on the S-SSB.

For an OCB manner in which the S-SSB is repeatedly sent in frequency domain, there are the following manners.

Manner #A: An RB set (that is, a twelfth resource) in which the S-SSB is located is determined based on an ARFCN, or an RB set is determined by using an RB set index or a channel index. The channel is the RB set in which the S-SSB is located.

After the RB set is determined, further, in the RB set, a frequency domain resource (that is, an eleventh resource) used to send the S-SSB may be determined in at least one of the following manners.

A PRB resource used to transmit the S-SSB is determined based on at least one of the following that is (pre) configured or predefined:

a start PRB index or a central PRB index of a first S-SSB; or
a start PRB index or a central PRB index of each S-SSB; or
a start PRB index or a central PRB index of an intermediate S-SSB; or
a quantity (for example, V) of repetitions of the S-SSB in frequency domain, and a spacing between two adjacent S-SSBs in frequency domain, where the spacing between the two adjacent S-SSBs may be a quantity of RBs between start positions, or a quantity of RBs between an end position and a start position, or a quantity of RBs between end positions, or a quantity of RBs between predefined positions, or a quantity of RBs between center frequencies of a lower-frequency S-SSB and a higher-frequency S-SSB in the two adjacent S-SSBs, the start position is a position with a lowest frequency, and the end position is a position with a highest frequency.

A first synchronization signal block may be the first S-SSB, or may be the intermediate S-SSB, or may be the last S-SSB. Herein, the first S-SSB, the intermediate S-SSB, and the last S-SSB may be determined based on frequency positions. For example, the first S-SSB is an S-SSB with a lowest frequency domain position.

For example, a frequency domain resource of each S-SSB is determined based on the start PRB index or the central PRB index, the spacing, the quantity of repetitions of the S-SSB, and the like; or a frequency domain resource of the intermediate S-SSB is first determined, and then one S-SSB is sent at each of two ends of the frequency range of the RB set. For example, 11 consecutive RBs are determined from a lowest RB in the RB set to a higher frequency, and 11 consecutive RBs are determined from a highest RB in the RB set to a lower frequency, which are respectively used to send the other two S-SSBs.

Manner #B: A frequency domain resource of each S-SSB is determined based on an ARFCN.

For example, the ARFCN indicates a center frequency of the first S-SSB or a central S-SSB. A subcarrier position is used as an example, that is, a position of subcarrier index 66, or a position of subcarrier index 64 of the S-PSS/S-SSS.

A PRB resource used to transmit the S-SSB is determined based on at least one of a (pre)configured or predefined quantity of repetitions of the S-SSB in frequency domain and a quantity of RBs between two adjacent S-SSBs in frequency domain.

It should be understood that repeatedly sending the S-SSB may include: The S-SSB is completely repeated in frequency domain; or the S-PSS/S-SSS is not repeated, and the PSBCH is repeated in frequency domain. For a solution in which the S-SSB is completely repeated in frequency domain, a resource of the S-SSB is determined in the foregoing manner #A or manner #B. For a manner in which the S-PSS/S-SSS is not repeated and the PSBCH is repeated in frequency domain, a frequency resource of the S-PSS/S-SSS is determined based on the ARFCN or the central PRB, and a repetition resource of the PSBCH in frequency domain is determined based on the foregoing manner #A or manner #B. For a manner of determining the frequency resource of the S-PSS/S-SSS based on the ARFCN or the central PRB, refer to the descriptions of the foregoing manner ① and manner ②. Details are not described again.

It should be further understood that the manner of determining the frequency domain resource used to repeatedly send the S-SSB herein is applicable to the foregoing solution of repeatedly sending the S-SSB.

In the foregoing OCB manner in which interlace is performed for the PSBCH/S-PSS/S-SSS, the OCB manner in which the PSBCH interlace or the S-PSS/S-SSS is continuous in frequency domain, and the OCB manner in which the S-SSB is repeatedly sent in frequency domain, if a part or all of the determined frequency domain resource for S-SSB transmission is located in a guard band (guard band), S-SSB transmission on a frequency domain resource (PRB) located in the guard band (guard band) is discarded.

In the foregoing OCB manner in which interlace is performed for the PSBCH/S-PSS/S-SSS and the PSBCH interlace manner, if a part or all of the determined frequency domain resource for S-SSB transmission is located in a guard band (guard band), S-SSB transmission on a frequency domain resource (PRB) located in the guard band (guard band) may be discarded. Optionally, the discarded S-SSB transmission is transmitted through a resource on another interlace (for example, an interlace with an index +1 or -1 or a predefined or preconfigured interlace). For example, the S-SSB may be transmitted by using one or more lowest RBs in the another interlace of the RB set other than the guard band. It may be understood that, discarding transmission of the PRB in the guard band and transmitting the discarded part in another interlace may alternatively be moving or mapping transmission of the PRB in the guard band to the another interlace for transmission.

Optionally, to avoid a conflict between S-SSB transmission and the guard band (guard band), a conservative manner is used. That is, it is assumed that each RB set has only 100 PRBs when a 15 kHz SCS is used, and each RB set has only 50 PRBs when a 30 kHz SCS is used. Optionally, it is assumed that a center frequency or a central PRB of the 100 PRBs or 50 PRBs is a center frequency or a central PRB of 20 MHz in which the RB set is located. A resource used to transmit the S-SSB is determined in only the conservative resource range.

The interlace resource may be occupied in a comb (comb) form. For example, for a 15 kHz SCS, a granularity for occupying a PRB is nine PRBs, that is, one PRB is occupied every nine PRBs. In this case, 91 PRBs meet an OCB requirement.

Alternatively, interlace occupation defined by data: A total of 11 PRBs: 10 PRBs in 100 PRBs of one predefined or preconfigured interlace and one PRB (for example, a lowest PRB in an RB set) of another interlace (the foregoing interlace has an index +1 or -1, or is predefined or preconfigured), are occupied to send the S-SSB.

The S-SSB may be repeatedly sent on the determined frequency domain resource. For details, refer to the foregoing manner of repeatedly sending the S-SSB in frequency domain and the foregoing manner of determining the frequency domain resource for repeatedly sending the S-SSB. Details are not described herein again.

Optionally, when a total quantity of PRBs is an odd number (indexes 0 to N), a central PRB is a ["(total quantity + 1)/2"]$^{th}$ PRB, or a PRB whose index is "(total quantity - 1)/2". It may be understood that "(total quantity + 1)/2" is equivalent to "ceil(total quantity/2)", and "(total quantity - 1)/2" is equivalent to "floor(total quantity/2)".

Optionally, when a total quantity of PRBs is an even number (indexes 0 to N), a central PRB is a ["total quantity/2"]$^{th}$ or ["total quantity/2 + 1"]$^{th}$ PRB, or a PRB whose index is "total quantity/2 - 1" or "total quantity/2". It may be understood that "total quantity/2" is equivalent to "ceil(total quantity/2)" or "floor(total quantity/2)", "total quantity/2 + 1" is equivalent to ceil[(total quantity + 1)/2], and "total quantity/2 - 1" is equivalent to floor[(total quantity - 1)/2].

In time domain, the S-SSB is transmitted in only an S-SSB slot in time domain, and is transmitted based on only a (pre)configured or predefined resource in frequency domain. The PSSCH/PSCCH/PSFCH or the like cannot be transmitted in the S-SSB slot. However, when a resource pool includes a plurality of RB sets (or referred to as channels), if the S-SSB is transmitted in only one of the RB sets, COT channel occupancy time crosses an S-SSB slot in another RB set, and no transmission is sent in the S-SSB slot, the COT is interrupted/lost, and data transmission after the S-SSB slot cannot be sent. In view of this, this application provides a communication method, to avoid a COT interruption/loss, to improve communication reliability, thereby further improving an SL-U synchronization success rate, and improving communication quality.

The following uses an example in which the UE is a terminal apparatus for description.

Initial UE of COT (that is, an owner of the COT) and UE that sends an S-SSB may be same UE or different UEs. To ensure transmission continuity in this case, the following describes a manner of transmitting the S-SSB in time domain.

In a possible implementation, a resource for sending the S-SSB is determined based on the COT.

Manner (1): The UE always additionally sends the S-SSB in an RB set(s) (for example, a fourth channel) in which the COT is located in an S-SSB slot (that is, a first slot) that the initial COT of the UE crosses. It may be understood that, regardless of whether receiving/sending needs to be performed based on a synchronization procedure, the S-SSB needs to be sent. The additional sending means that in addition to sending the S-SSB on a (pre)configured or predefined RB set (that is, a third channel) corresponding to the S-SSB slot, the UE further sends the S-SSB on a plurality of other RB sets corresponding to the COT.

There is a possibility that the third channel and the fourth channel overlap, and the S-SSB is sent only once when the third channel and the fourth channel overlap. For example, the third channel includes channel 1, and the fourth channel includes channel 1 and channel 2. In this case, sending is performed on channel 1 and channel 2, and sending does not need to be performed twice on channel 1. This is equivalent to obtaining a union set of the third channel and the fourth channel.

For clearer understanding of this manner, refer to FIG. 32. The first terminal apparatus sends the S-SSB on the third channel in the first slot, and sends the S-SSB on the fourth channel in the first slot. The second terminal apparatus receives the S-SSB, and obtains the timing information and/or the synchronization information based on the S-SSB.

Manner (2): In an S-SSB slot, the UE sends the S-SSB on a (pre)configured or predefined RB set, and if the S-SSB slot is in the initial COT of the UE, the UE additionally sends the S-SSB on an RB set(s) (a fourth channel) of the initial COT of the UE. Optionally, the S-SSB slot is a slot in which the UE needs to send the S-SSB based on a synchronization procedure. Different from manner (1), in manner (2), the UE is not forced to additionally send the S-SSB. For example, when the UE needs to receive or send other information on an RB set, the UE does not need to send the S-SSB on the RB set.

Manner (3): In an S-SSB slot, the UE sends the S-SSB on a (pre)configured or predefined RB set; if the S-SSB slot is in the initial COT of the UE, the UE additionally sends the S-SSB on an RB set(s) of the initial COT of the UE; and if the S-SSB slot is in initial COT of other UE, optionally, the UE always additionally sends the S-SSB on an RB set(s) (for example, a fifth channel) of the initial COT of the other UE.

Other UE of the initial COT, for example, UE 2, uses 1 bit (that is, an example of second indication information) to indicate whether to share an S-SSB slot of the COT, and/or indicate whether other UE that needs to perform sending in the S-SSB slot needs to additionally send the S-SSB on an RB set(s) in which the COT is located. When the indication is 1, the other UE needs to additionally send the S-SSB on an RB set(s) (for example, a fifth channel) in which the COT is located.

For example, if UE 2 sends indication information to UE 1, and the indication information indicates that UE 1 needs to additionally send an S-SSB on an RB set(s) corresponding to COT, UE 1 needs to additionally send the S-SSB on the RB set(s) corresponding to the COT. Alternatively, if the indication information indicates that an S-SSB slot in the COT is shared, UE 1 sends the S-SSB in the slot.

Optionally, for any one of manners (1), (2), and (3), if the (pre)configured or predefined RB set, the RB set(s) of the initial COT of the UE, and the RB set(s) of the initial COT of the other UE have an intersection or include a same RB set(s), the UE should finally send the S-SSB in an RB set(s) included in a union set of the (pre)configured or predefined RB set, the RB set(s) of the initial COT of the UE, and the RB set(s) of initial COT of the other UE.

It may be understood that the RB set(s) of the COT is an RB set(s) in which the COT is located, or an RB set(s) occupied or included in the COT.

Manner (4): Each UE sends the S-SSB on an RB set determined according to a preset rule, so that there is UE transmitting the S-SSB in each RB set.

For example, the preset rule is: determining the RB set based on an SLSS ID.

For example, RB set index = SLSS ID mod total quantity of RB sets.

Alternatively, different SSID ranges correspond to different RB sets, for example, RB set index = floor(SLSS ID mod ceil(total quantity of SLSS IDs/total quantity of RB sets)).

Optionally, the SLSS ID may alternatively be a UE ID, or other identification information related to UE or synchronization.

Manner (5): The UE transmits the S-SSB on each RB set.

In the foregoing manner (1) to manner (5), the UE may determine, based on received reservation information of SCI 1-A or COT sharing indication information, whether other UE performs transmission on the RB set(s).

Optionally, for an RB set, when an S-SSB slot is located in COT on the RB set, the UE transmits the S-SSB on the RB set of the COT, and at least one of the following conditions needs to be met: The S-SSB slot is not a last slot of the COT; and the S-SSB slot is not a first slot of the COT.

For a predefined or preconfigured RB set, a frequency domain resource used to transmit an S-SSB in the RB set is determined based on the foregoing manner of determining a frequency domain resource, for example, based on an ARFCN. The S-SSB may be transmitted on another RB set based on a predefined or (pre)configured frequency domain resource. For example, transmission is performed by using a predefined or preconfigured interlace(s) or PRB(s) or by using a frequency domain resource based on a predefined or preconfigured frequency domain pattern.

Currently, three sets of synchronization resources resource1/2/3 (in time domain) may be configured in total. These resources may be used by UE to send or receive an S-SSB or may not be used for sending or receiving. The three sets of synchronization resources resource1/2/3 are sl-SSB-TimeAllocation1, sl-SSB-TimeAllocation2, and sl-SSB-TimeAllocation3 respectively. A resource included in resource1/2/3 may be referred to as an S-SSB occasion, an S-SSB slot, an S-SSB resource, or the like. A time domain resource used to send the S-SSB is related to a synchronization type.

For example, Case 1: If UE is synchronized with a base station, and one resource in resource1 and resource2 is selected to send the S-SSB, and another resource and resource3 are not used for sending or receiving.

Case 2: UE is synchronized with a GNSS, the S-SSB is sent on resource3, and resource1 and resource2 are not used for sending or receiving.

Case 3: UE is synchronized with other reference UE, one resource in resource1 and resource2 is used for sending, the other resource in resource1 and resource2 is used for receiving, and resource3 is not used for sending or receiving.

However, from a perspective of a system, it cannot be ensured that there is always UE sending the S-SSB on resource1/2/3. Therefore, as long as an S-SSB occasion is in COT in time domain, regardless of a single RB set or a plurality of RB sets, there may be a case in which no UE sends the S-SSB and consequently a COT interruption is caused. For resource1 and resource2 in case 1 and case 3, considering that there is a distributed system on sidelink, it is generally considered that there is always UE performing transmission on the S-SSB occasion. Therefore, resource3 in case 1 and case 3, and case 2 are mainly considered. In view of this, this application provides a communication method. The method can avoid a COT interruption, to improve communication reliability, thereby further improving an SL-U synchronization success rate, and helping improve communication quality.

Possible communication solutions include the following.

Solution 1: For UE 1 of initial COT, if a GNSS is used as a synchronization reference source, UE 1 additionally sends the S-SSB on resource1 and resource2. Specifically, a time domain resource used by UE 1 to send the S-SSB is resource1 and resource2 in the COT. Optionally, the S-SSB needs to be sent on resource1 and resource2 only when the following condition is met: resource3 is not configured.

Solution 2: For UE 1 of initial COT, if a base station or other reference UE is used as a synchronization reference source, UE 1 additionally sends the S-SSB on resource3.

Solution 3: UE 1 of initial COT indicates, in 1st stage SCI, 2nd stage SCI, or a MAC CE, whether other UE is required to transmit the S-SSB on an S-SSB occasion in the COT. Optionally, the other UE is UE that does not send the S-SSB on the S-SSB occasion originally. Optionally, if the resource is resource1 or resource2, other UE synchronized with a GNSS additionally sends the S-SSB on the resource; and/or if the resource is resource3, other UE synchronized with a base station or other reference UE additionally sends the S-SSB on the resource.

Considering that the COT may include two or three resources in resource1/2/3, optionally, UE 1 may indicate, in 1st stage SCI, 2nd stage SCI, or a MAC CE, whether other UE sends the S-SSB on an S-SSB resource in the COT, and/or one or more resources for sending the S-SSB. For example, 2 bits or 3 bits are used for indication in the 1st stage SCI, the 2nd stage SCI, or the MAC CE, which respectively correspond to a case in which only resource1/2 is configured and a case in which resource1/2/3 is configured. Specifically, a bitmap may be used for indication, and each bit corresponds to one type of resource; or a status value of 2 or 3 bits is used for indication. It should be understood that a quantity of bits included in the indication information used to indicate the resource used by the other UE to send the S-SSB may be predefined or preconfigured, or may be determined based on a configuration of resource1/2/3. For example, if resource1/2 is configured, and resource3 is not configured, 2 bits are used; or if resource1/2/3 is configured, 3 bits are used.

For example, for indication by using a bitmap, each bit corresponds to one type of resource, and 3 bits respectively correspond to resource1/2/3. If a bit value is 1, it indicates that other UE is indicated to send the S-SSB on an S-SSB resource of a corresponding resource in the COT; or if a bit value is 0, it indicates that other UE does not need to send the S-SSB on an S-SSB resource of resource1 in the COT.

For example, for indication by using a status value, 000, 001, 010, 011, 100, 101, 110 and 111 of 3 bits respectively indicate the following cases of whether other UE on resource1/2/3 needs to send the S-SSB on an S-SSB resource of a corresponding resource in the COT: no no no, no no yes, no yes no, no yes yes, yes no no, yes no yes, yes yes no, and yes yes yes.

Optionally, for resource1/2/3, if the COT does not include this type of resource, a bit or a status value corresponding to the resource is no or 0 by default, that is, other UE does not need to send the S-SSB on an S-SSB resource of a corresponding resource in the COT.

Considering that there may be two types of S-SSB resources: legacy S-SSB occasion(s) and additional S-SSB occasion(s), optionally, 2 to 3 bits indicate whether other UE sends the S-SSB on an S-SSB resource of a corresponding resource in the COT on resource1/2/3 of the legacy S-SSB occasion(s), and 2 to 3 other bits indicate whether other UE sends the S-SSB on an S-SSB resource of a corresponding resource in the COT on resource1/2/3 of the corresponding additional S-SSB occasion(s). Optionally, the additional S-SSB occasion(s) is located in a resource pool, or the legacy S-SSB occasion(s) is excluded from the resource pool.

In the foregoing manner, a time domain resource is determined, and a corresponding frequency domain resource may be an RB set(s) included in the COT and/or an RB set(s) determined based on the foregoing manner such as predefinition or preconfiguration or the SLSS ID. Optionally, other UE should transmit the S-SSB on each RB set. Optionally, an OCB requirement may be met on each RB set in any one of the foregoing manners.

In any embodiment of this application, optionally, an ARFCN, an RB set index, and a channel index are predefined or preconfigured. All parameters in this application may be predefined or preconfigured.

Optionally, a resource block (resource block, RB) and a physical resource block (physical resource block, PRB) may be replaced with each other in the entire specification.

Explanations of nouns, terms, concepts, and definitions mentioned in this application are not only applicable to the mentioned positions, but should be applicable to any embodiment of this application.

It should be further understood that, in the foregoing embodiments, LBT is used as an example of a channel listening manner and a channel access manner of a terminal apparatus. However, embodiments of this application are not limited thereto. For example, the terminal apparatus may access a channel after a period of time indicated by a network apparatus, or predefined by the network apparatus and the terminal device, or autonomously determined by the terminal device.

It should be further understood that embodiments of this application are described by using sidelink synchronization or sidelink transmission applicable to an unlicensed resource, for example, an unlicensed spectrum, as an example, but this is merely used as an example instead of a limitation. For example, the solutions in embodiments of this application may also be applied to a licensed resource. The solutions in embodiments of this application are also applicable to non-SL synchronization, for example, communication between UE and a base station in NR Uu or NRU.

Embodiments described in this specification may be independent solutions, or may be combined based on internal logic. All these solutions fall within the protection scope of this application. It should be understood that the steps in the foregoing embodiments are merely intended to clearly describe the technical solutions of embodiments, and a sequence of performing the steps is not limited.

In the foregoing embodiments provided in this application, the method provided in embodiments of this application is described from a perspective of interaction between devices. To implement functions in the method provided in the foregoing embodiments of this application, the network device or the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, division into the modules is an example, and is merely logical function division. There may be another division manner in actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

The following describes in detail a communication apparatus provided in embodiments of this application with reference to FIG. 28 and FIG. 29. It should be understood that descriptions of apparatus embodiments correspond to the descriptions of the method embodiments. Therefore, for content that is not described in detail, refer to the method embodiments. For brevity, details are not described herein again.

Same as the foregoing concept, as shown in FIG. 28, an embodiment of this application further provides an apparatus 2800, configured to implement a function of the session management function network element in the foregoing method. For example, the apparatus may be a software module or a chip system. In this embodiment of this application, the chip system may include a chip, or may include a chip and another discrete component. The apparatus 2800 may include a processing unit 2810 and a communication unit 2820.

In this embodiment of this application, the communication unit may also be referred to as a transceiver unit, and may include a sending unit and/or a receiving unit, which are respectively configured to perform steps of sending and receiving by the session management function network element in the foregoing method embodiments.

The communication unit may also be referred to as a transceiver, a transceiver machine, a transceiver apparatus, or the like. The processing unit may also be referred to as a processor, a processing board, a processing module, a processing apparatus, or the like. Optionally, a component that is in the communication unit 2820 and that is configured to implement a receiving function may be considered as a receiving unit, and a component that is in the communication unit 2820 and that is configured to implement a sending function may be considered as a sending unit. In other words, the communication unit 2820 includes the receiving unit and the sending unit. The communication unit sometimes may also be referred to as a transceiver machine, a transceiver, an interface circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

When the communication apparatus 2800 performs the function of the first terminal apparatus in the procedure shown in any one of FIG. 5 to FIG. 15 in the foregoing embodiments,

the communication unit may be configured to send an SSB; and
the processing unit may be configured to perform an LBT process and/or preconfigure a sidelink unlicensed resource, or the like.

When the communication apparatus 2800 performs the function of the second terminal apparatus in the procedure shown in any one of FIG. 9 to FIG. 27 in the foregoing embodiments,

the communication unit may be configured to receive an SSB; and
the processing unit may be configured to parse the SSB to obtain synchronization information and/or timing information.

When the communication apparatus 2800 performs the function of the network apparatus in the procedure shown in any one of FIG. 9 to FIG. 27 in the foregoing embodiments,

the communication unit may send signaling, to configure a time-frequency resource; and
the processing unit may be configured to determine a sidelink time-frequency resource and the like.

The foregoing is merely an example. The processing unit 2810 and the communication unit 2820 may further perform other functions. For more detailed descriptions, refer to related descriptions in the method embodiments shown in FIG. 9 to FIG. 27 or other method embodiments. Details are not described herein again.

FIG. 29 shows an apparatus 2900 according to an embodiment of this application. The apparatus shown in FIG. 29 may be an implementation of a hardware circuit of the apparatus shown in FIG. 28. The communication apparatus is applicable to the foregoing flowcharts, and performs the function of the terminal device or the network device in the foregoing method embodiments. For ease of description, FIG. 29 shows only main components of the communication apparatus.

The communication apparatus 2900 may be a terminal device, and can implement the function of the first terminal apparatus or the second terminal apparatus in the method provided in embodiments of this application. Alternatively, the communication apparatus 2900 may be an apparatus that can support the first terminal apparatus or the second terminal apparatus in implementing a corresponding function in the method provided in embodiments of this application. The communication apparatus 2900 may be a chip system. In this embodiment of this application, the chip system may include a chip, or may include a chip and another discrete component. For specific functions, refer to descriptions of the foregoing method embodiments.

The communication apparatus 2900 includes one or more processors 2910, configured to implement or support the communication apparatus 2900 in implementing the function of the first terminal apparatus or the second terminal apparatus in the method provided in embodiments of this application. For details, refer to detailed descriptions in the method examples. Details are not described herein again. The processor 2910 may also be referred to as a processing unit or a processing module, and may implement a specific control function. The processor 2910 may be a general-purpose processor, a dedicated processor, or the like. For example, the processor includes a central processing unit, an application processor, a modem processor, a graphics processing unit, an image signal processor, a digital signal processor, a video codec processor, a controller, a memory, and/or a neural-network processing unit. The central processing unit may be configured to control the communication apparatus 2900, execute a software program, and/or process data. Different processors may be independent devices, or may be integrated into one or more processors, for example, integrated into one or more application-specific integrated circuits. It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

Optionally, the communication apparatus 2900 includes one or more memories 2920, configured to store instructions 2940. The instructions may be run on the processor 2910, so that the communication apparatus 2900 performs the method described in the foregoing method embodiments. The memory 2920 is coupled to the processor 2910. The coupling in this embodiment of this application may be an indirect coupling or a communication connection between apparatuses, units, or modules in an electrical form, a mechanical form, or another form, and is used for information exchange between the apparatuses, the units, or the modules. The processor 2910 may operate in collaboration with the memory 2920. At least one of the at least one memory may be included in the processor. It should be noted that the memory 2920 is not mandatory, and therefore is shown by using a dashed line in FIG. 29.

Optionally, the memory 2920 may further store data. The processor and the memory may be separately disposed, or may be integrated together. In this embodiment of this application, the memory 2920 may be a non-volatile memory, such as a hard disk drive (hard disk drive, HDD) or a solid-state drive (solid-state drive, SSD), or may be a volatile memory (volatile memory), such as a random access memory (random access memory, RAM). Alternatively, the processor in this embodiment of this application may be a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or a storage medium of any other form well known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store program instructions and/or data.

Optionally, the communication apparatus 2900 may include instructions 2930 (which may also be referred to as code or a program sometimes), and the instructions 2930 may be run on the processor, so that the communication apparatus 2900 performs the method described in the foregoing embodiments. The processor 2910 may store data.

Optionally, the communication apparatus 2900 may further include a transceiver 2950 and an antenna 2960. The transceiver 2950 may be referred to as a transceiver unit, a transceiver module, a transceiver, a transceiver circuit, a transceiver, an input/output interface, or the like, and is configured to implement sending and receiving functions of the communication apparatus 2900 by using the antenna 2960.

The processor 2910 and the transceiver 2950 described in this application may be implemented on an integrated circuit (integrated circuit, IC), an analog IC, a radio frequency integrated circuit (radio frequency integrated circuit, RFIC), a mixed signal IC, an ASIC, a printed circuit board (printed circuit board, PCB), an electronic device, or the like. The communication apparatus described in this specification may be an independent device (for example, an independent integrated circuit or a mobile phone), or may be a part of a large device (for example, a module that may be embedded in another device). For details, refer to the foregoing descriptions about the terminal device and the network device. Details are not described herein again.

Optionally, the communication apparatus 2900 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 2900 may include more or fewer components, or some components are integrated, or some components are split. These components may be implemented by hardware, software, or a combination of software and hardware.

A person skilled in the art should understand that embodiments of this application may be provided as a method, a system, or a computer program product. Therefore, this application may be in a form of a hardware-only embodiment, a software-only embodiment, or an embodiment combining software and hardware aspects. In addition, this application may be in a form of a computer program product implemented on one or more computer-usable storage media (including but not limited to a magnetic disk memory, an optical memory, and the like) including computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art may make various modifications and variations to this application without departing from the scope of this application. Thus, this application is intended to cover these modifications and variations, provided that they fall within the scope of the claims of this application and their equivalent technologies.

The foregoing descriptions are merely specific implementations of this application. However, the protection scope of this application is not limited thereto. Any change or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   determining P resources from N resources comprised in a first resource window, wherein the first resource window is one of M resource windows, each of the M resource windows comprises N resources, resources corresponding to the M resource windows are unlicensed resources, M and N are positive integers, and P is a positive integer less than or equal to N; and
   sending a synchronization signal block through each of the P resources, wherein the synchronization signal block is used for sidelink synchronization.

2. The method according to claim 1, wherein the method further comprises:

listening, through listen before talk LBT, to a channel corresponding to the first resource window; and

the determining P resources from N resources comprised in a first resource window comprises:

determining the P resources from the N resources based on a listening result, wherein the listening result comprises busy or idle.

3. The method according to claim 2, wherein when the listening result is that the channel is idle, the P resources comprise a first resource, wherein the first resource is a resource with an earliest time domain position in the P resources, and the first resource is a 1st resource on which a channel is accessed (listen before talk succeeds) in the N resources.

4. The method according to claim 2, wherein when the listening result is that the channel is busy, the method further comprises:

determining a second resource window, wherein a time domain position of the second resource window is after a time domain position of the first resource window, and a resource corresponding to the second resource window is an unlicensed resource; and

sending the SSB through each of P resources in the second resource window.

5. The method according to claim 4, wherein the method further comprises:

obtaining a first parameter, wherein the first parameter comprises at least one of the following:

time domain position information of the first resource window, a value of M, a synchronization period, a time interval between any adjacent resource windows in the M resource windows, an offset of a resource window relative to direct frame number DFN #0, an offset of a resource window relative to system frame number SFN #0, or an offset of a resource window relative to a time domain start position of a synchronization period to which the resource window belongs; and

the determining a second resource window comprises:

determining the second resource window based on the first parameter.

6. The method according to claim 4 or 5, wherein the method further comprises:

sending indication information, wherein the indication information indicates that the second resource window is an additional resource window, the additional resource window comprises at least one resource window, and the second resource window belongs to the at least one resource window.

7. The method according to any one of claims 4 to 6, wherein the method further comprises:

obtaining a status of the additional resource window, wherein the status of the additional resource window comprises open or closed.

8. The method according to any one of claims 3 to 7, wherein the P resources are consecutive in time domain.

9. The method according to any one of claims 3 to 7, wherein the P resources further comprise a second resource and a third resource, a time domain position of the second resource is before a time domain position of the third resource, there is a time interval between a time domain end position of the second resource and a time domain start position of the third resource, and the second resource and the third resource are two resources that are adjacent in time domain in the P resources.

10. The method according to any one of claims 1 to 9, wherein there is a quasi co-location relationship between the P resources.

11. The method according to any one of claims 1 to 10, wherein a quantity of resources that have a quasi co-location relationship and that are comprised in the first resource window is greater than or equal to P and less than or equal to N.

12. The method according to any one of claims 1 to 11, wherein a quantity of resources that have a quasi co-location relationship and that are comprised in the second resource window is greater than or equal to P and less than or equal to N.

13. The method according to any one of claims 1 to 12, wherein the synchronization signal block is used to determine timing information and/or synchronization information.

14. A communication method, comprising:

receiving a synchronization signal block through each of P resources, wherein
the P resources are determined from N resources comprised in a first resource window, the first resource window is one of M resource windows, each of the M resource windows comprises N resources, frequency domain resources corresponding to the M resource windows are unlicensed resources, M and N are positive integers, P is a positive integer less than or equal to N, and a listening result for the first resource window is idle; or
the P resources are determined from N resources comprised in a second resource window, a time domain start position of the second resource window is after a time domain end position of the first resource window, a frequency domain resource corresponding to the second resource window is an unlicensed resource, and the second resource window is determined when a listening result for the first resource window is busy; and
determining timing information and/or synchronization information based on the synchronization signal block.

15. The method according to claim 14, wherein the P resources are consecutive in time domain.

16. The method according to claim 14, wherein the P resources further comprise a second resource and a third resource, a time domain position of the second resource is before a time domain position of the third resource, there is a time interval between a time domain end position of the second resource and a time domain start position of the third resource, and the second resource and the third resource are two resources that are adjacent in time domain in the P resources.

17. The method according to any one of claims 14 to 16, wherein there is a quasi co-location relationship between the P resources.

18. The method according to any one of claims 14 to 17, wherein a quantity of resources that have a quasi co-location relationship and that are comprised in the first resource window is greater than or equal to P and less than or equal to N, and/or a quantity of resources that have a quasi co-location relationship and that are comprised in the second resource window is greater than or equal to P and less than or equal to N.

19. The method according to any one of claims 14 to 18, wherein the P resources are determined from the N resources comprised in the second resource window, and the method further comprises:
receiving indication information, wherein the indication information indicates that the second resource window is an additional resource window.

20. A communication method, comprising:

determining a fourth resource, wherein the fourth resource is used to send a synchronization signal block, the synchronization signal block comprises a physical sidelink broadcast channel PSBCH, a primary synchronization signal PSS, and a secondary synchronization signal SSS, the fourth resource comprises a fifth resource and a sixth resource, and the synchronization signal block is used for sidelink synchronization;
sending the PSBCH on the fifth resource, wherein the fifth resource is discontinuous in frequency domain; and
sending the PSS and the SSS on the sixth resource, wherein the sixth resource is continuous in frequency domain.

21. The method according to claim 20, wherein the method further comprises:
determining the fifth resource and/or the sixth resource based on at least one of a quantity of frequency domain RBs of a channel on which the fourth resource is located, a subcarrier spacing, and a quantity of frequency domain RBs of the synchronization signal block.

22. The method according to claim 20 or 21, wherein the fourth resource belongs to a fifteenth resource, and the fifteenth resource is determined based on an absolute radio frequency channel number ARFCN, a resource set RB set index, or a channel index.

23. The method according to any one of claims 20 to 22, wherein the sixth resource is determined based on an ARFCN, and the ARFCN indicates a center frequency of the fourth resource, or the ARFCN indicates a center frequency of the sixth resource.

24. The method according to any one of claims 20 to 23, wherein

the fifth resource is determined based on a start physical resource block PRB and a first granularity; or
the fifth resource is determined based on a central PRB and the first granularity; or
the fifth resource is determined based on a center frequency and the first granularity, and the center frequency is indicated by using an ARFCN; or
the fifth resource is an interlace resource to which a frequency indicated by an ARFCN belongs, wherein the first granularity is a spacing between any two adjacent PRBs in frequency domain in the fifth resource.

25. A communication method, comprising:

sending a synchronization signal block on a seventh resource, wherein the synchronization signal block is used for sidelink synchronization; and
sending at least one of the following on an eighth resource: a physical sidelink shared channel PSSCH, a physical sidelink control channel PSCCH, or a channel state information reference signal CSI-RS, wherein
time division multiplexing TDM and/or frequency division multiplexing FDM are/is used for the seventh resource and the eighth resource, the seventh resource and the eighth resource are unlicensed resources, and time domain resources of the seventh resource and the eighth resource are within a same channel occupancy time COT range.

26. The method according to claim 25, wherein a position of a resource corresponding to the seventh resource in frequency domain is determined based on a raster and/or an offset.

27. The method according to claim 25 or 26, wherein the seventh resource is continuous in frequency domain.

28. A communication method, comprising:

determining a band, wherein a bandwidth of the band comprises Q channel access bandwidths, the Q channel access bandwidths do not overlap, and Q is a positive integer greater than or equal to 2;
performing channel access on S channel access bandwidths in the Q channel access bandwidths, wherein S is a positive integer less than or equal to Q; and
sending a synchronization signal block on a first channel access bandwidth, wherein the first channel access bandwidth belongs to a channel bandwidth on which access succeeds in the S channel access bandwidths.

29. The method according to claim 28, wherein indexes of the S channel access bandwidths are S smallest indexes in the Q channel access bandwidths.

30. The method according to claim 28 or 29, wherein the first channel access bandwidth is an access bandwidth with a smallest index in the channel access bandwidth on which access succeeds.

31. A communication method, comprising:

sending a synchronization signal block on a third channel in a first slot, wherein the synchronization signal block is used for sidelink synchronization, and the third channel is predefined or preconfigured; and
sending the synchronization signal block on a fourth channel in the first slot, wherein the fourth channel is a channel on which initial COT of a first terminal apparatus is located, and the first slot belongs to the initial COT of the first terminal apparatus.

32. The method according to claim 31, wherein the method further comprises:
sending the synchronization signal block on a fifth channel in the first slot, wherein the fifth channel is a channel on which initial COT of a second terminal apparatus is located, and the first slot belongs to the initial COT of the second terminal apparatus.

33. The method according to claim 32, wherein before the sending the synchronization signal block on a fifth channel in the first slot, the method further comprises:
receiving second indication information, wherein the second indication information indicates whether the second terminal apparatus shares the first slot, or the second indication information indicates whether the second terminal apparatus sends a synchronization signal block in the first slot.

34. The method according to any one of claims 31 to 33, wherein the method further comprises:

sending the synchronization signal block on each channel in a resource pool corresponding to the first slot.

35. The method according to any one of claims 31 to 34, wherein the first slot is a slot other than a 1st slot and a last slot in time domain within the COT.

36. A communication apparatus, comprising a processing unit and a transceiver unit, wherein the processing unit is configured to determine P resources from N resources comprised in a first resource window, wherein the first resource window is one of M resource windows, each of the M resource windows comprises N resources, resources corresponding to the M resource windows are unlicensed resources, M and N are positive integers, and P is a positive integer less than or equal to N; and
the transceiver unit sends a synchronization signal block through each of the P resources, wherein the synchronization signal block is used for sidelink synchronization.

37. The apparatus according to claim 36, wherein

the processing unit is configured to listen, through listen before talk LBT, to a channel corresponding to the first resource window; and
that the processing unit is configured to determine P resources from N resources comprised in a first resource window comprises:
the processing unit is configured to determine the P resources from the N resources based on a listening result, wherein the listening result comprises busy or idle.

38. The apparatus according to claim 37, wherein when the listening result is the channel is idle, the P resources comprise a first resource, wherein the first resource is a resource with an earliest time domain position in the P resources, and the first resource is a 1st resource on which a channel is accessed in the N resources.

39. The apparatus according to claim 37, wherein when the listening result is that the channel is busy, the processing unit is further configured to determine a second resource window, wherein a time domain position of the second resource window is after a time domain position of the first resource window, and a resource corresponding to the second resource window is an unlicensed resource; and
the transceiver unit is configured to send the SSB through each of P resources in the second resource window.

40. The apparatus according to claim 39, wherein
the processing unit is further configured to obtain a first parameter, wherein the first parameter comprises at least one of the following:

time domain position information of the first resource window, a value of M, a synchronization period, a time interval between any adjacent resource windows in the M resource windows, an offset of a resource window relative to direct frame number DFN #0, an offset of a resource window relative to system frame number SFN #0, or an offset of a resource window relative to a time domain start position of a synchronization period to which the resource window belongs; and
that the processing unit is configured to determine a second resource window comprises:
the processing unit is configured to determine the second resource window based on the first parameter.

41. The apparatus according to claim 39 or 40, wherein the transceiver unit is further configured to send indication information, wherein the indication information indicates that the second resource window is an additional resource window.

42. The apparatus according to any one of claims 39 to 41, wherein the processing unit is further configured to obtain a status of the additional resource window, wherein the status of the additional resource window comprises open or closed.

43. The apparatus according to any one of claims 38 to 42, wherein the P resources are consecutive in time domain.

44. The apparatus according to any one of claims 38 to 42, wherein the P resources further comprise a second resource and a third resource, a time domain position of the second resource is before a time domain position of the third resource, there is a time interval between a time domain end position of the second resource and a time domain start position of the third resource, and the second resource and the third resource are two resources that are adjacent in time domain in the P resources.

45. The apparatus according to any one of claims 36 to 44, wherein there is a quasi co-location relationship between the P resources.

46. The apparatus according to any one of claims 36 to 45, wherein a quantity of resources that have a quasi co-location relationship and that are comprised in the first resource window is greater than or equal to P and less than or equal to N.

47. The apparatus according to any one of claims 36 to 46, wherein a quantity of resources that have a quasi co-location relationship and that are comprised in the second resource window is greater than or equal to P and less than or equal to N.

48. The apparatus according to any one of claims 36 to 47, wherein the synchronization signal block is used to determine timing information and/or synchronization information.

49. A communication apparatus, comprising a processing unit and a transceiver unit, wherein the transceiver unit is configured to receive a synchronization signal block through each of P resources, wherein the P resources are determined from N resources comprised in a first resource window, the first resource window is one of M resource windows, each of the M resource windows comprises N resources, frequency domain resources corresponding to the M resource windows are unlicensed resources, M and N are positive integers, P is a positive integer less than or equal to N, and a listening result for the first resource window is idle; or

the P resources are determined from N resources comprised in a second resource window, a time domain start position of the second resource window is after a time domain end position of the first resource window, a frequency domain resource corresponding to the second resource window is an unlicensed resource, and the second resource window is determined when a listening result for the first resource window is busy; and the processing unit is configured to determine timing information and/or synchronization information based on the synchronization signal block.

50. The apparatus according to claim 49, wherein the P resources are consecutive in time domain.

51. The apparatus according to claim 49, wherein the P resources further comprise a second resource and a third resource, a time domain position of the second resource is before a time domain position of the third resource, there is a time interval between a time domain end position of the second resource and a time domain start position of the third resource, and the second resource and the third resource are two resources that are adjacent in time domain in the P resources.

52. The apparatus according to any one of claims 49 to 51, wherein there is a quasi co-location relationship between the P resources.

53. The apparatus according to any one of claims 49 to 52, wherein a quantity of resources that have a quasi co-location relationship and that are comprised in the first resource window is greater than or equal to P and less than or equal to N, and/or a quantity of resources that have a quasi co-location relationship and that are comprised in the second resource window is greater than or equal to P and less than or equal to N.

54. The apparatus according to any one of claims 49 to 53, wherein the P resources are determined from the N resources comprised in the second resource window, and the transceiver unit is further configured to receive indication information, wherein the indication information indicates that the second resource window is an additional resource window.

55. A communication apparatus, comprising a processing unit and a transceiver unit, wherein

the processing unit is configured to determine a fourth resource, wherein the fourth resource is used to send a synchronization signal block, the synchronization signal block comprises a physical sidelink broadcast channel PSBCH, a primary synchronization signal PSS, and a secondary synchronization signal SSS, the fourth resource comprises a fifth resource and a sixth resource, and the synchronization signal block is used for sidelink synchronization; the transceiver unit is configured to send the PSBCH on the fifth resource, wherein the fifth resource is discontinuous in frequency domain; and

the transceiver unit is configured to send the PSS and the SSS on the sixth resource, wherein the sixth resource is continuous in frequency domain.

56. The apparatus according to claim 55, wherein the processing unit is configured to determine the fifth resource and/or the sixth resource based on at least one of a quantity of frequency domain RBs of a channel on which the fourth resource is located, a subcarrier spacing, and a quantity of frequency domain RBs of the synchronization signal block.

57. The apparatus according to claim 55 or 56, wherein the fourth resource belongs to a fifteenth resource, and the fifteenth resource is determined based on an absolute radio frequency channel number ARFCN, a resource set RB set index, or a channel index.

58. The apparatus according to any one of claims 55 to 57, wherein the sixth resource is determined based on an ARFCN, and the ARFCN indicates a center frequency of the fourth resource, or the ARFCN indicates a center frequency of the sixth resource.

59. The apparatus according to any one of claims 55 to 58, wherein

the fifth resource is determined based on a start physical resource block PRB and a first granularity; or

the fifth resource is determined based on a central PRB and the first granularity; or

the fifth resource is determined based on a center frequency and the first granularity, and the center frequency is indicated by using an ARFCN; or

the fifth resource is an interlace resource to which a frequency indicated by an ARFCN belongs, wherein the first granularity is a spacing between any two adjacent PRBs in frequency domain in the fifth resource.

60. A communication apparatus, comprising a processing unit and a transceiver unit, wherein the transceiver unit is configured to send a synchronization signal block on a seventh resource, wherein the synchronization signal block is used for sidelink synchronization; and the transceiver unit is further configured to send at least one of the following on an eighth resource: a physical sidelink shared channel PSSCH, a physical sidelink control channel PSCCH, or a channel state information reference signal CSI-RS, wherein

time division multiplexing TDM and/or frequency division multiplexing FDM are/is used for the seventh resource and the eighth resource, the seventh resource and the eighth resource are unlicensed resources, and time domain resources of the seventh resource and the eighth resource are within a same channel occupancy time COT range.

61. The apparatus according to claim 60, wherein a position of a resource corresponding to the seventh resource in frequency domain is determined based on a raster and/or an offset.

62. The apparatus according to claim 60 or 61, wherein the seventh resource is continuous in frequency domain.

63. A communication apparatus, comprising a processing unit and a transceiver unit, wherein

the processing unit is configured to determine a band, wherein a bandwidth of the band comprises Q channel access bandwidths, the Q channel access bandwidths do not overlap, and Q is a positive integer greater than or equal to 2;

the processing unit is further configured to perform channel access on S channel access bandwidths in the Q channel access bandwidths, wherein S is a positive integer less than or equal to Q; and

the transceiver unit is configured to send a synchronization signal block on a first channel access bandwidth, wherein the first channel access bandwidth belongs to a channel bandwidth on which access succeeds in the S channel access bandwidths.

64. The apparatus according to claim 63, wherein indexes of the S channel access bandwidths are S smallest indexes in the Q channel access bandwidths.

65. The apparatus according to claim 63 or 64, wherein the first channel access bandwidth is an access bandwidth with a smallest index in the channel access bandwidth on which access succeeds.

66. A communication apparatus, comprising a processing unit and a transceiver unit, wherein

the transceiver unit is configured to send a synchronization signal block on a third channel in a first slot, wherein the synchronization signal block is used for sidelink synchronization, and the third channel is predefined or preconfigured; and

the transceiver unit is configured to send the synchronization signal block on a fourth channel in the first slot, wherein the fourth channel is a channel on which initial COT of a first terminal apparatus is located, and the first slot belongs to the initial COT of the first terminal apparatus.

67. The apparatus according to claim 66, wherein the transceiver unit is further configured to send the synchronization signal block on a fifth channel in the first slot, wherein the fifth channel is a channel on which initial COT of a second terminal apparatus is located, and the first slot belongs to the initial COT of the second terminal apparatus.

68. The apparatus according to claim 67, wherein before the transceiver unit is configured to send the synchronization signal block on the fifth channel in the first slot, the transceiver unit is further configured to receive second indication information, wherein the second indication information indicates whether the second terminal apparatus shares the first slot, or the second indication information indicates whether the second terminal apparatus sends a synchronization signal block in the first slot.

69. The apparatus according to any one of claims 66 to 68, wherein
the transceiver unit is further configured to send the synchronization signal block on each channel in a resource pool corresponding to the first slot.

70. The apparatus according to any one of claims 66 to 69, wherein the first slot is a slot other than a $1^{st}$ slot and a last slot in time domain within the COT.

71. A communication system, comprising the communication apparatus according to any one of claims 36 to 70.

72. A communication apparatus, comprising:
a processor, configured to execute computer instructions stored in a memory, so that the apparatus performs the method according to any one of claims 1 to 35.

73. The apparatus according to claim 72, wherein the apparatus further comprises the memory.

74. The apparatus according to claim 72 or 73, wherein the apparatus further comprises a communication interface, and the communication interface is coupled to the processor; and
the communication interface is configured to input and/or output information.

75. The apparatus according to any one of claims 72 to 74, wherein the apparatus is a chip.

76. A computer-readable storage medium, wherein the computer-readable storage medium stores a computer program or instructions, and when the computer program or the instructions are run on a communication apparatus, the communication apparatus is enabled to perform the method according to any one of claims 1 to 19 or claims 25 to 30.

77. A computer-readable storage medium, wherein the computer-readable storage medium stores a computer program or instructions, and when the computer program or the instructions are run on a communication apparatus, the communication apparatus is enabled to perform the method according to any one of claims 20 to 24 or claims 31 to 35.

FIG. 1

FIG. 2

FIG. 3

Time interval

Transmit data

FIG. 4

RB #1

RB #11

RB #21

RB #31

RB #41

FIG. 5

4 RBs

9 REs

12 RBs | 127 REs | P | S | 20 RBs

8 REs

4 RBs

Resource for carrying a PBSCH

FIG. 6

FIG. 7

FIG. 8

FIG. 9

Resource set                     Resource set

Resource subset    Resource subset

Resource
window

Synchronization period

FIG. 10

T      T

Resource
window

(a)

T1      T2

Resource
window

(b)

T1      T2

Resource
window

(c)

FIG. 11

(a)

(b)

FIG. 12

FIG. 13

FIG. 14

FIG. 15

FIG. 16

FIG. 17

(a)

(b)

FIG. 18

(a)

(b)

FIG. 19

FIG. 20

FIG. 21

FIG. 22

FIG. 23

P   S

Resource
#C

■■■   Resource #B

FIG. 24

┌─────────────┐                                    ┌─────────────┐
│ First terminal│                                  │   Second    │
│  apparatus  │                                     │  terminal   │
│             │                                     │  apparatus  │
└─────────────┘                                    └─────────────┘

S2501: Send an SSB on resource #D

S2502: Send at least one of the following on resource #E: a
PSSCH, a PSCCH, or a CSI-RS, where TDM and/or FDM are/is
used for resource #D and resource #E, resource #D and resource
#E are unlicensed frequency domain resources, and time domain
resources of resource #D and resource #E are within a same
channel occupancy time COT range

┌─────────────────────────────────────┐
│ S2503: Obtain timing information     │
│ and/or synchronization information   │
│ based on the SSB                     │
└─────────────────────────────────────┘

FIG. 25

| AGC | DMRS | PSSCH | PSSCH | PSSCH | PSSCH | DMRS | PSSCH | PSSCH | PSSCH | PSSCH | DMRS | PSSCH | Gap symbol |

PSCCH

0  1  2  3  4  5  6  7  8  9  10  11  12  13

(a)

PSSCH/PSCCH

SSB

(b)

FIG. 26

First terminal apparatus

Second terminal apparatus

S2701: Determine a band, where a bandwidth of the band includes Q channel access bandwidths, the Q channel access bandwidths do not overlap, and Q is a positive integer greater than or equal to 2

S2702: Perform channel access on S channel access bandwidths in the Q channel access bandwidths, where S is a positive integer less than or equal to Q

S2703: Send an SSB on a first channel access bandwidth, where the first channel access bandwidth belongs to a channel bandwidth on which access succeeds in the S channel access bandwidths

S2704: Obtain timing information and/or synchronization information based on the SSB

FIG. 27

Apparatus 2800

Processing unit 2810

Communication unit 2820

FIG. 28

2900

2910

Processor

Instruction

2930

2940

2920

Memory

Instruction

Transceiver

Antenna

2950

2960

FIG. 29

First
terminal
apparatus

Second
terminal
apparatus

S3001: Determine, based on an ARFCN or
indication information, an RB set in which an S-
SSB is located

S3002: Determine frequency domain resource
#K based on at least one of a start RB, a central
RB, or an index of an interlace resource

S3003: Send the S-SSB on frequency
domain resource #K, where frequency
domain resource #K is discontinuous

S3004: Obtain timing information
and/or synchronization information
based on the S-SSB

FIG. 30

First terminal apparatus

Second terminal apparatus

S3101: Determine resource #C based on an ARFCN, and determine resource #B based on at least one of a start RB, a central RB, an index of an interlace resource, or a center frequency of an S-SSB

S3102: Send a PSBCH on resource #B, where resource #B is discontinuous in frequency domain; and send a PSS and an SSS on resource #C, where resource #C is continuous in frequency domain

S3103: Obtain timing information and/or synchronization information based on the S-SSB

FIG. 31

First terminal apparatus

Second terminal apparatus

S3201: Send an S-SSB on a third channel

S3202: Send the S-SSB on a fourth channel

S3203: Obtain timing information and/or synchronization information based on the S-SSB

FIG. 32

## INTERNATIONAL SEARCH REPORT

| International application No. |
|---|
| **PCT/CN2023/089356** |

**A. CLASSIFICATION OF SUBJECT MATTER**

H04W56/00(2009.01)i

According to International Patent Classification (IPC) or to both national classification and IPC

**B. FIELDS SEARCHED**

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, ENTXT, ENTXTC, CNABS, DWPI, IEEE, 3GPP: 非授权, 非许可, 侧链路, 侧行, 直连, 副链路, 同步, 信号块, 信道, 占用, 资源, 窗, 时隙, 带宽, 先听后说, 时域, 频域, 连续, 主同步, 辅同步, 共享, grant, side, resource, block, occupy, synchroni +, channel, window, slot, bandwidth, time, domain, frequency, LBT, PSS, SSS, share, COT

**C. DOCUMENTS CONSIDERED TO BE RELEVANT**

| Category* | Citation of document, with indication, where appropriate, of the relevant passages | Relevant to claim No. |
|---|---|---|
| X | US 2021250883 A1 (GUANGDONG OPPO MOBILE TELECOMMUNICATIONS CORP., LTD.) 12 August 2021 (2021-08-12)<br> description paragraphs [0027]-[0047], figure 2 | 1-19, 36-54, 71-76 |
| A | US 2021250883 A1 (GUANGDONG OPPO MOBILE TELECOMMUNICATIONS CORP., LTD.) 12 August 2021 (2021-08-12)<br> description paragraphs [0027]-[0047], figure 2 | 20-35, 55-70, 77 |
| A | WO 2021248300 A1 (QUALCOMM INCORPORATED) 16 December 2021 (2021-12-16)<br> entire document | 1-77 |
| A | CN 111989975 A (GUANGDONG OPPO MOBILE TELECOMMUNICATIONS CORP., LTD.) 24 November 2020 (2020-11-24)<br> entire document | 1-77 |
| A | CN 111181663 A (POTEVIO INFORMATION TECHNOLOGY CO., LTD.) 19 May 2020 (2020-05-19)<br> entire document | 1-77 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 July 2023** | **27 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/089356** |

| C. | DOCUMENTS CONSIDERED TO BE RELEVANT | |
|---|---|---|
| Category* | Citation of document, with indication, where appropriate, of the relevant passages | Relevant to claim No. |
| A | CN 110971322 A (VIVO COMMUNICATION TECHNOLOGY CO., LTD.) 07 April 2020 (2020-04-07)<br>entire document | 1-77 |
| A | CN 111801980 A (HUAWEI TECHNOLOGIES CO., LTD.) 20 October 2020 (2020-10-20)<br>entire document | 1-77 |

Form PCT/ISA/210 (second sheet) (July 2022)

EP 4 510 720 A1

## INTERNATIONAL SEARCH REPORT

International application No.

**PCT/CN2023/089356**

| Box No. III | Observations where unity of invention is lacking (Continuation of item 3 of first sheet) |
| --- | --- |

This International Searching Authority found multiple inventions in this international application, as follows:

1. (Claims 1, 14, 36 and 49, claim 71, when comprising claims 36-54, claim 72, when executing claims 1-19, and claim 76, when executing claims 1-19). 2. (Claims 20 and 55, claim 71, when comprising claims 55-59, claim 72, when executing claims 20-24, and claim 77, when executing claims 20-24). 3. (Claims 25 and 60, claim 71, when comprising claims 60-62, claim 72, when executing claims 25-27, and claim 76, when executing claims 25-27). 4. (Claims 28 and 63, claim 71, when comprising claims 63-65, claim 72, when executing claims 28-30, and claim 76, when executing claims 28-30). 5. (Claims 31 and 66, claim 71, when comprising claims 66-70, claim 72, when executing claims 31-35, and claim 77, when executing claims 31-35). The same or corresponding technical features of the five inventions are: sending a synchronization signal block, or the synchronization signal block being used for sidelink synchronization. However, the above-mentioned same or corresponding technical features are common general knowledge in the art during an access process. Therefore, the same or corresponding technical features of the above-mentioned five inventions do not contribute to the prior art, and cannot be considered to be specific technical features in the sense of PCT Rule 13.2, so that the inventions do not satisfy the requirement of unity of invention and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**   ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

INTERNATIONAL SEARCH REPORT
Information on patent family members

International application No.

**PCT/CN2023/089356**

| Patent document cited in search report | | | Publication date (day/month/year) | Patent family member(s) | | | Publication date (day/month/year) |
|---|---|---|---|---|---|---|---|
| US | 2021250883 | A1 | 12 August 2021 | JP | 2022510775 | A | 28 January 2022 |
| | | | | EP | 3873160 | A1 | 01 September 2021 |
| | | | | WO | 2020087524 | A1 | 07 May 2020 |
| | | | | CN | 112956271 | A | 11 June 2021 |
| | | | | CN | 113726496 | A | 30 November 2021 |
| WO | 2021248300 | A1 | 16 December 2021 | BR | 112022024317 | A2 | 27 December 2022 |
| | | | | EP | 4162738 | A1 | 12 April 2023 |
| | | | | KR | 20230021659 | A | 14 February 2023 |
| | | | | CN | 115699916 | A | 03 February 2023 |
| CN | 111989975 | A | 24 November 2020 | WO | 2019205024 | A1 | 31 October 2019 |
| | | | | AU | 2018420587 | A1 | 03 December 2020 |
| | | | | KR | 20210003171 | A | 11 January 2021 |
| | | | | US | 2021045155 | A1 | 11 February 2021 |
| | | | | IN | 202027049863 | A | 12 February 2021 |
| | | | | EP | 3780859 | A1 | 17 February 2021 |
| CN | 111181663 | A | 19 May 2020 | None | | | |
| CN | 110971322 | A | 07 April 2020 | None | | | |
| CN | 111801980 | A | 20 October 2020 | WO | 2019169538 | A1 | 12 September 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210475967X

- CN 202310182663